# EUROPÄISCHE PATENTSCHRIFT

(11) **EP 3 112 441 B1**
(45) Veröffentlichungstag und Bekanntmachung des Hinweises auf die Patenterteilung: **08.04.2020**
(21) Anmeldenummer: 16001302.5
(22) Anmeldetag: 09.06.2016
(51) Int. Cl.: C09K 19/58, C09K 19/54, C09K 19/04, C09K 19/20, C09K 19/30, C09K 19/12, C09K 19/34

(54) **FLÜSSIGKRISTALLINES MEDIUM UND FLÜSSIGKRISTALLANZEIGE**
LIQUID CRYSTAL MEDIUM AND LIQUID CRYSTAL DISPLAY
MILIEU A CRISTAUX LIQUIDES ET AFFICHAGE A CRISTAUX LIQUIDES

(30) Priorität: 03.07.2015 DE 102015008508; 02.03.2016 DE 102016002502
(43) Veröffentlichungstag der Anmeldung: 04.01.2017
(73) Patentinhaber: Merck Patent GmbH, 64293 Darmstadt (DE)
(72) Erfinder: Junge, Michael, 64319 Pfungstadt (DE); Reiffenrath, Volker, 64380 Rossdorf (DE); Montenegro, Elvira, 69469 Weinheim (DE); Wittek, Michael, 64390 Erzhausen (DE); Czanta, Markus, 64287 Darmstadt (DE)

(56) Entgegenhaltungen:
- WO-A1-2012/079710
- WO-A1-2014/094999
- DE-A1-102011 108 276
- DE-A1-102011 108 708
- DE-A1-102012 000 632
- DE-A1-102013 021 279
- US-A1- 2013 207 038

## Beschreibung

### Gebiet der Erfindung

Die vorliegende Erfindung betrifft flüssigkristalline Medien gemäß Anspruch 1 und diese Medien enthaltende Flüssigkristallanzeigen, speziell Anzeigen, die durch eine Aktivmatrix adressiert werden und insbesondere Anzeigen des Typs Twisted Nematic (TN), In Plane Switching (IPS) oder Fringe Field Switching (FFS).

### Stand der Technik und zu lösendes Problem

Flüssigkristallanzeigen (Liquid Crystal Displays - LCDs) werden in vielen Bereichen genutzt, um Informationen anzuzeigen. LCDs werden sowohl für Direktsichtanzeigen als auch für Anzeigen des Projektionstyps verwendet. Als elektrooptische Modi werden beispielsweise Twisted Nematic (TN), Super Twisted Nematic (STN), Optically Compensated Bend (OCB) und Electrically Controlled Birefringence (ECB) zusammen mit ihren verschiedenen Modifikationen sowie andere verwendet. Alle diese Modi nutzen ein elektrisches Feld, das im Wesentlichen rechtwinklig zu den Substraten beziehungsweise zur Flüssigkristallschicht verläuft. Neben diesen Modi gibt es auch elektrooptische Modi, die ein elektrisches Feld nutzen, das im Wesentlichen parallel zu den Substraten beziehungsweise der Flüssigkristallschicht verläuft, wie etwa der In-Plane Switching (IPS) Modus (wie z.B. in DE 40 00 451 und EP 0 588 568 offenbart) und im Fringe Field Switching (FFS) Modus, in dem ein starkes sogenanntes "fringe field" vorliegt, also ein starkes elektrisches Feld nahe am Rand der Elektroden und in der gesamten Zelle ein elektrisches Feld, welches sowohl eine starke vertikale Komponente als auch eine starke horizontale Komponente aufweist. Vor allem diese beiden letzteren elektrooptischen Modi werden für LCDs in modernen Tischmonitoren verwendet und sind für die Nutzung in Anzeigen für Fernseher und Multimedia-Anwendungen vorgesehen. Die Flüssigkristalle gemäß der vorliegenden Erfindung werden vorzugsweise in Anzeigen dieser Art verwendet. Generell werden in FFS-Displays dielektrisch positive, flüssigkristalline Medien mit eher kleineren Werten der dielektrischen Anisotropie verwendet, aber auch bei IPS-Displays werden teilweise kleineren Werten der dielektrischen Anisotropie verwendet, aber auch bei IPS-Displays werden teilweise flüssigkristalline Medien mit einer dielektrischen Anisotropie von nur ca. 3 oder sogar darunter verwendet.

Für diese Anzeigen sind neue flüssigkristalline Medien mit verbesserten Eigenschaften erforderlich. Insbesondere müssen die Ansprechzeiten für viele Arten von Anwendungen verbessert werden. Es sind daher flüssigkristalline Medien mit geringeren Viskositäten (η), speziell mit geringeren Rotationsviskositäten (γ₁) erforderlich. Die Rotationsviskosität sollte insbesondere für Monitoranwendungen 80 mPa·s oder weniger, vorzugsweise 60 mPa·s oder weniger und speziell 55 mPa·s oder weniger betragen. Neben diesem Parameter müssen die Medien über einen Bereich der nematischen Phase mit geeigneter Breite und Lage, sowie eine geeignete Doppelbrechung (Δn) verfügen. Zudem sollte die dielektrische Anisotropie (Δε) hoch genug sein, um eine einigermaßen niedrige Betriebsspannung zu ermöglichen. Vorzugsweise sollte Δε höher als 2 und stärker bevorzugt höher als 3, vorzugsweise jedoch nicht höher als 20 und insbesondere nicht höher als 17 liegen, da dies einem zumindest einigermaßen hohen spezifischen Widerstand entgegenstehen würde.

Für Anwendungen als Displays für Notebooks oder andere mobile Anwendungen sollte die Rotationsviskosität bevorzugt 120 mPa·s oder weniger und besonders bevorzugt 100 mPa·s oder weniger betragen. Hier sollte die dielektrische Anisotropie (Δε) vorzugsweise höher als 8 und besonders bevorzugt höher als 12 sein.

Vorzugsweise werden die Anzeigen gemäß der vorliegenden Erfindung durch eine Aktivmatrix (active matrix LCDs, kurz AMDs), bevorzugt durch eine Matrix aus Dünnschichttransistoren (TFTs), adressiert. Die erfindungsgemäßen Flüssigkristalle können jedoch in vorteilhafter Weise auch in Anzeigen mit anderen bekannten Adressierungsmitteln verwendet werden.

Es gibt zahlreiche unterschiedliche Anzeigemodi, die Verbundsysteme aus niedrigmolekularen Flüssigkristallmaterialien zusammen mit Polymermaterialien verwenden. Dies sind z.B. PDLC- (polymer dispersed liquid crystal), NCAP- (nematic curvilinearily aligned phase) und PN-Systeme (polymer network), wie beispielsweise in WO 91/05 029 offenbart, oder ASM-Systeme (axially symmetric microdomain) und andere. Im Gegensatz hierzu verwenden die gemäß der vorliegenden Erfindung speziell bevorzugten Modi das Flüssigkristallmedium als solches, auf Oberflächen ausgerichtet. Diese Oberflächen werden typischerweise vorbehandelt, um eine uniforme Orientierung des Flüssigkristallmaterials zu erzielen. Die Anzeigemodi gemäß der vorliegenden Erfindung verwenden vorzugsweise ein elektrisches Feld, das im Wesentlichen parallel zur Verbundschicht verläuft.

Flüssigkristallzusammensetzungen, die sich für LCDs ganz allgemein und speziell für IPS-Anzeigen eignen, sind z.B. aus JP 07-181 439 (A), EP 0 667 555, EP 0 673 986, DE 195 09 410, DE 195 28 106, DE 195 28 107, WO 96/23 851 und WO 96/28 521 bekannt. Diese Zusammensetzungen sind jedoch mit gravierenden Nachteilen behaftet. Die meisten von ihnen führen, neben anderen Mängeln, zu unvorteilhaft langen Ansprechzeiten, weisen zu geringe Werte für den spezifischen Widerstand auf und/oder erfordern Betriebsspannungen, die zu hoch sind. Außerdem besteht der Bedarf das Tieftemperaturverhalten der LCDs zu verbessern. Hier sind sowohl eine Verbesserung der Betriebseigenschaften, wie auch der Lagerfähigkeit und, insbesondere, der Stabilität gegenüber sichtbarem Licht und UV-Strahlung, aber auch gegen Hitze und insbesondere gegen eine Kombination aus Hitze und Licht und/oder UV-Strahlung nötig.

Dieses betrifft nicht nur den gewöhnlichen Lebenszyklus der Anzeigen, sondern auch einzelne Schritte in der Produktion der Anzeigen bei denen diese verglichen mit dem Normalbetrieb teilweise extremen Belastungen ausgesetzt werden. So wird beispielsweise häufig bei der Herstellung der Verklebung des Rahmens ein Prozess eingesetzt, der sehr hohe thermische Belastungen der Anzeigen, die bereits den Flüssigkristall enthaltenden, bewirkt. Damit der Flüssigkristall diese starke thermische Belastung möglichst unbeschadet übersteht, ist es vorteilhaft, der Flüssigkristallformulierung entsprechend einen oder mehrere thermische Stabilisatoren zuzusetzen. Im folgenden alltäglichen Betrieb der Anzeigen treten dann ggf. Belastungen durch das Licht der Hintergrundbeleuchtung und durch das Umgebungslicht, typischerweise Tageslicht, sowie Temperaturbelastungen aus der Umgebung, als wichtige Belastungsfaktoren auf. Dieses bedeutet, dass in der Praxis insbesondere der Kombination von verschiedenen Belastungsgrößen eine besondere Bedeutung zukommen kann.

Eine solche Kombination von verschiedenen Belastungen kann zeitlich sowohl in sequentieller Abfolge als auch zeitlich parallel erfolgen. So können z.B. Anzeigen, die als elektronische Werbetafeln verwendet werden, beim Betrieb wie im Ruhezustand, je nach Aufstellungsort gleichzeitig einer starken Aufheizung und Sonneneinstrahlung ausgesetzt sein.

Die Verbindung 3,5-Di-*tert*.-butyl-4-hydroxybenzosäurehexadecylester (auch bekannt als "Cyasorb UV 2908"), der folgenden Formel 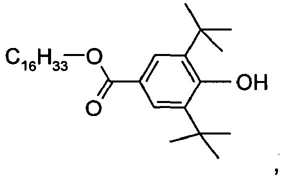 und 2,4-Di-*tert*.-butylphenyl-3,5-di-*tert*.-butyl-4-hydroxybenzoesäureester (auch bekannt als "Tinuvin® 120 UVA-3"), der folgenden Formel 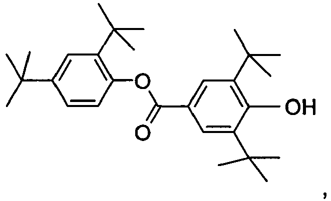 werden in Jan Pospisil: "Polymer Degradation and Stability" 40, (1993), Seite 217 und folgende zur Verbesserung der Photostabilität von Phenolen beschrieben.

Die Verbindung der Formel 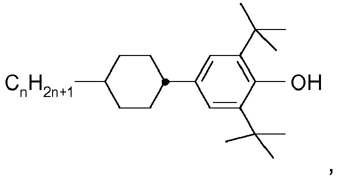 die einen deutlich stärker ausgeprägten mesogenen Charakter aufweist als die oben beschriebenen Verbindungen des Standes der Technik, wird in DE 19539141 zur Stabilisierung von nematischen Flüssigkristallmischungen vorgeschlagen. Diese Verbindung weist gegenüber dem damaligen Stand der Technik einen verringerten negativen Einfluss auf die Eigenschaften des Materials auf. Allerdings ist selbst dieser, bei den, nun deutlich gestiegenen Anforderungen an die Qualität und Langlebigkeit der Produkte, nicht mehr akzeptabel und muss weiter verringert werden.

Verschiedene Flüssigkristalline Medien für diverse Anwendungen werden z.B. in WO 2014/094999 A1, DE 10 2011 108276 A1,
DE 10 29012 000632 A1, DE 10 2011 108708 A1 und
WO 2012/079710 A1, sowie auch in US 2013/207038 A1 und
DE 10 2013 021279 A1 beschrieben. Dabei werden z. T. auch mögliche Stabilisatoren erwähnt.

Viele Flüssigkristallmedien, besonders solche mit großen Polaritäten, bzw. hoher dielektrischer Anisotropie, erfüllen nicht die für praktische Anwendungen erforderlichen hohen Stabilitätsanforderungen.

Es besteht daher ein erheblicher Bedarf an flüssigkristallinen Medien mit geeigneten Eigenschaften für praktische Anwendungen, wie einem breiten nematischen Phasenbereich, geeigneter optischer Anisotropie Δn entsprechend dem verwendeten Anzeigetyp, einem hohen Δε und speziell geringen Viskositäten für besonders kurze Schaltzeiten.

### Vorliegende Erfindung

Überraschenderweise wurde nun gefunden, dass flüssigkristalline Medien mit einem geeignet hohen Δε, einem geeigneten Phasenbereich und geeignetem Δn verwirklicht werden können, welche die Nachteile der Materialien des Standes der Technik nicht oder zumindest nur in erheblich geringerem Maße aufweisen.

Hier wurde überraschend gefunden, dass die Verbindungen der Formel I, wie im Folgenden angegeben, zu einer erheblichen, in den meisten Fällen ausreichenden, Stabilisierung von Flüssigkristallmischungen führen und insbesondere in Kombination mit anderen Stabilisatoren, insbesondere mit *ortho*-(*tert*.-butyl)-Phenolderivaten oder di-*ortho-*(*tert*.-butyl)-Phenolderivaten, also Verbindungen, die ein Strukturelement der Formel 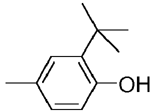 beziehungsweise 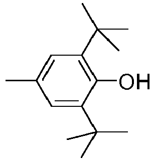 enthalten, und/oder Verbindungen, die eine Strukturelement der Formel 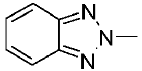 enthalten, wobei diese Strukturelemente optional weitere Substituenten tragen können, bevorzugt Alkyl oder Halogen. Derartige Verbindungen, z.B. Tinuvin®-P, sind Triplett-Quencher und haben entsprechend eine fotostabilisierende Wirkung.

Die Erfindung betrifft ein flüssigkristallines Medium gemäß Anspruch 1 mit einer nematischen Phase und einer positiven dielektrischen Anisotropie, welches
a) eine oder mehrere Verbindungen der Formel I, bevorzugt in einer Konzentration im Bereich von 1 ppm bis 25.000 ppm, 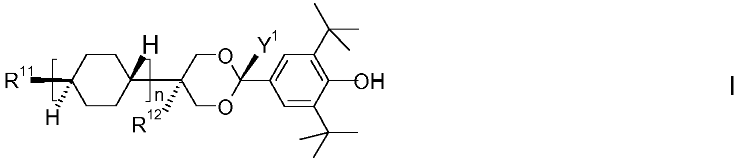 worin
   - n: 0 oder 1,
   R¹¹ H, F, Cl, eine geradkettige oder verzweigte Alkylkette mit 1-20 C-Atomen, in der eine -CH₂- -Gruppe oder mehrere -CH₂- -Gruppen durch -O- -C(=O)- oder 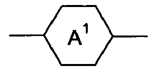 ersetzt sein können, jedoch nicht zwei benachbarte -CH₂- -Gruppen durch -O- ersetzt sein können, einen Kohlenwasserstoffrest, der eine Cycloalkandiyl-, bevorzugt eine Cyclohexandiyl-, oder eine Alkylcycloalkandiyleinheit enthält, und, in dem eine -CH₂- -Gruppe oder mehrere -CH₂- -Gruppen durch -O- oder -C(=O)- ersetzt sein können, jedoch nicht zwei benachbarte -CH₂- -Gruppen durch -O- ersetzt sein können,
   R¹² H, F, Cl, CN, CF₃, OCF₃ oder eine geradkettige oder verzweigte Alkylkette mit 1-20 C-Atomen, in der eine -CH₂- -Gruppe oder mehrere -CH₂- -Gruppen durch -O- oder -C(=O)- ersetzt sein können, jedoch nicht zwei benachbarte -CH₂- -Gruppen durch -O- ersetzt sein können, bevorzugt H, F, Cl, oder eine geradkettige oder verzweigte Alkylkette mit 1-20 C-Atomen, in der eine -CH₂- -Gruppe oder mehrere -CH₂- -Gruppen durch -O- oder -C(=O)- ersetzt sein können, besonders bevorzugt H oder CH₃,
   Y¹ H, F, Cl, CN, CF₃, OCF₃ oder eine geradkettige oder verzweigte Alkylkette mit 1-20 C-Atomen, in der eine -CH₂- -Gruppe oder mehrere -CH₂- -Gruppen durch -O- oder -C(=O)- ersetzt sein können, jedoch nicht zwei benachbarte -CH₂- -Gruppen durch -O- ersetzt sein können, bevorzugt H oder CH₃, und 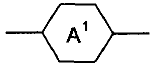 bei jedem Erscheinen unabhängig voneinander 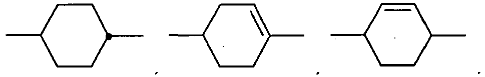 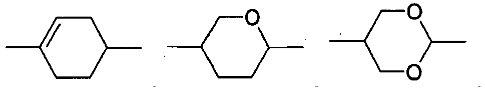 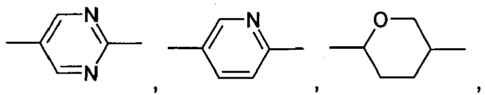 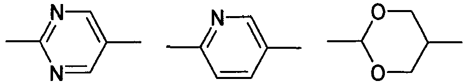 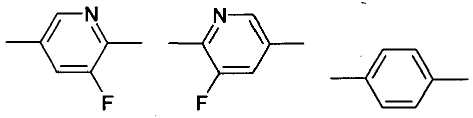 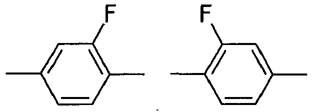 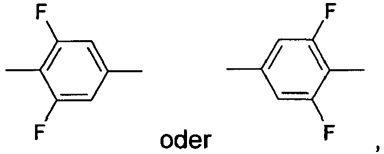 wobei bei Cyclohexandiyl und bei den Cyclohexendiyleinheiten auch einer oder mehrere, bevorzugt axiale, H-Atome unabhängig voneinander durch F, Cl oder CN, bevorzugt durch F oder CN, besonders bevorzugt durch F, ersetzt sein können,
   bedeutet, und
b) eine oder mehrere Verbindungen ausgewählt aus der Gruppe der Verbindungen der Formeln II-2h-1 und II-2k-1, und
c) eine oder mehrere Verbindungen der Formel IV-3,
enthält.

In einer bevorzugten Ausführungsform der vorliegenden Erfindung enthalten die erfindungsgemäßen Medien zusätzlich eine oder mehrere Verbindungen ausgewählt aus der Gruppe der Verbindungen der Formeln II und III 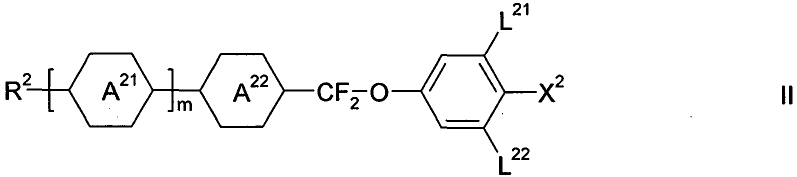 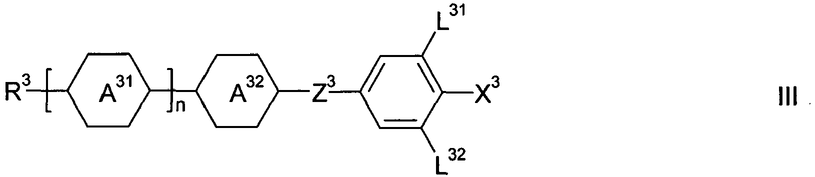 worin
- R² und R³: unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugsweise R² und R³ Alkyl oder Alkenyl, 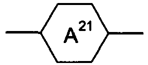 bis 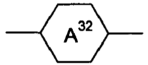 bei jedem Erscheinen unabhängig voneinander 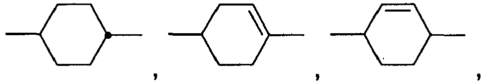 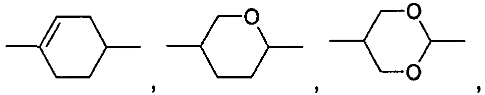 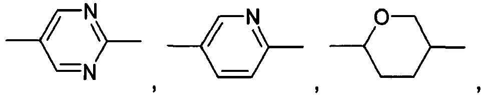 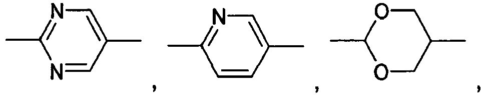 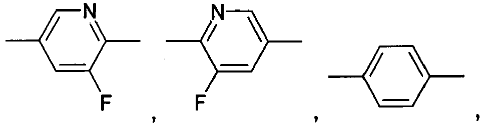 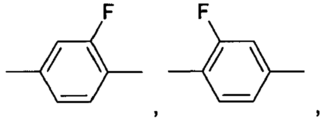 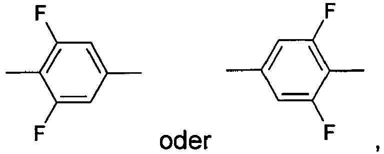 bevorzugt 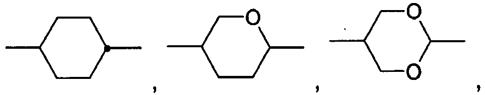 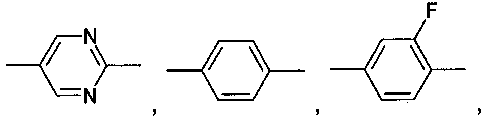 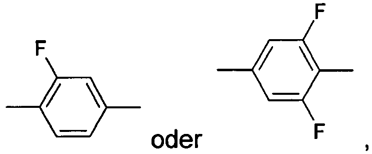
- L²¹, L²², L³¹ und L³²: unabhängig voneinander H oder F, vorzugsweise
- L²¹ und/oder L³¹: F,
- X² und X³: unabhängig voneinander Halogen, halogeniertes Alkyl oder Alkoxy mit 1 bis 3 C-Atomen oder halogeniertes Alkenyl oder Alkenyloxy mit 2 oder 3 C-Atomen, vorzugsweise F, Cl, -OCF₃, -CF₃ oder -O-CH=CF₂, bevorzugt F, -OCF₃, oder -O-CH=CF₂,
- Z³: -CH₂CH₂-, -CF₂CF₂-, -COO-, *trans-* -CH=CH-, *trans-*-CF=CF-, -CH₂O- oder eine Einfachbindung, vorzugsweise -CH₂CH₂-, -COO-, *trans-* -CH=CH- oder eine Einfachbindung und ganz bevorzugt -COO-, *trans-*-CH=CH- oder eine Einfachbindung und
- m und n: unabhängig voneinander 0, 1, 2 oder 3,
- m: bevorzugt 1, 2 oder 3 und
- n: bevorzugt 0, 1 oder 2 und besonders bevorzugt 1 oder 2,
bedeuten,
und/oder
eine oder mehrere Verbindungen der Formel IV 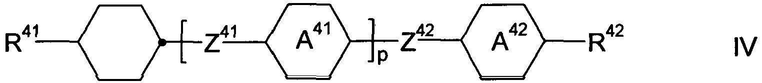 worin
- R⁴¹ und R⁴²: unabhängig voneinander die oben unter Formel II für R² angegebene Bedeutung besitzen, vorzugsweise R⁴¹ Alkyl und R⁴² Alkyl oder Alkoxy oder R⁴¹ Alkenyl und R⁴² Alkyl, 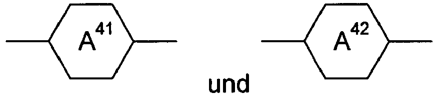 unabhängig voneinander und bei zweifachem Auftreten von 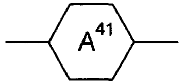 auch diese unabhängig voneinander 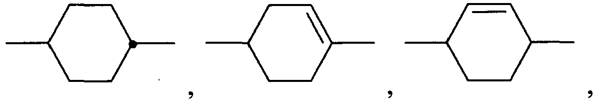 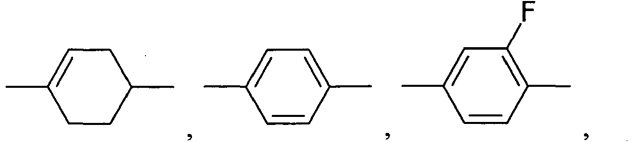 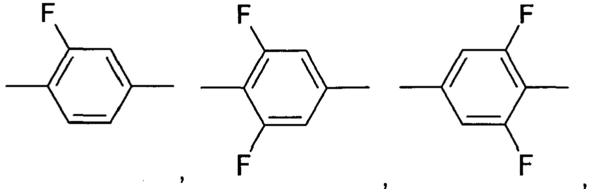 oder 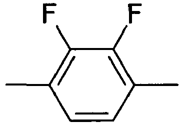 vorzugsweise eines oder mehrere von 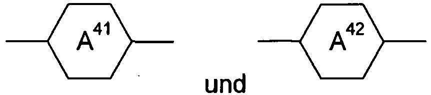 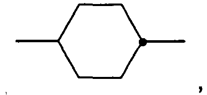
- Z⁴¹ und Z⁴²: unabhängig voneinander und bei zweifachem Auftreten von Z⁴¹ auch diese unabhängig voneinander -CH₂CH₂-, -COO-, *trans-* -CH=CH-, *trans-* -CF=CF-, -CH₂O-, -CF₂O-, -C≡C- oder eine Einfachbindung, vorzugsweise eines oder mehrere von ihnen eine Einfachbindung und
- p: 0, 1 oder 2, vorzugsweise 0 oder 1.
bedeuten.

In der vorliegenden Anmeldung umfassen die Elemente alle ihre jeweiligen Isotope. Insbesondere können in den Verbindungen ein oder mehrere H durch D ersetzt sein und dieses ist in einigen Ausführungsformen auch besonders bevorzugt. Ein entsprechend hoher Deuterierungsgrad der entsprechenden Verbindungen ermöglicht z.B. eine Detektion und Wiedererkennung der Verbindungen. Dieses ist insbesondere bei den Verbindungen der Formel I in einigen Fällen sehr hilfreich.

In der vorliegenden Anmeldung bedeutet
- Alkyl: besonders bevorzugt geradkettiges Alkyl, insbesondere CH₃-, C2H5-, *n*-C₃H₇, *n*-C₄H₉- oder *n*-C₅H₁₁-, und
- Alkenyl: besonders bevorzugt CH₂=CH-, *E*-CH₃-CH=CH-, CH₂=CH-CH₂-CH₂-, *E*-CH₃-CH=CH-CH₂-CH₂- oder *E*-(*n*-C₃H₇)-CH=CH-.

Bevorzugt enthalten die flüssigkristallinen Medien gemäß der vorliegenden Anmeldung insgesamt 1 ppm bis 25.000 ppm, bevorzugt 50 ppm bis 20.000 ppm, noch stärker bevorzugt 100 bis 15.000 ppm, bevorzugt bis 10.000 ppm, und, ganz besonders bevorzugt, 200 ppm bis 10.000 ppm an Verbindungen der Formel I. In einer weiteren bevorzugten Ausführungsform enthalten die flüssigkristallinen Medien gemäß der vorliegenden Anmeldung insgesamt 1 ppm bis 2.000 ppm, bevorzugt 10 ppm bis 1.000 ppm, noch stärker bevorzugt 20 bis 600 ppm, bevorzugt bis 500 ppm, und, ganz besonders bevorzugt, 50 ppm bis 400 ppm an Verbindungen der Formel I.

Die Verbindungen der Formel I eignen sich hervorragend als Stabilisatoren in Flüssigkristallmischungen. Insbesondere stabilisieren sie solche Mischungen sehr effizient gegen thermische Belastungen. Im Gegensatz zu diesen Verbindungen führen bisher bekannte Verbindungen, die gut gegen thermische Belastung stabilisieren, zu einer mehr oder weniger starken Abnahme der "Voltage Holding Ratio" (kurz VHR oder nur HR) bei UV-Belastung. Im Vergleich hierzu zeigen die Verbindungen der Formel I eine deutliche Verbesserung. Die HR der Mischungen nach UV-Belastung nimmt zwar oft noch ab, diese Abnahme der HR bei UV-Belastung ist jedoch gegenüber derjenigen, die bei den bisher bekannten Materialien auftritt, deutlich verringert.

In einer bevorzugten Ausführungsform der vorliegenden Erfindung enthalten die erfindungsgemäßen Medien jeweils eine oder mehrere Verbindungen der Formel I ausgewählt aus der Gruppe der Verbindungen der Formeln I-1 bis I-3, bevorzugt Verbindungen der Formel I-1, 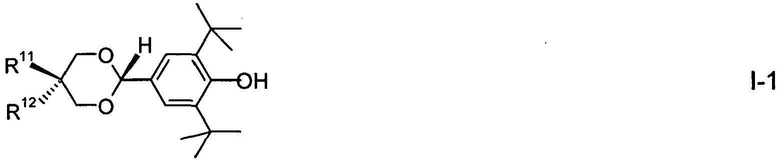 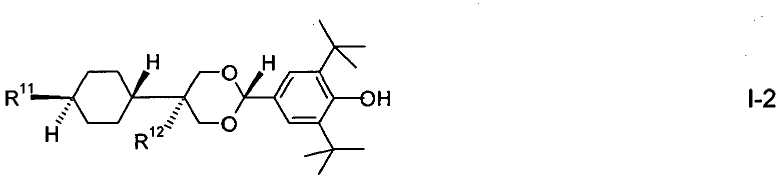 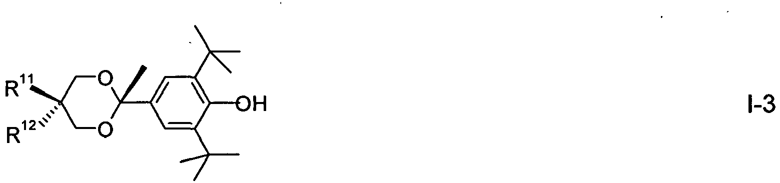 worin die Parameter die oben unter Formel I angegebenen Bedeutungen haben und bevorzugt
- R¹¹: H oder eine geradkettige oder verzweigte Alkylkette der Formel CₙH₂ₙ₊₁, worin
- n: eine ganze Zahl von 1 bis 10, bevorzugt von 1 bis 5 und, besonders bevorzugt, von 1 bis 3,
- R¹²: H oder eine geradkettige oder verzweigte Alkylkette der Formel CₘH₂ₘ₊₁, worin
- m: eine ganze Zahl von 1 bis 10, bevorzugt von 1 bis 5 und, besonders bevorzugt, von 1 bis 3,
bedeuten.

In einer noch stärker bevorzugten Ausführungsform der vorliegenden Erfindung enthalten die erfindungsgemäßen Medien jeweils eine oder mehrere Verbindungen der Formel I ausgewählt aus der Gruppe der folgenden Verbindungen, der Formeln I-1-1 bis I-3-1 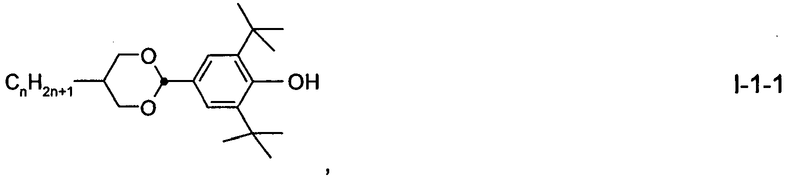 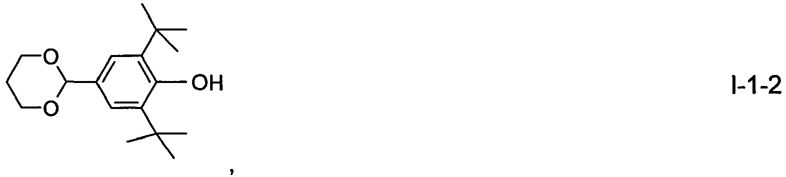 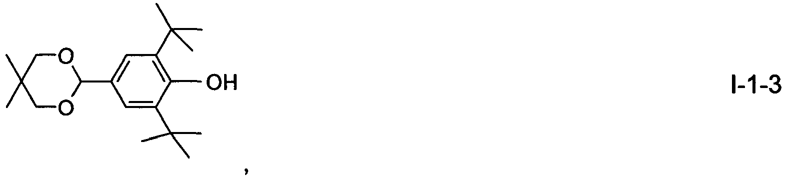 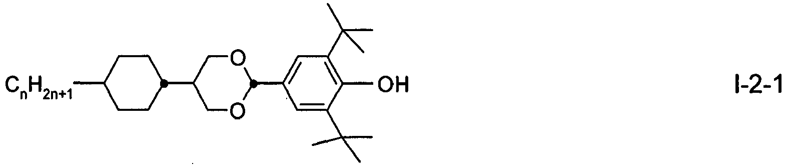 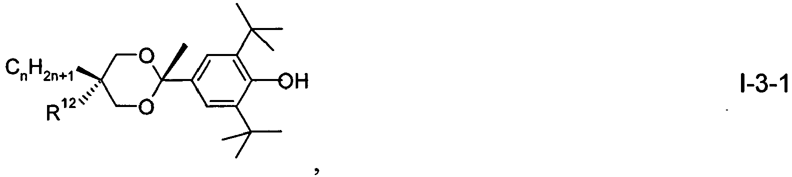 worin die Parameter die oben unter Formeln I-1 bzw. I-2 bzw. I-3 angegebenen Bedeutungen haben und bevorzugt
- n: eine ganze Zahl von 1 bis 7, bevorzugt von 2 bis 5 und, besonders bevorzugt, 3,
bedeutet.

In einer bevorzugten Ausführungsform der vorliegenden Erfindung enthalten die erfindungsgemäßen Medien eine oder mehrere Verbindungen der Formel I, bevorzugt ausgewählt aus deren bevorzugten Unterformeln,
und/oder
eine oder mehrere Verbindungen der Formel II, bevorzugt ausgewählt aus deren bevorzugten Unterformeln,
und/oder
eine oder mehrere Verbindungen der Formel III, bevorzugt ausgewählt aus deren bevorzugten Unterformeln,
und/oder
eine oder mehrere Verbindungen der Formel IV, bevorzugt ausgewählt aus deren bevorzugten Unterformeln.

Vorzugsweise enthalten die Medien gemäß der vorliegenden Erfindung zusätzlich zu den Verbindungen der Formeln I bzw. deren bevorzugter Unterformeln, eine oder mehrere dielektrisch neutrale Verbindungen der Formel IV in einer Gesamtkonzentration im Bereich von 5 % oder mehr bis 90 % oder weniger, bevorzugt von 10 % oder mehr bis 80 % oder weniger, besonders bevorzugt von 20 % oder mehr bis 70 % oder weniger.

Die Verbindungen der Formeln II und III sind bevorzugt dielektrisch positive Verbindungen, vorzugsweise mit einer dielektrischen Anisotropie von mehr als 3.

Die Verbindungen der Formel IV sind bevorzugt dielektrisch neutrale Verbindungen, vorzugsweise mit einer dielektrischen Anisotropie im Bereich von -1,5 bis 3.

Die Verbindungen der Formel I eignen sich hervorragend als Stabilisatoren in Flüssigkristallmischungen. Insbesondere stabilisieren sie Mischungen sehr effizient gegen Hitzebelastungen. Bisherige Materialien, die gut gegen Hitzebelastung stabilisieren führen zu einer mehr oder weniger starken Abnahme der HR bei UV-Belastung. Im Vergleich hierzu zeigen die Verbindungen der Formel I eine Verbesserung. D.h. die Abnahme der HR bei UV-Belastung ist verringert.

Die einzelnen Verbindungen der Formel II und/oder III werden in einer Konzentration von 1 bis 20 %, bevorzugt von 1 bis 15 % eingesetzt. Diese Grenzen gelten insbesondere wenn jeweils zwei oder mehr homologe Verbindungen, also Verbindungen der gleichen Formel, eingesetzt werden. Wird von den Verbindungen einer Formel nur eine einzelne Substanz, also nur ein Homologes, eingesetzt so kann dessen Konzentration im Bereich von 2 bis 20 %, bevorzugt von 3 bis 14 %, liegen.

Vorzugsweise enthalten die Medien gemäß der vorliegenden Erfindung zusätzlich zu den Verbindungen der Formeln I bzw. deren bevorzugter Unterformeln, eine oder mehrere dielektrisch positive Verbindungen mit einer dielektrischen Anisotropie von mehr als 3, ausgewählt aus der Gruppe der Formeln II und III.

In einer bevorzugten Ausführungsform der vorliegenden Erfindung enthalten die erfindungsgemäßen Medien eine oder mehrere Verbindungen ausgewählt aus der Gruppe der Verbindungen der Formeln II-1 bis II-4, bevorzugt der Formeln II-1 und/oder II-2 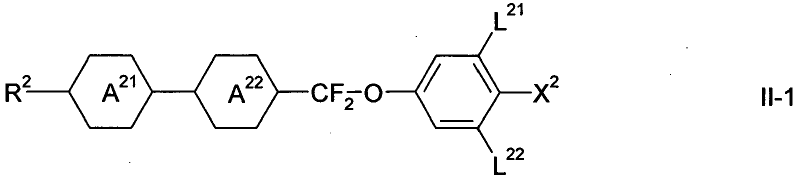 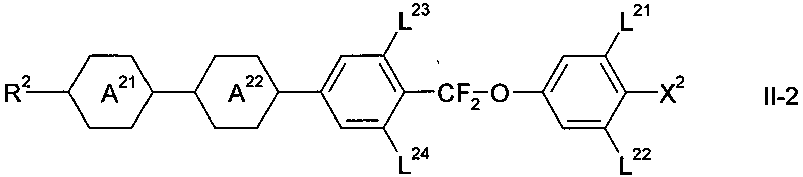 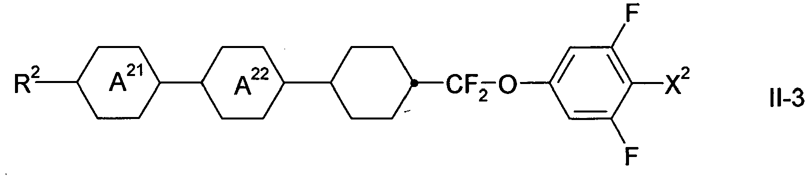 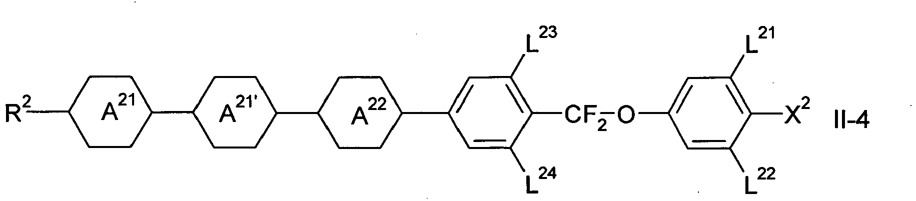 worin die Parameter die jeweiligen oben unter Formel II angegebenen Bedeutungen besitzen und L²³ und L²⁴ unabhängig voneinander H oder F, bevorzugt L²³ F, bedeutet und 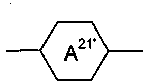 eine der bei 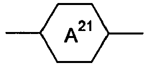 gegebenen Bedeutungen hat und bei Formeln II-1 und II-4 X² bevorzugt F oder OCF₃, besonders bevorzugt F und bei Formel II-3 vorzugsweise 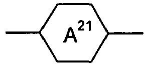 und 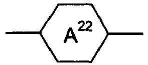 unabhängig voneinander 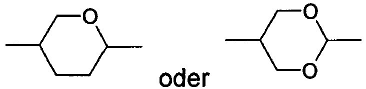 bedeuten, und/oder ausgewählt sind aus der Gruppe der Verbindungen der Formeln III-1 und III-2: 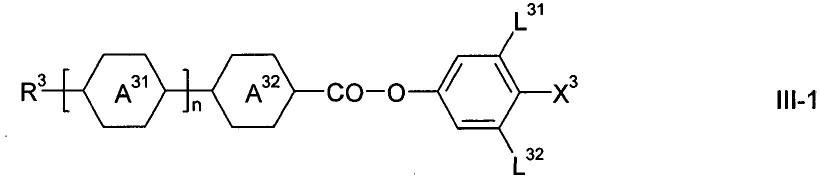 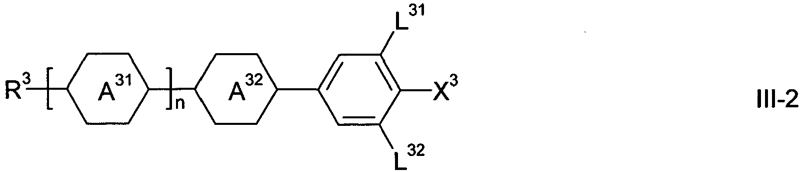 worin die Parameter die unter Formel III gegeben Bedeutung haben.

In einer bevorzugten Ausführungsform enthalten die Medien gemäß der vorliegenden Erfindung alternativ oder zusätzlich zu den Verbindungen der Formeln III-1 und/oder III-2 eine oder mehrere Verbindungen der Formel III-3 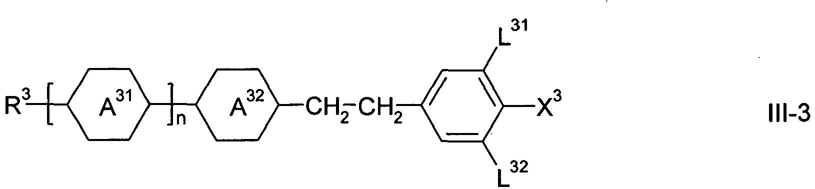 worin die Parameter die jeweiligen oben angegebenen Bedeutungen besitzen und die Parameter L³¹ und L³² unabhängig voneinander und von den anderen Parametern H oder F bedeuten.

Vorzugsweise enthalten die erfindungsgemäßen Medien eine oder mehrere Verbindungen ausgewählt aus der Gruppe der Verbindungen der Formeln II-1 bis II-4, worin L²¹ und L²² und/oder L²³ und L²⁴ beide F bedeuten.

In einer bevorzugten Ausführungsform enthalten die Medien eine oder mehrere Verbindungen, die ausgewählt sind aus der Gruppe der Verbindungen der Formeln II-2 und II-4, worin L²¹, L²², L²³ und L²⁴ alle F bedeuten.

Vorzugsweise enthalten die Medien eine oder mehrere Verbindungen der Formel II-1. Vorzugsweise sind die Verbindungen der Formel II-1 ausgewählt aus der Gruppe der Verbindungen der Formeln II-1a bis II-1f 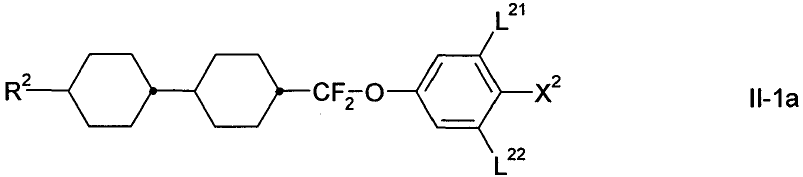 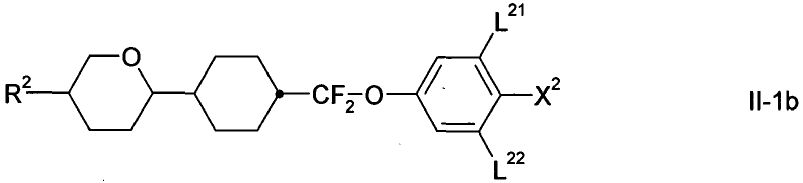 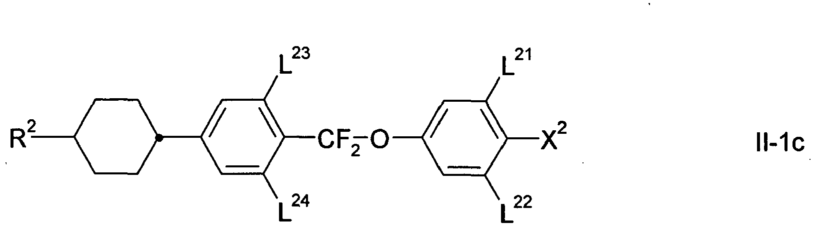 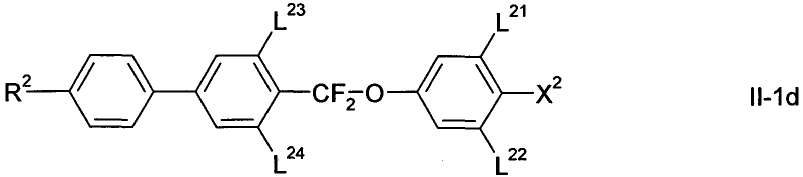 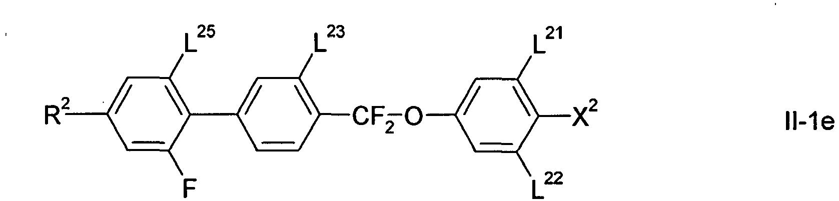 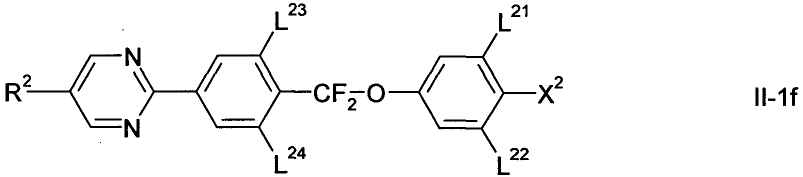 worin die Parameter die jeweiligen oben angegebenen Bedeutungen besitzen und L²³ bis L²⁵ unabhängig voneinander und von den anderen Parametern H oder F bedeuten und
vorzugsweise
in den Formeln II-1a und II-1b
L²¹ und L²² beide F bedeuten,
in den Formeln II-1c und II-1d
L²¹ und L²² beide F und/oder L²³ und L²⁴ beide F bedeuten und
in Formel II-1e
L²¹, L²² und L²⁵ F bedeuten und jeweils die anderen Parameter die jeweiligen oben gegebenen Bedeutungen haben.

Speziell bevorzugte Verbindungen der Formel II-1 sind 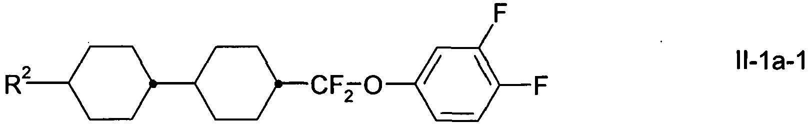 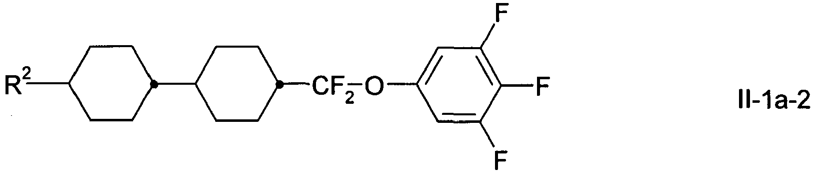 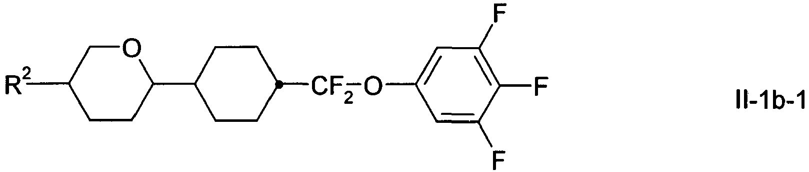 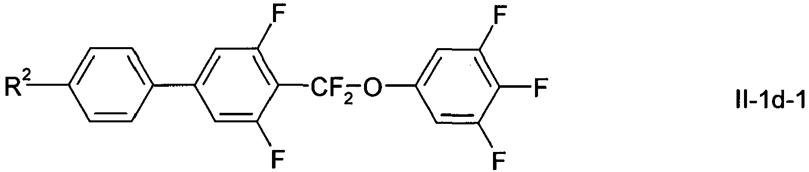 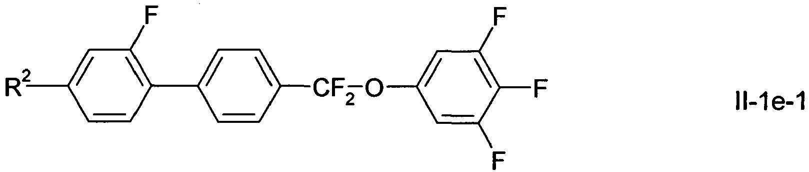 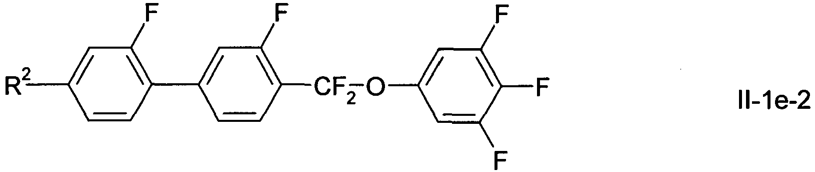 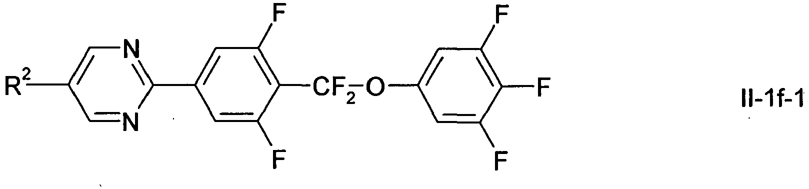 worin R² die oben angegebene Bedeutung besitzt, insbesondere Verbindungen der Formel II-1a-2.

Vorzugsweise enthalten die Medien eine oder mehrere Verbindungen der Formel II-2, die bevorzugt ausgewählt sind aus der Gruppe der Verbindungen der Formeln II-2a bis II-2k 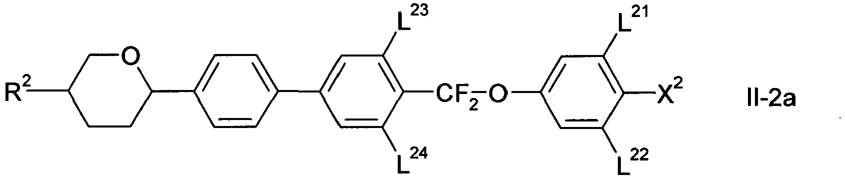 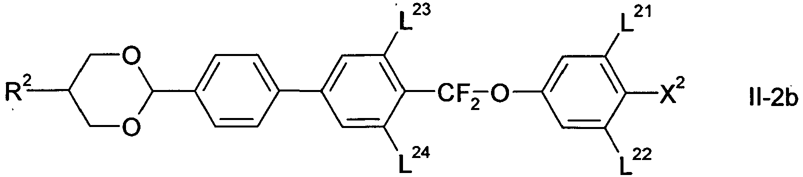 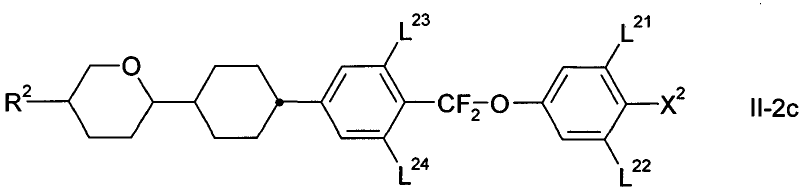 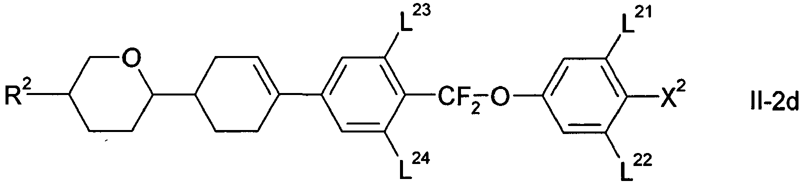 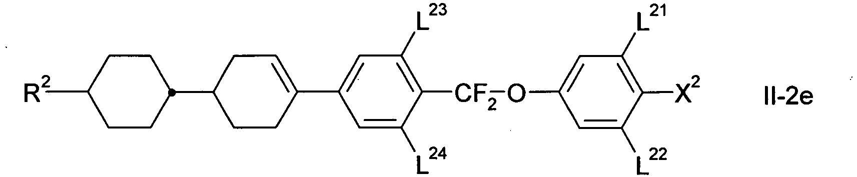 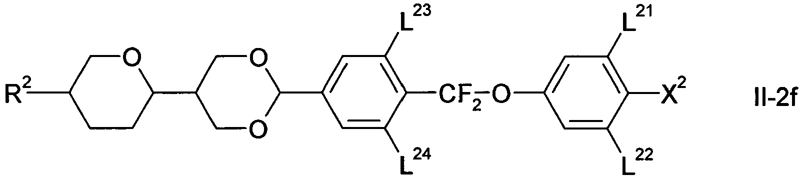 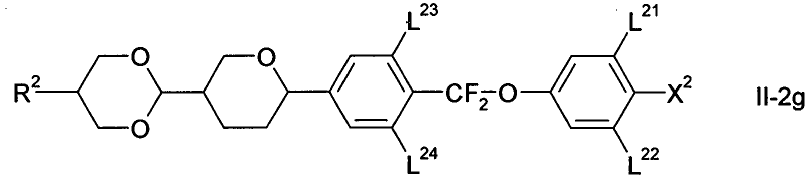 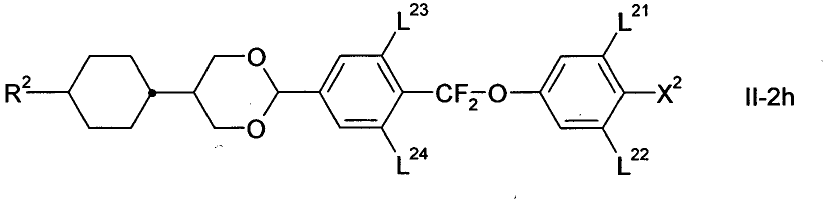 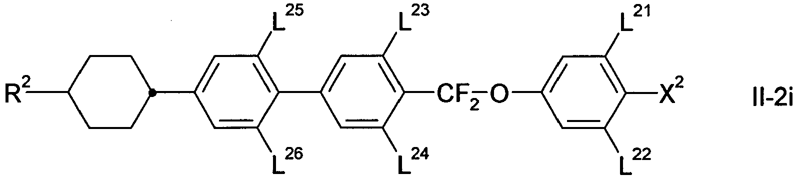 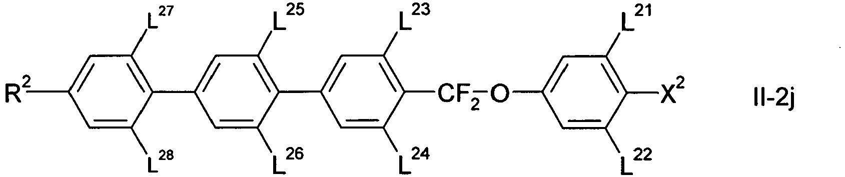 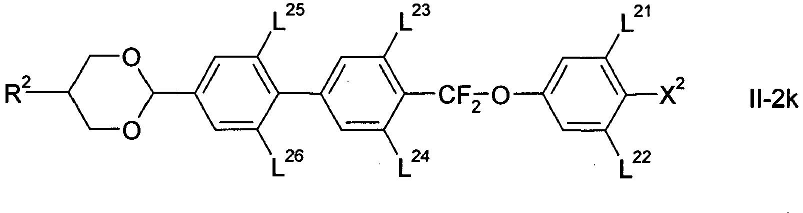 worin die Parameter die jeweiligen oben angegebenen Bedeutungen besitzen und L²⁵ bis L²⁸ unabhängig voneinander H oder F, bevorzugt L²⁷ und L²⁸ beide H, besonders bevorzugt L²⁶ H bedeuten und die anderen Parameter die jeweiligen oben gegebenen Bedeutungen haben.

Vorzugsweise enthalten die erfindungsgemäßen Medien eine oder mehrere Verbindungen ausgewählt aus der Gruppe der Verbindungen der Formeln II-2a bis II-2k, worin L²¹ und L²² beide F und/oder L²³ und L²⁴ beide F bedeuten und die anderen Parameter die jeweiligen oben gegebenen Bedeutungen haben.

In einer bevorzugten Ausführungsform enthalten die erfindungsgemäßen Medien eine oder mehrere Verbindungen ausgewählt aus der Gruppe der Verbindungen der Formeln II-2a bis II-2k, worin L²¹, L²², L²³ und L²⁴ alle F bedeuten und die anderen Parameter die jeweiligen oben gegebenen Bedeutungen haben.

Speziell bevorzugte Verbindungen der Formel II-2 sind die Verbindungen der folgenden Formeln 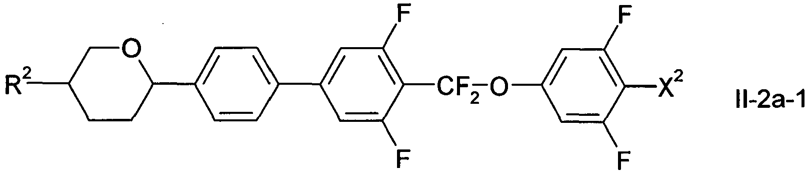 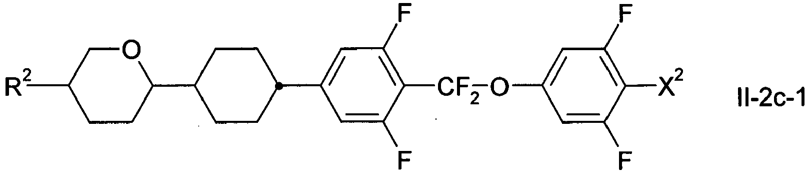 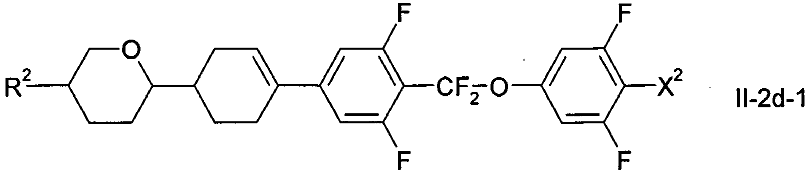 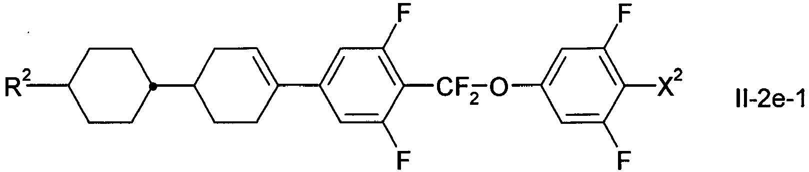 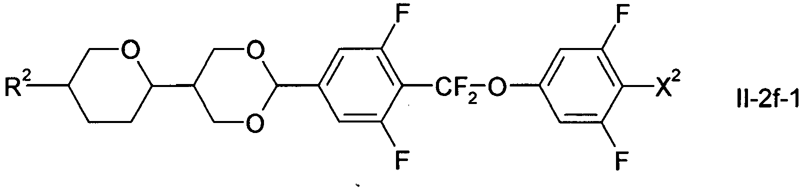 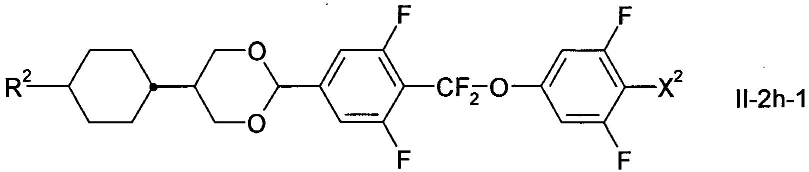 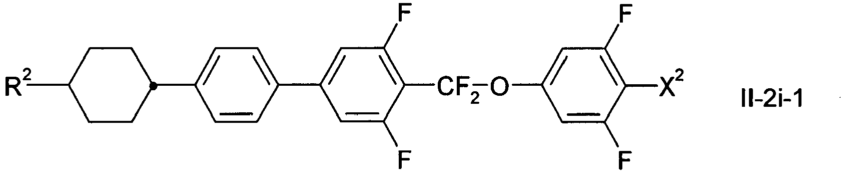 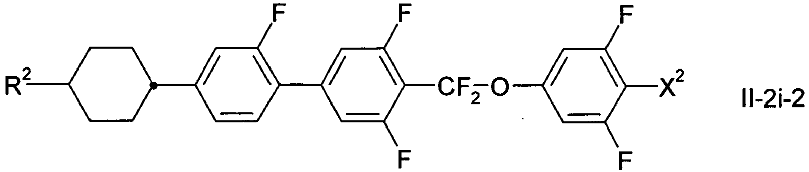 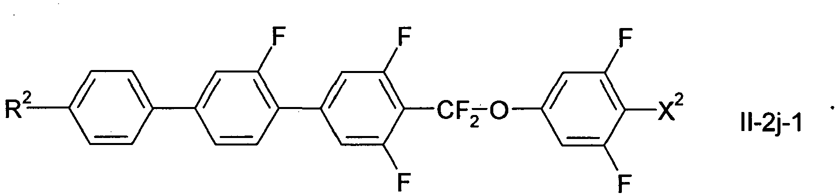 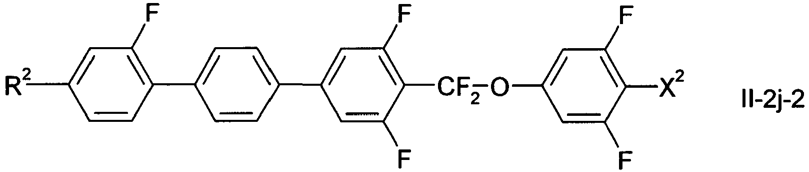 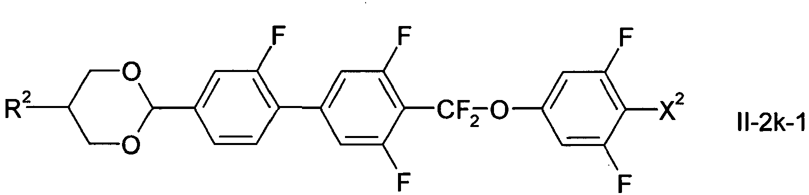 worin R² und X² die oben angegebenen Bedeutungen besitzen und X² bevorzugt F bedeutet, besonders bevorzugt Verbindungen der Formel II-2a-1 und/oder II-2h-1 und/oder II-2j-1 und/oder II-2k-1.

Vorzugsweise enthalten die erfindungsgemäßen Medien eine oder mehrere Verbindungen der Formel II-3, vorzugsweise ausgewählt aus der Gruppe der Verbindungen der Formeln II-3a bis II-3c 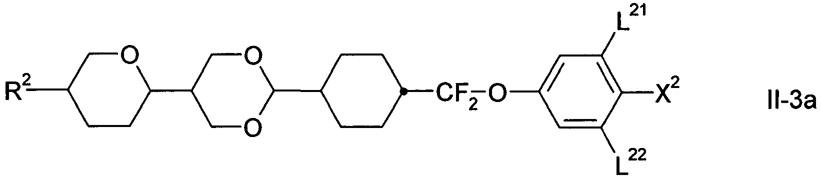 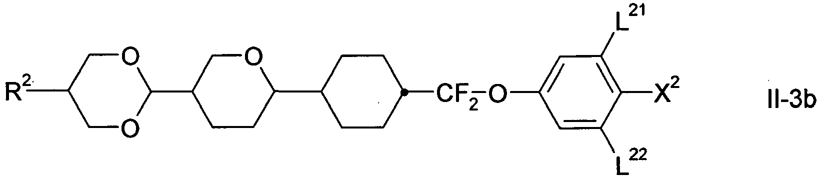 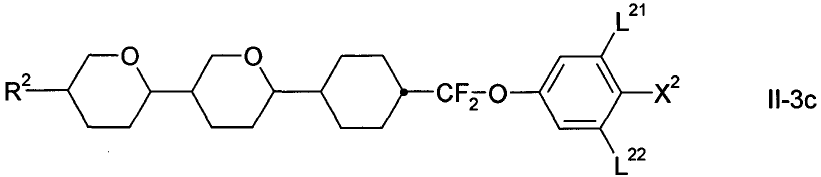 worin die Parameter die jeweiligen oben angegebenen Bedeutungen besitzen und L²¹ und L²² vorzugsweise beide F bedeuten.

In einer bevorzugten Ausführungsform enthalten die erfindungsgemäßen Medien eine oder mehrere Verbindungen der Formel II-4, bevorzugt der Formel II-4a 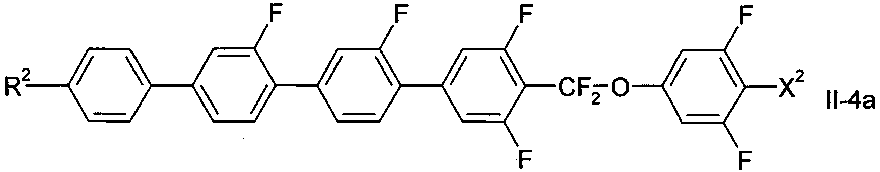 worin die Parameter die oben gegebene Bedeutung haben und X² bevorzugt F oder OCF₃, besonders bevorzugt F, bedeutet.

Vorzugsweise enthalten die erfindungsgemäßen Medien eine oder mehrere Verbindungen der Formel III-1, vorzugsweise ausgewählt aus der Gruppe der Verbindungen der Formeln III-1a und III-1 b 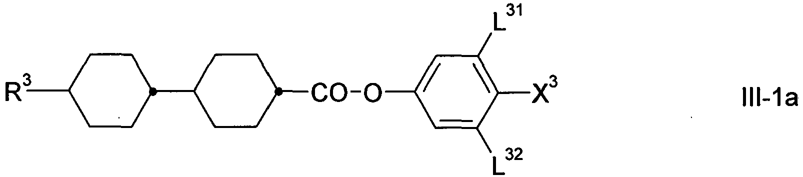 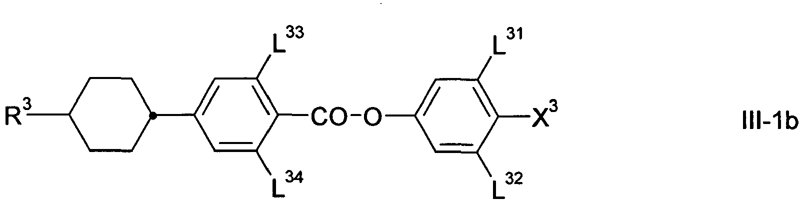 worin die Parameter die jeweiligen oben angegebenen Bedeutungen besitzen und die Parameter L³³ und L³⁴ unabhängig voneinander und von den anderen Parametern H oder F bedeuten.

Vorzugsweise enthalten die erfindungsgemäßen Medien eine oder mehrere Verbindungen der Formel III-1 a, vorzugsweise ausgewählt aus der Gruppe der Verbindungen der Formeln III-1a-1 bis III-1a-6 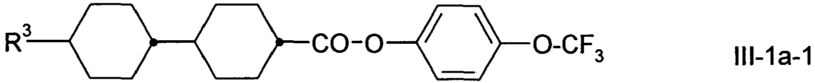 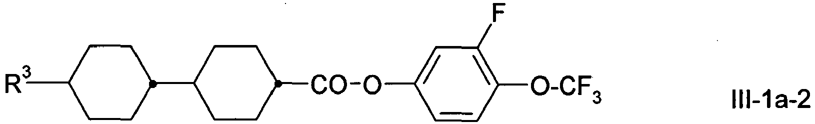 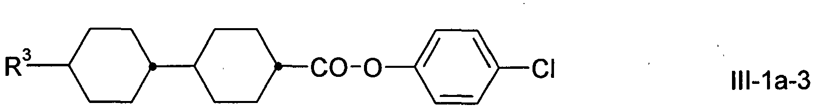 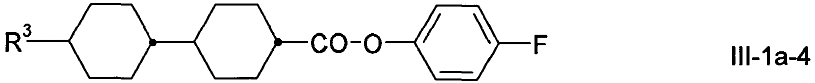 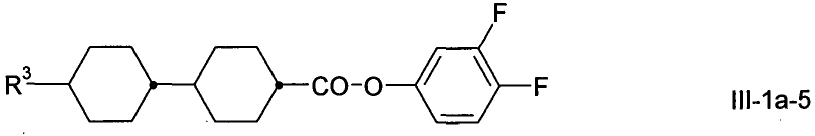 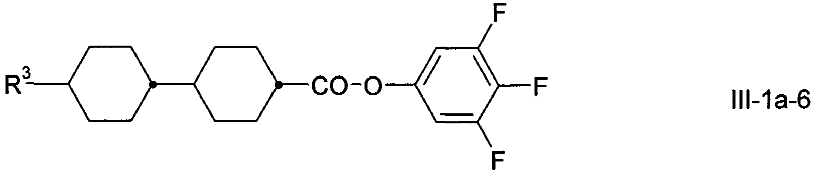 worin R³ die oben angegebene Bedeutung besitzt.

Vorzugsweise enthalten die erfindungsgemäßen Medien eine oder mehrere Verbindungen der Formel III-1 b, vorzugsweise ausgewählt aus der Gruppe der Verbindungen der Formeln III-1 b-1 bis III-1 b-4, vorzugsweise der Formel III-1 b-4 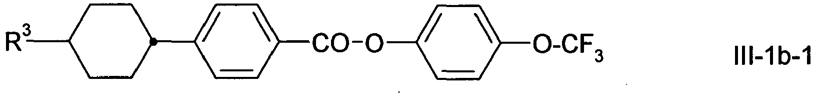 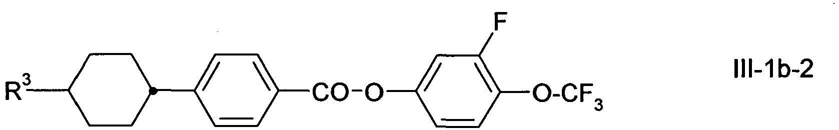 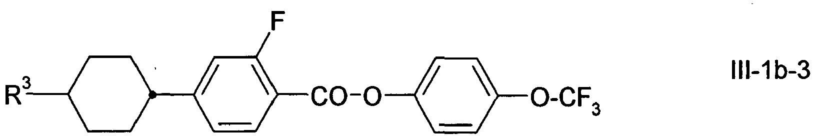 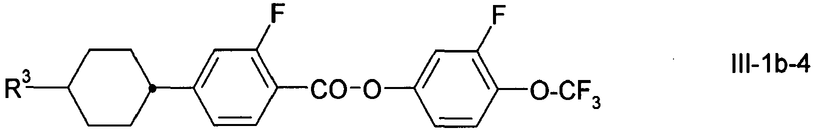 worin R³ die oben angegebene Bedeutung besitzt.

Vorzugsweise enthalten die erfindungsgemäßen Medien eine oder mehrere Verbindungen der Formel III-2, vorzugsweise ausgewählt aus der Gruppe der Verbindungen der Formeln III-2a bis III-2k 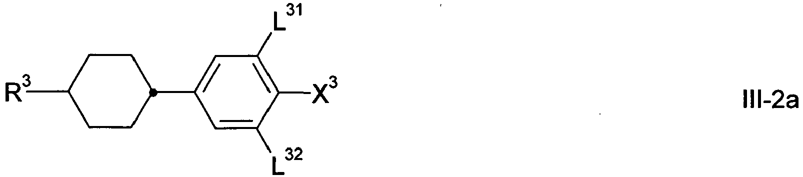 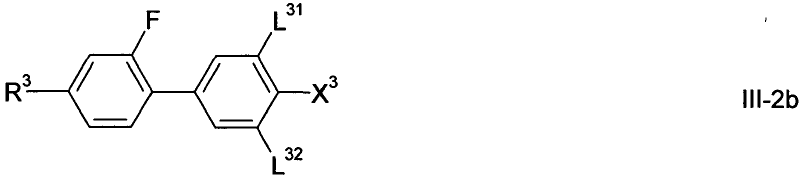 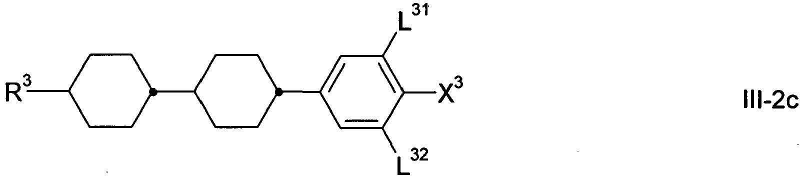 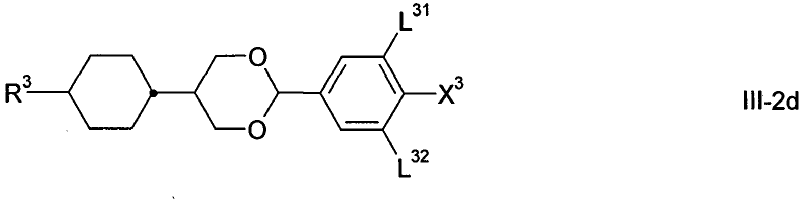 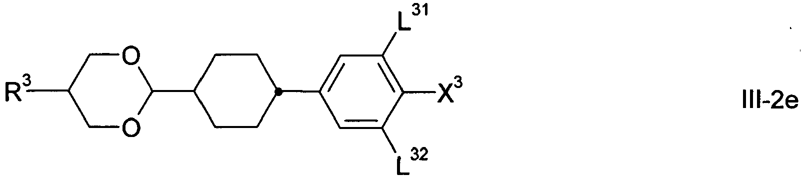 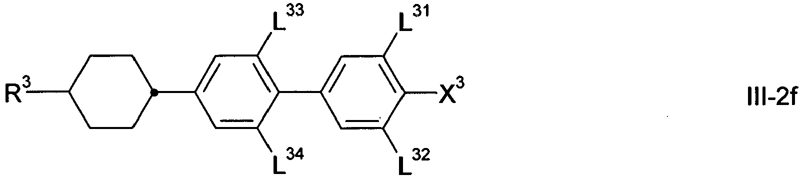 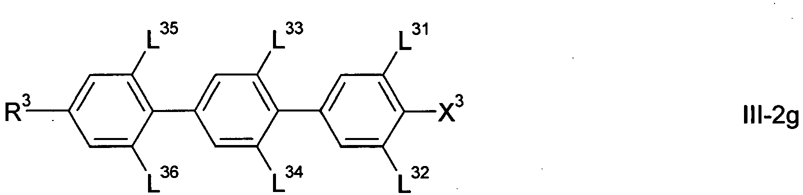 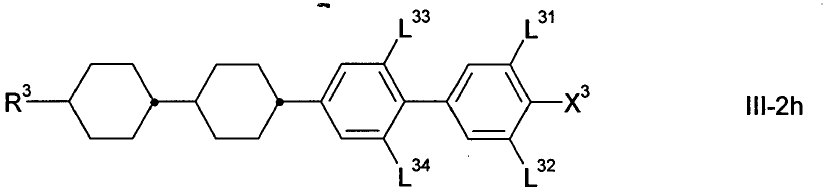 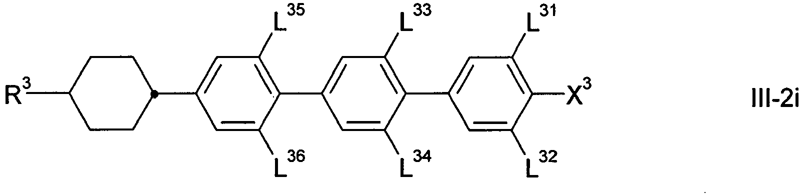 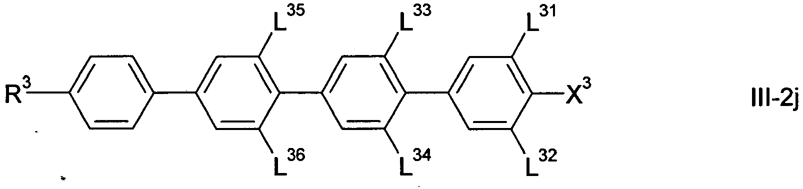 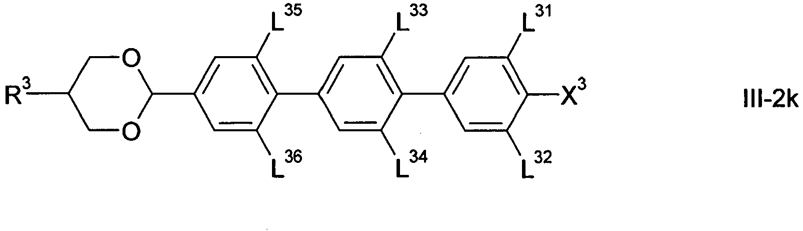 worin die Parameter die oben gegebene Bedeutung haben und bevorzugt worin die Parameter die jeweiligen oben angegebenen Bedeutungen besitzen und die Parameter L³³, L³⁴, L³⁵ und L³⁶ unabhängig voneinander und von den anderen Parametern H oder F bedeuten.

Vorzugsweise enthalten die erfindungsgemäßen Medien eine oder mehrere Verbindungen der Formel III-2a, vorzugsweise ausgewählt aus der Gruppe der Verbindungen der Formeln III-2a-1 bis III-2a-5 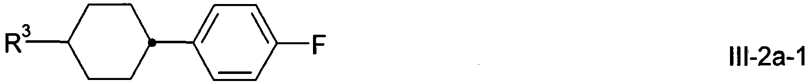 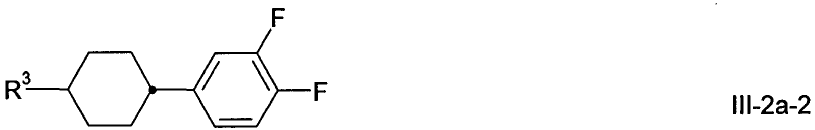 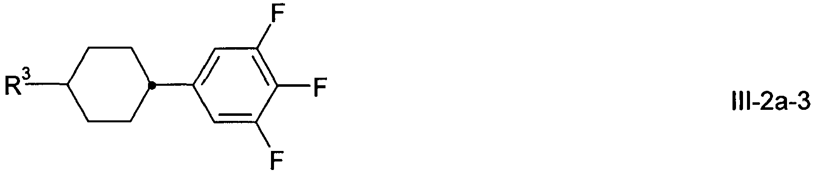 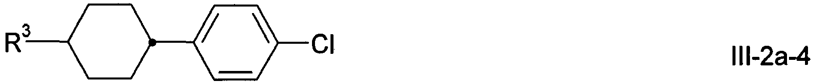 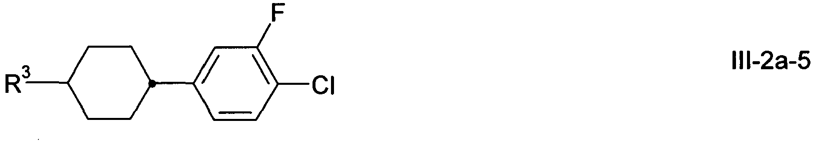 worin R³ die oben angegebene Bedeutung besitzt.

Vorzugsweise enthalten die erfindungsgemäßen Medien eine oder mehrere Verbindungen der Formel III-2b, vorzugsweise ausgewählt aus der Gruppe der Verbindungen der Formeln III-2b-1 und III-2b-2, vorzugsweise der Formel III-2b-2 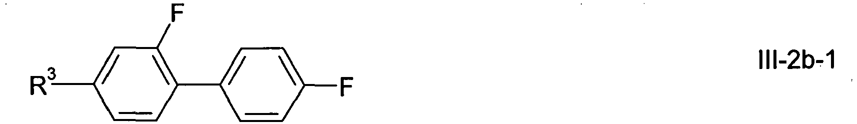 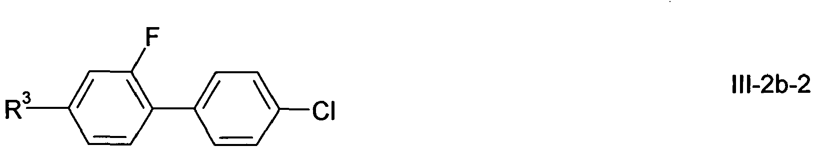 worin R³ die oben angegebene Bedeutung besitzt.

Vorzugsweise enthalten die erfindungsgemäßen Medien eine oder mehrere Verbindungen der Formel III-2c, vorzugsweise ausgewählt aus der Gruppe der Verbindungen der Formeln III-2c-1 bis III-2c-6 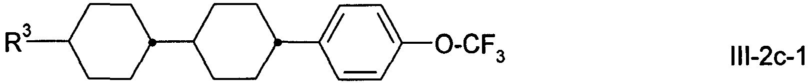 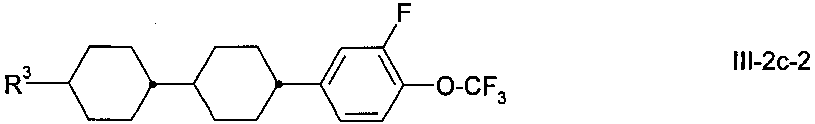 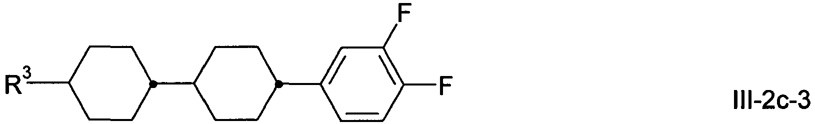 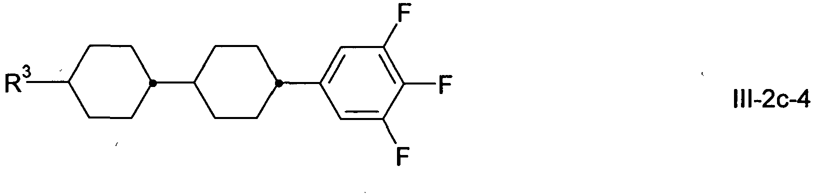 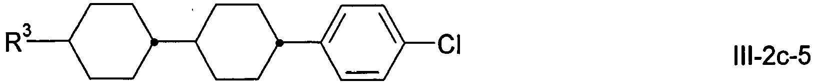 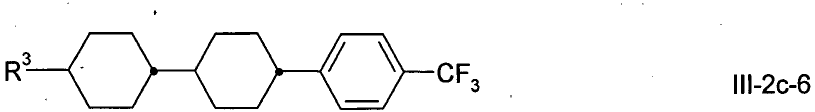 worin R³ die oben angegebene Bedeutung besitzt, besonders bevorzugt Verbindungen der Formel III-2c-1 und/oder III-2c-2 und/oder III-2c-4.

Vorzugsweise enthalten die erfindungsgemäßen Medien eine oder mehrere Verbindungen ausgewählt aus der Gruppe der Verbindungen der Formeln III-2d und III-2e, vorzugsweise ausgewählt aus der Gruppe der Verbindungen der Formeln III-2d-1 und III-2e-1 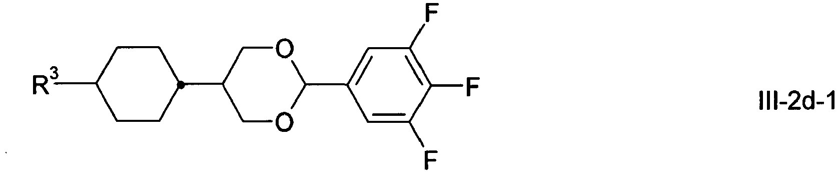 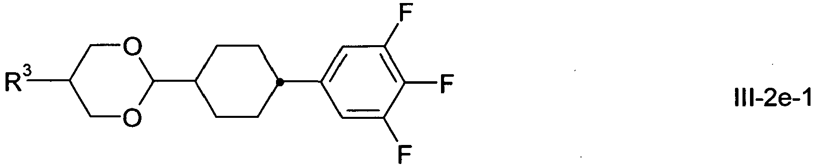 worin R³ die oben angegebene Bedeutung besitzt.

Vorzugsweise enthalten die erfindungsgemäßen Medien eine oder mehrere Verbindungen der Formel III-2f, vorzugsweise ausgewählt aus der Gruppe der Verbindungen der Formeln III-2f-1 bis III-2f-6 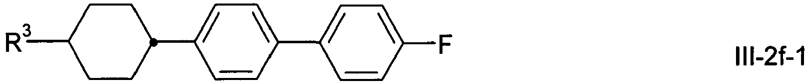 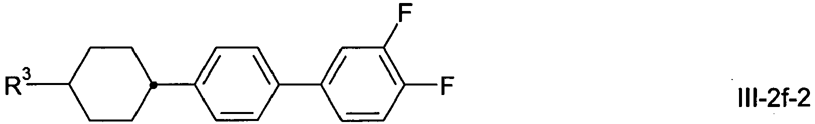 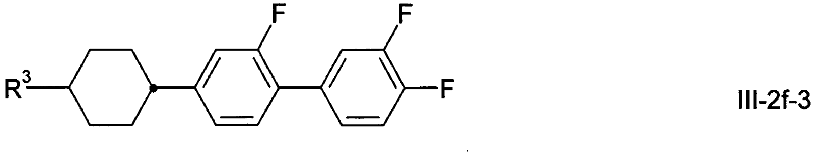 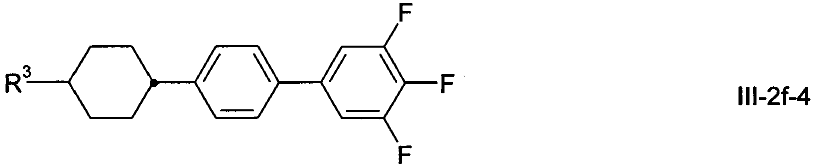 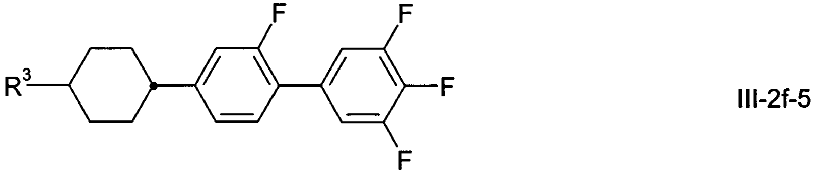 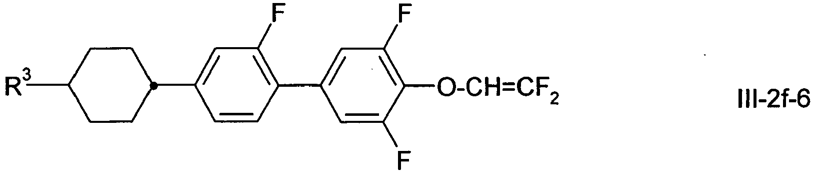 worin R³ die oben angegebene Bedeutung besitzt.

Vorzugsweise enthalten die erfindungsgemäßen Medien eine oder mehrere Verbindungen der Formel III-2g, vorzugsweise ausgewählt aus der Gruppe der Verbindungen der Formeln III-2g-1 bis III-2g-5 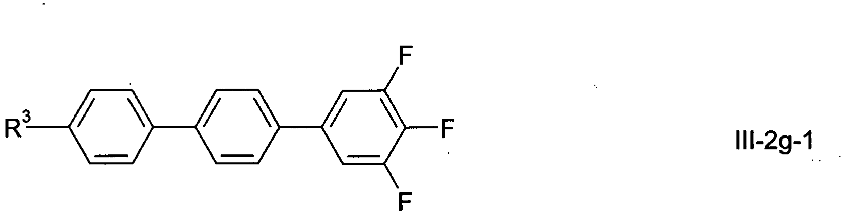 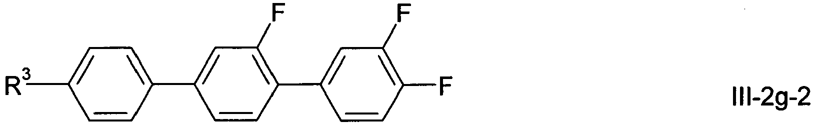 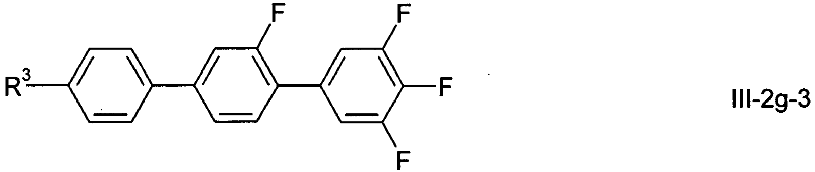 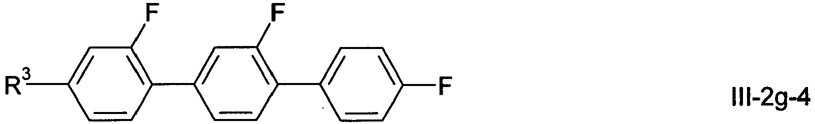 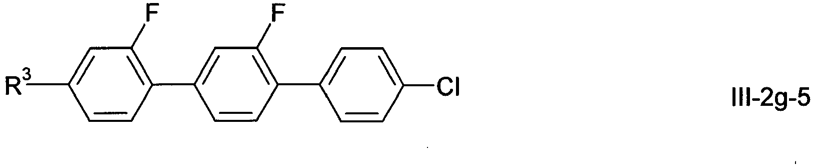 worin R³ die oben angegebene Bedeutung besitzt.

Vorzugsweise enthalten die erfindungsgemäßen Medien eine oder mehrere Verbindungen der Formel III-2h, bevorzugt ausgewählt aus der Gruppe der Verbindungen der Formeln III-2h-1 bis III-2h-3, bevorzugt der Formel III-2h-3 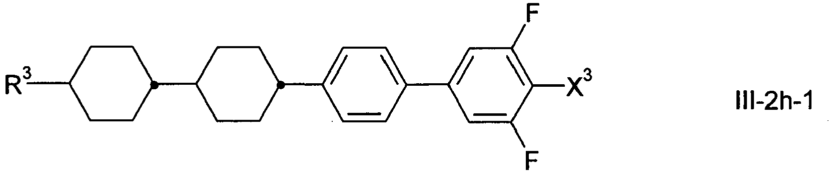 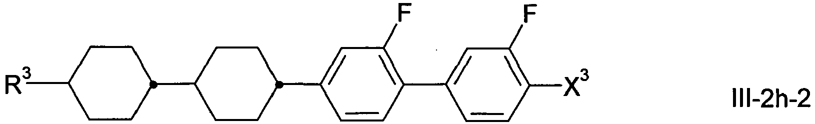 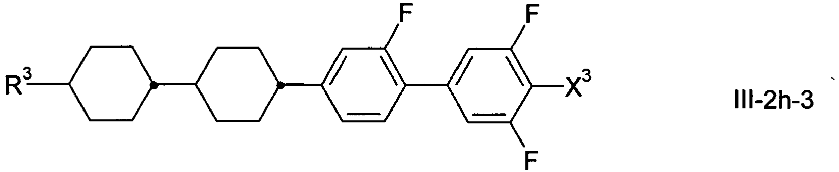 worin die Parameter die oben gegebene Bedeutung haben und bevorzugt X³ F bedeutet.

Vorzugsweise enthalten die erfindungsgemäßen Medien eine oder mehrere Verbindungen der Formel III-2i, bevorzugt ausgewählt aus der Gruppe der Verbindungen der Formeln III-2i-1 und III-2i-2, besonders bevorzugt der Formel III-2i-2 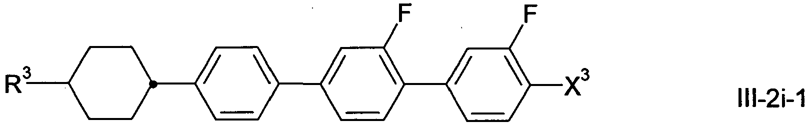 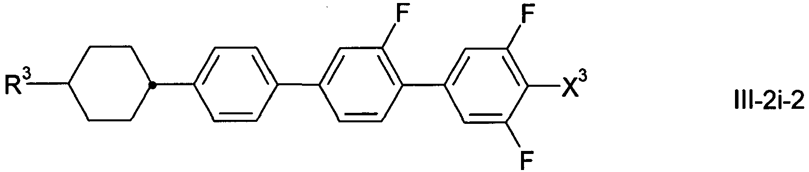 worin die Parameter die oben gegebene Bedeutung haben und bevorzugt X³ F oder OCF₃ bedeutet.

Vorzugsweise enthalten die erfindungsgemäßen Medien eine oder mehrere Verbindungen der Formel III-2j, bevorzugt ausgewählt aus der Gruppe der Verbindungen der Formeln III-2j-1 und III-2j-2, besonders bevorzugt der Formel III-2j-1 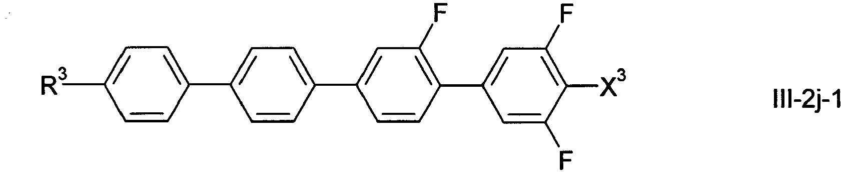 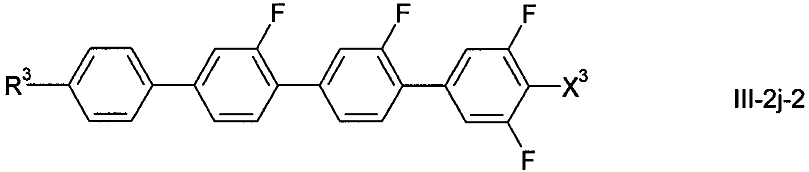 worin die Parameter die oben gegebene Bedeutung haben.

Vorzugsweise enthalten die erfindungsgemäßen Medien eine oder mehrere Verbindungen der Formel III-2k, bevorzugt der Formel III-2k-1 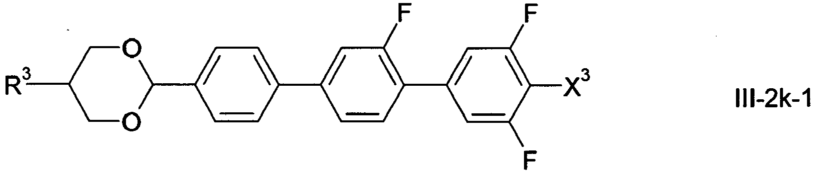 worin die Parameter die oben gegebene Bedeutung haben und X³ bevorzugt F bedeutet.

Alternativ oder zusätzlich zu den Verbindungen der Formeln III-1 und/oder III-2 können die Medien gemäß der vorliegenden Erfindung eine oder mehrere Verbindungen der Formel III-3 enthalten 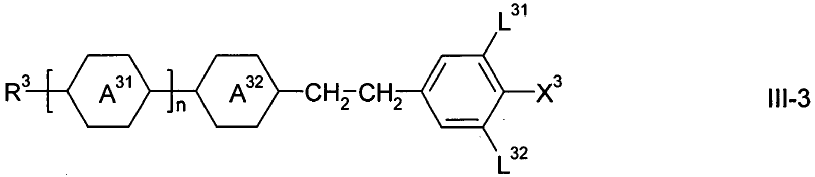 worin die Parameter die jeweiligen oben unter Formel III angegebenen Bedeutungen besitzen.

Diese Verbindungen sind vorzugsweise ausgewählt aus der Gruppe der Formeln III-3a und III-3b 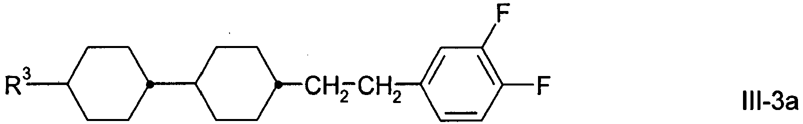 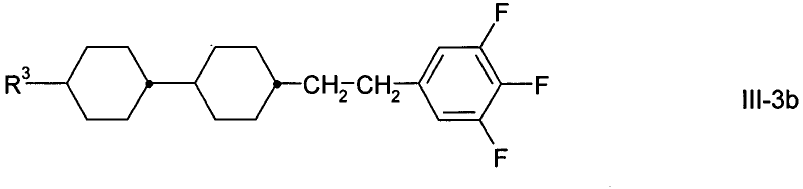 worin R³ die oben angegebene Bedeutung besitzt.

Vorzugsweise enthalten die flüssigkristallinen Medien gemäß der vorliegenden Erfindung eine dielektrisch neutrale Komponente, Komponente C. Diese Komponente weist eine dielektrische Anisotropie im Bereich von -1,5 bis 3 auf. Vorzugsweise enthält sie dielektrisch neutrale Verbindungen mit einer dielektrischen Anisotropie im Bereich von -1,5 bis 3, stärker bevorzugt besteht sie überwiegend, noch stärker bevorzugt besteht sie im Wesentlichen und speziell bevorzugt besteht sie vollständig daraus. Vorzugsweise enthält diese Komponente eine oder mehrere dielektrisch neutrale Verbindungen, stärker bevorzugt besteht sie überwiegend, noch stärker bevorzugt besteht sie im Wesentlichen und ganz bevorzugt besteht sie vollständig aus dielektrisch neutralen Verbindungen mit einer dielektrischen Anisotropie im Bereich von -1,5 bis 3, der Formel IV.

Vorzugsweise enthält die dielektrisch neutrale Komponente, Komponente C, eine oder mehrere Verbindungen ausgewählt aus der Gruppe der Verbindungen der Formeln IV-1 bis IV-8 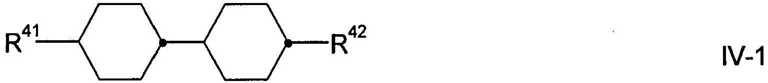 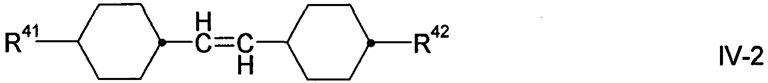 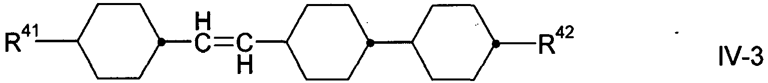 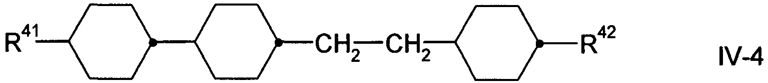 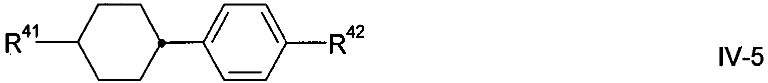 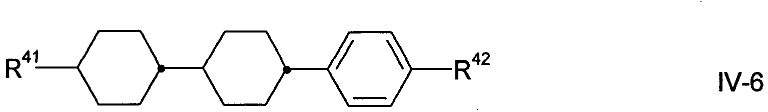 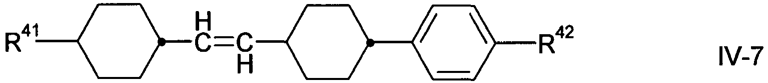 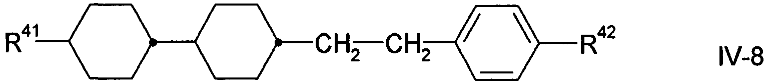 worin R⁴¹ und R⁴² die jeweiligen oben unter Formel IV angegebenen Bedeutungen besitzen und in den Formeln IV-1, IV-6 und IV-7 R⁴¹ vorzugsweise Alkyl oder Alkenyl, vorzugsweise Alkenyl, und R⁴² vorzugsweise Alkyl oder Alkenyl, vorzugsweise Alkyl bedeutet, und in Formel IV-2 R⁴¹ und R⁴² vorzugsweise Alkyl bedeuten und in Formel IV-5 R⁴¹ vorzugsweise Alkyl oder Alkenyl, stärker bevorzugt Alkyl, und R⁴² vorzugsweise Alkyl, Alkenyl oder Alkoxy, stärker bevorzugt Alkenyl oder Alkoxy und in Formeln IV-4 und IV-8 R⁴¹ vorzugsweise Alkyl und R⁴² vorzugsweise Alkyl oder Alkoxy, stärker bevorzugt Alkoxy, bedeutet.

Vorzugsweise enthält die dielektrisch neutrale Komponente, Komponente C, eine oder mehrere Verbindungen ausgewählt aus der Gruppe der Verbindungen der Formeln IV-1, IV-5, IV-6 und IV-7, vorzugsweise eine oder mehrere Verbindungen der Formel IV-1 und eine oder mehrere Verbindungen ausgewählt aus der Gruppe der Formeln IV-5 und IV-6, stärker bevorzugt jeweils eine oder mehrere Verbindungen der Formeln IV-1, IV-5 und IV-6 und ganz bevorzugt jeweils eine oder mehrere Verbindungen der Formeln IV-1, IV-5, IV-6 und IV-7.

In einer bevorzugten Ausführungsform enthalten die erfindungsgemäßen Medien eine oder mehrere Verbindungen der Formel IV-4, stärker bevorzugt ausgewählt aus ihren jeweiligen Unterformeln der Formel CP-V-n und/ oder CP-nV-m und/oder CP-Vn-m, stärker bevorzugt der Formel CP-V-n und/oder CP-V2-n und ganz bevorzugt ausgewählt aus der Gruppe der Formeln CP-V-1 und CP-V2-1. Die Definitionen dieser Abkürzungen (Akronyme) sind unten in Tabelle D angegeben, bzw. aus den Tabellen A bis C zu ersehen.

In einer bevorzugten Ausführungsform enthalten die erfindungsgemäßen Medien eine oder mehrere Verbindungen der Formel IV-5, stärker bevorzugt ausgewählt aus ihren jeweiligen Unterformeln der Formel CCP-V-n und/ oder CCP-nV-m und/oder CCP-Vn-m, stärker bevorzugt der Formel CCP-V-n und/oder CCP-V2-n und ganz bevorzugt ausgewählt aus der Gruppe der Formeln CCP-V-1 und CCP-V2-1. Die Definitionen dieser Abkürzungen (Akronyme) sind unten in Tabelle D angegeben, bzw. aus den Tabellen A bis C zu ersehen.

In einer ebenfalls bevorzugten Ausführungsform enthalten die erfindungsgemäßen Medien eine oder mehrere Verbindungen der Formel IV-1, stärker bevorzugt ausgewählt aus ihren jeweiligen Unterformeln, den Formel CC-n-m, CC-n-V, CC-n-Vm, CC-V-V, CC-V-Vn und/oder CC-nV-Vm, stärker bevorzugt der Formeln CC-n-V und/ oder CC-n-Vm und ganz bevorzugt ausgewählt aus der Gruppe der Formeln CC-3-V, CC-4-V, CC-5-V, CC-3-V1, CC-4-V1, CC-5-V1, CC-3-V2 und CC-V-V1. Die Definitionen dieser Abkürzungen (Akronyme) sind ebenfalls unten in Tabelle D angegeben, bzw. aus den Tabellen A bis C zu ersehen.

In einer weiteren bevorzugten Ausführungsform der vorliegenden Erfindung, bei der es sich um dieselbe wie die vorhergehende oder um eine andere handeln kann, enthalten die Flüssigkristallmischungen gemäß der vorliegenden Erfindung die Komponente C, die Verbindungen der Formel IV ausgewählt aus der Gruppe der Verbindungen der Formeln IV-1 bis IV-8 wie oben gezeigt und gegebenenfalls der Formeln IV-9 bis IV-15 enthält, vorzugsweise überwiegend daraus besteht und ganz bevorzugt vollständig daraus besteht: 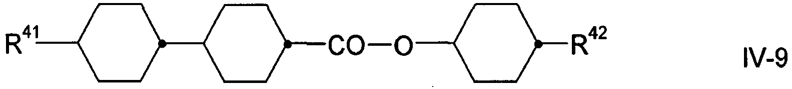 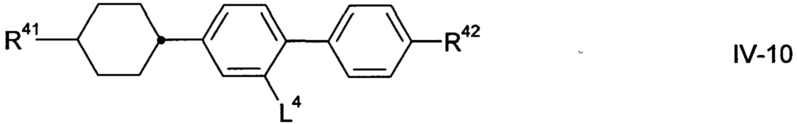 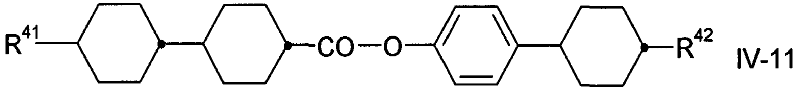 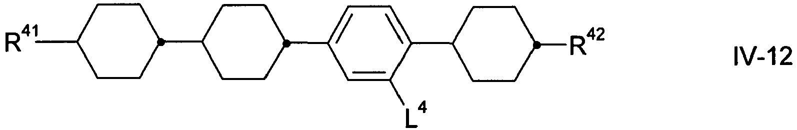 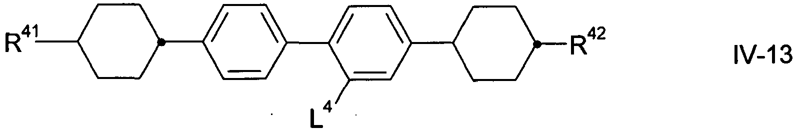 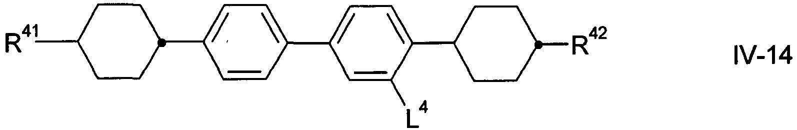 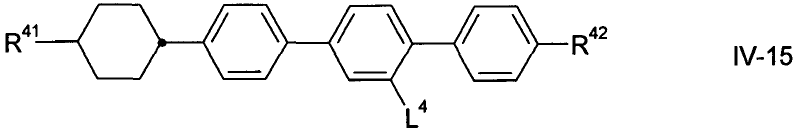 worin
- R⁴¹ und R⁴²: unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeuten und
- L⁴: H oder F bedeutet.

In einer bevorzugten Ausführungsform enthalten die erfindungsgemäßen Medien eine oder mehrere Verbindungen der Formel IV-10, stärker bevorzugt ausgewählt aus ihren jeweiligen Unterformeln der Formel CPP-3-2, CPP-5-2 und CGP-3-2, stärker bevorzugt der Formel CPP-3-2 und/oder CGP-3-2 und ganz besonders bevorzugt der Formel CPP-3-2. Die Definitionen dieser Abkürzungen (Akronyme) sind unten in Tabelle D angegeben, bzw. aus den Tabellen A bis C zu ersehen.

Vorzugsweise enthalten die flüssigkristallinen Medien gemäß der vorliegenden Erfindung eine oder mehrere Verbindungen der Formel V 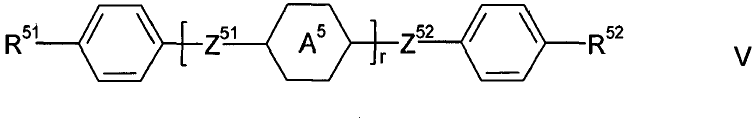 worin
- R⁵¹ und R⁵²: unabhängig voneinander die oben unter Formel II für R² angegebene Bedeutung besitzen, vorzugsweise R⁵¹ Alkyl und R⁵² Alkyl oder Alkenyl bedeutet, 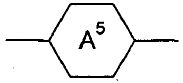 bei zweifachem Auftreten, bei jedem Auftreten jeweils unabhängig voneinander 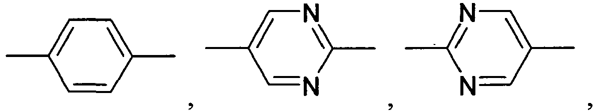 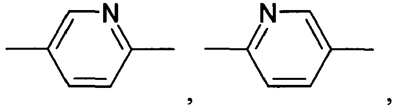 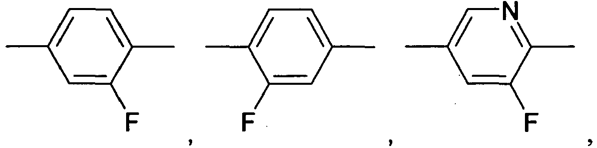 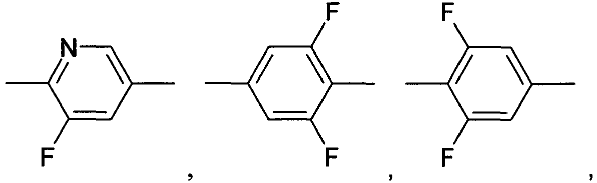 oder 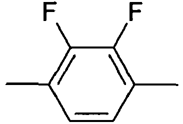 bedeuten, vorzugsweise einer oder mehrere von 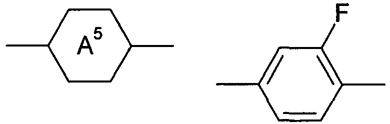 bedeuten,
- Z⁵¹ und Z⁵²: unabhängig voneinander und bei zweifachem Auftreten von Z⁵¹ auch diese unabhängig voneinander -CH₂CH₂-, -COO-, *trans-* -CH=CH-, *trans-* -CF=CF-, -CH₂O-, -CF₂O- oder eine Einfachbindung bedeuten, vorzugsweise eines oder mehrere von ihnen eine Einfachbindung bedeutet/bedeuten, und
- r: 0, 1 oder 2, vorzugsweise 0 oder 1, besonders bevorzugt 1, bedeutet.

Die Verbindungen der Formel V sind bevorzugt dielektrisch neutrale Verbindungen mit einer dielektrischen Anisotropie im Bereich von -1,5 bis 3.

Vorzugsweise enthalten die erfindungsgemäßen Medien eine oder mehrere Verbindungen ausgewählt aus der Gruppe der Verbindungen der Formeln V-1 und V-2 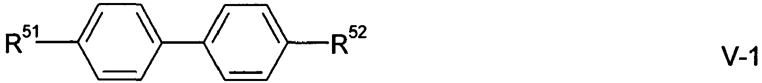 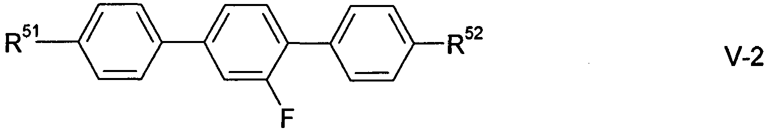 worin R⁵¹ und R⁵² die jeweiligen oben unter Formel V angegebenen Bedeutungen besitzen und R⁵¹ vorzugsweise Alkyl bedeutet und in Formel V-1 R⁵² vorzugsweise Alkenyl, vorzugsweise-(CH₂)₂-CH=CH-CH₃, und in Formel V-2 R⁵² vorzugsweise Alkyl oder Alkenyl, vorzugsweise -CH=CH₂, -(CH₂)₂-CH=CH₂ oder -(CH₂)₂-CH=CH-CH₃, bedeutet.

Vorzugsweise enthalten die erfindungsgemäßen Medien eine oder mehrere Verbindungen ausgewählt aus der Gruppe der Verbindungen der Formeln V-1 und V-2, worin R⁵¹ vorzugsweise *n*-Alkyl bedeutet und in Formel V-1 R⁵² vorzugsweise Alkenyl und in Formel V-2 R⁵² vorzugsweise *n*-Alkyl bedeutet.

In einer bevorzugten Ausführungsform enthalten die erfindungsgemäßen Medien eine oder mehrere Verbindungen der Formel V-1, stärker bevorzugt ihrer Unterformel PP-n-2Vm, noch stärker bevorzugt der Formel PP-1-2V1. Die Definitionen dieser Abkürzungen (Akronyme) sind unten in Tabelle D angegeben, bzw. aus den Tabellen A bis C zu ersehen.

In einer bevorzugten Ausführungsform enthalten die erfindungsgemäßen Medien eine oder mehrere Verbindungen der Formel V-2, stärker bevorzugt ihrer Unterformeln PGP-n-m, PGP-n-V, PGP-n-2Vm, PGP-n-2V und PGP-n-2Vm, noch stärker bevorzugt ihrer Unterformeln PGP-3-m, PGP-n-2V und PGP-n-V1, ganz bevorzugt ausgewählt aus den Formeln PGP-3-2, PGP-3-3, PGP-3-4, PGP-3-5, PGP-1-2V, PGP-2-2V und PGP-3-2V. Die Definitionen dieser Abkürzungen (Akronyme) sind ebenfalls unten in Tabelle D angegeben, bzw. aus den Tabellen A bis C zu ersehen.

Alternativ oder zusätzlich zu den Verbindungen der Formeln II und/oder III können die Medien gemäß der vorliegenden Erfindung eine oder mehrere dielektrisch positive Verbindungen der Formel VI enthalten 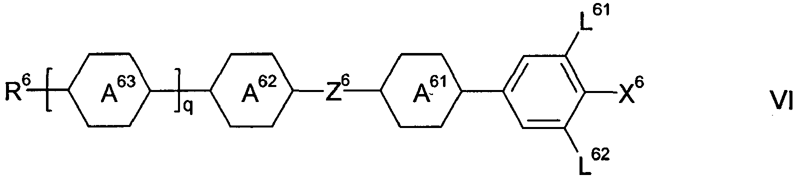 worin
- R⁶: Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugsweise Alkyl oder Alkenyl bedeutet, 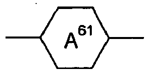 bis 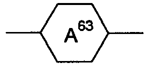 unabhängig voneinander 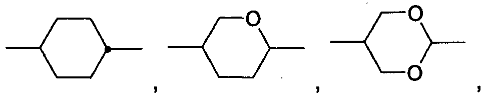 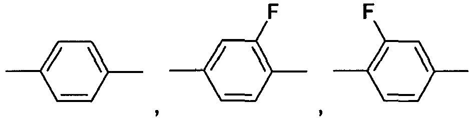 oder 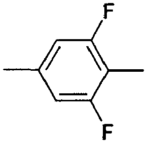 bedeuten,
- L⁶¹ und L⁶²: unabhängig voneinander H oder F bedeuten, vorzugsweise L⁶¹ F bedeutet,
- X⁶: Halogen, halogeniertes Alkyl oder Alkoxy mit 1 bis 3 C-Atomen oder halogeniertes Alkenyl oder Alkenyloxy mit 2 oder 3 C-Atomen, vorzugsweise F, Cl, -OCF₃ oder -CF₃, ganz bevorzugt F, Cl oder -OCF₃ bedeutet,
- Z⁶: -CH₂CH₂-, -CF₂CF₂-, -COO-, *trans-* -CH=CH-, *trans-*-CF=CF-, -CH₂O- oder -CF₂O-, vorzugsweise -CH₂CH₂-, -COO- oder *trans-* -CH=CH- und ganz bevorzugt-COO- oder *trans-* -CH=CH- bedeutet und
- q: 0 oder 1 bedeutet.

Vorzugsweise enthalten die Medien gemäß der vorliegenden Erfindung eine oder mehrere Verbindungen der Formel VI, vorzugsweise ausgewählt aus der Gruppe der Verbindungen der Formeln VI-1 und VI-2 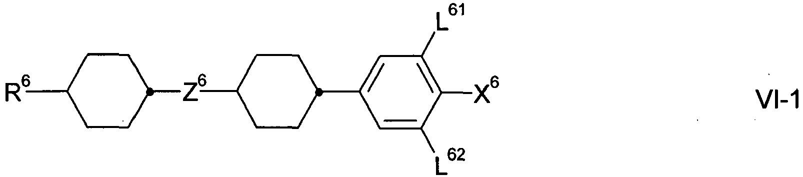 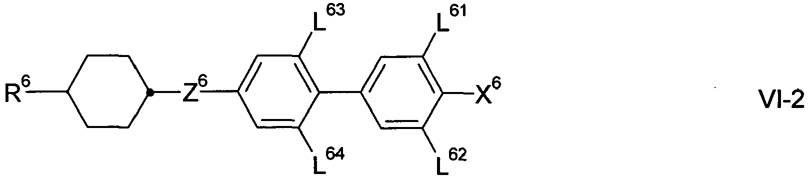 worin die Parameter die jeweiligen oben angegebenen Bedeutungen besitzen und die Parameter L⁶³ und L⁶⁴ unabhängig voneinander und von den anderen Parametern H oder F bedeuten und Z⁶ vorzugsweise -CH₂-CH₂- bedeutet.

Vorzugsweise sind die Verbindungen der Formel VI-1 ausgewählt aus der Gruppe der Verbindungen der Formeln VI-1a und VI-1b 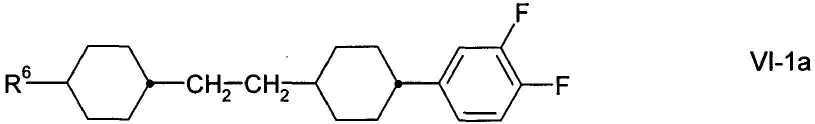 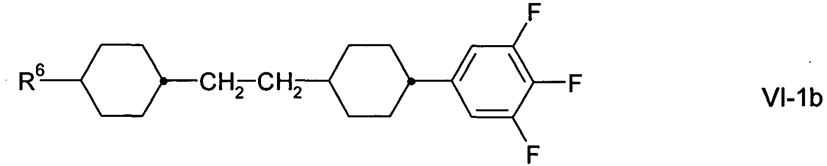 worin R⁶ die oben angegebene Bedeutung besitzt.

Vorzugsweise sind die Verbindungen der Formel VI-2 ausgewählt aus der Gruppe der Verbindungen der Formeln VI-2a bis VI-2d 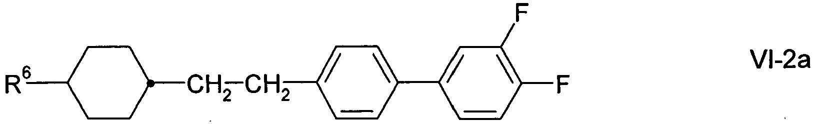 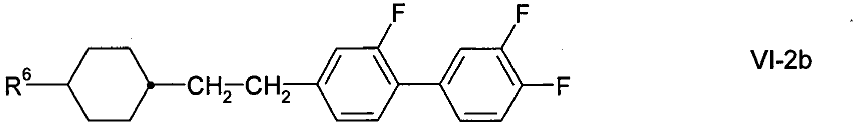 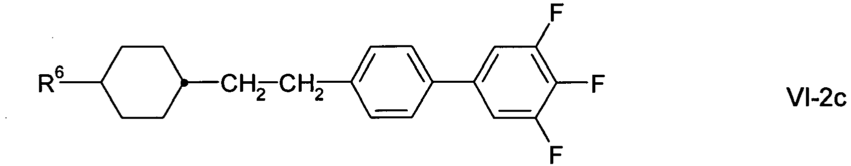 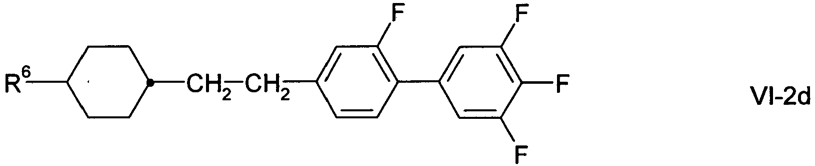 worin R⁶ die oben angegebene Bedeutung besitzt.

Zusätzlich können die Flüssigkristallmedien gemäß der vorliegenden Erfindung eine oder mehrere Verbindungen der Formel VII 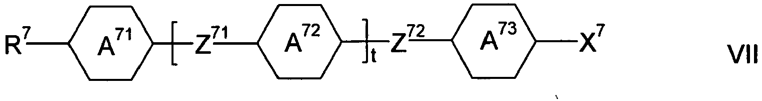 worin
- R⁷: die oben unter Formel II für R² angegebene Bedeutung besitzt,
einer der Ringe von 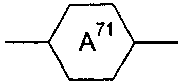 bis 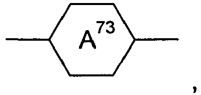 der vorhanden ist, 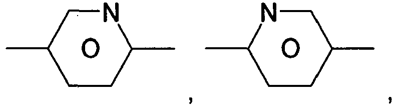 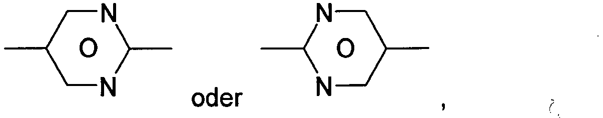 vorzugsweise 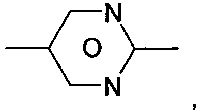 vorzugsweise 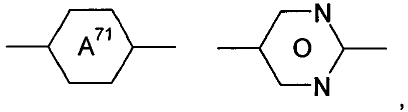 und die anderen dieselbe Bedeutung besitzen oder unabhängig voneinander 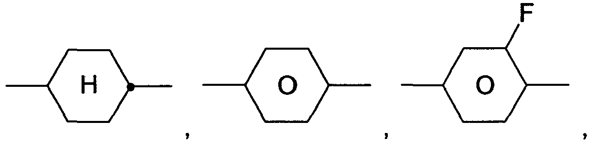 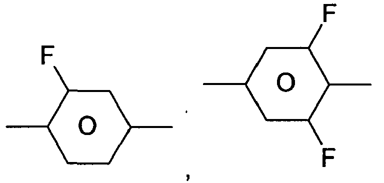 oder 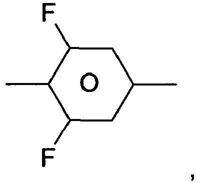 vorzugsweise 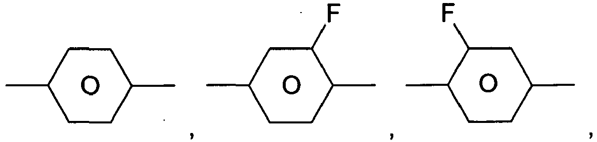 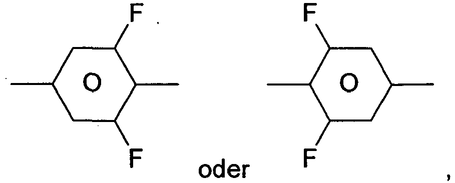
- Z⁷¹ und Z⁷²: unabhängig voneinander -CH₂CH₂-, -COO-, *trans-*-CH=CH-, *trans-* -CF=CF-, -CH₂O-, -CF₂O- oder eine Einfachbindung bedeuten, vorzugsweise eines oder mehrere von ihnen eine Einfachbindung bedeutet/ bedeuten und ganz bevorzugt beide eine Einfachbindung,
- t: 0, 1 oder 2, vorzugsweise 0 oder 1, stärker bevorzugt 1 bedeutet, und
- X⁷: die oben unter Formel II für X² angegebene Bedeutung besitzt oder alternativ unabhängig von R⁷ eine der für R⁷ angegebenen Bedeutungen besitzen kann,
enthalten.

Die Verbindungen der Formel VII sind bevorzugt dielektrisch positive Verbindungen.

Zusätzlich können die Flüssigkristallmedien gemäß der vorliegenden Erfindung eine oder mehrere Verbindungen der Formel VIII 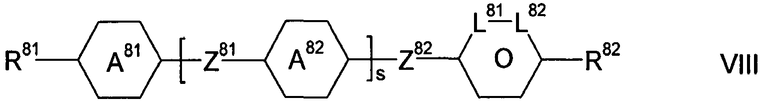 worin
- R⁸¹ und R⁸²: unabhängig voneinander die oben unter Formel II für R² angegebene Bedeutung besitzen und 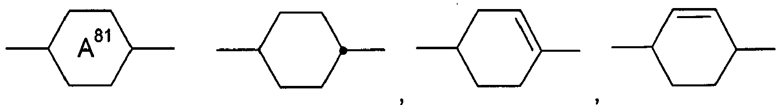 oder 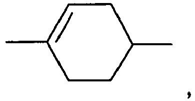 vorzugsweise 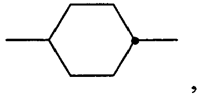 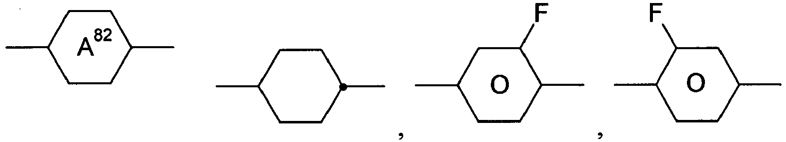 oder 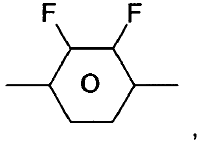
- Z⁸¹ und Z⁸²: unabhängig voneinander -CH₂CH₂-, -COO-, *trans-*-CH=CH-, *trans-* -CF=CF-, -CH₂O-, -CF₂O- oder eine Einfachbindung, vorzugsweise eines oder mehrere von ihnen eine Einfachbindung und ganz bevorzugt beide eine Einfachbindung,
- L⁸¹ und L⁸²: unabhängig voneinander C-F oder N, vorzugsweise einer von L⁸¹ und L⁸² oder beide C-F und ganz bevorzugt beide C-F und
- s: 0 oder 1 bedeutet, enthalten.

Die Verbindungen der Formel VIII sind bevorzugt dielektrisch negative Verbindungen.

Vorzugsweise enthalten die flüssigkristallinen Medien gemäß der vorliegenden Erfindung eine oder mehrere Verbindungen ausgewählt aus der Gruppe der Verbindungen der Formeln I bis VIII, vorzugsweise der Formeln I bis VII und stärker bevorzugt der Formeln I und II und/oder III und/oder IV und/oder VI. Besonders bevorzugt bestehen sie überwiegend, noch stärker bevorzugt bestehen sie im Wesentlichen und ganz bevorzugt bestehen sie vollständig daraus.

In dieser Anmeldung bedeutet "enthalten" im Zusammenhang mit Zusammensetzungen, dass die betreffende Entität, d.h. das Medium oder die Komponente, die die angegebene Komponente oder Komponenten oder Verbindung oder Verbindungen enthält, vorzugsweise in einer Gesamtkonzentration von 10 % oder mehr und ganz bevorzugt von 20 % oder mehr.

"Überwiegend bestehen aus" bedeutet in diesem Zusammenhang, dass die betreffende Entität 55 % oder mehr, vorzugsweise 60 % oder mehr und ganz bevorzugt 70 % oder mehr der angegebenen Komponente oder Komponenten oder Verbindung oder Verbindungen enthält.

"Im Wesentlichen bestehen aus" bedeutet in diesem Zusammenhang, dass die betreffende Entität 80 % oder mehr, vorzugsweise 90 % oder mehr und ganz bevorzugt 95 % oder mehr der angegebenen Komponente oder Komponenten oder Verbindung oder Verbindungen enthält.

"Nahezu vollständig bestehen aus", bzw. "vollständig bestehen aus" bedeutet in diesem Zusammenhang, dass die betreffende Entität 98 % oder mehr, vorzugsweise 99 % oder mehr und ganz bevorzugt 100 % der angegebenen Komponente oder Komponenten oder Verbindung oder Verbindungen enthält.

Auch andere mesogene Verbindungen, die oben nicht explizit genannt sind, können gegebenenfalls und in vorteilhafter Weise in den Medien gemäß der vorliegenden Erfindung verwendet werden. Solche Verbindungen sind dem Fachmann bekannt.

Die Flüssigkristallmedien gemäß der vorliegenden Erfindung weisen bevorzugt einen Klärpunkt von 70°C oder mehr, stärker bevorzugt von 75°C oder mehr, besonders bevorzugt von 80°C oder mehr und ganz besonders bevorzugt von 85°C oder mehr, auf.

Vorzugsweise erstreckt sich die nematische Phase der erfindungsgemäßen Medien mindestens von 0°C oder weniger bis 70°C oder mehr, stärker bevorzugt mindestens von -20°C oder weniger bis 75°C oder mehr, ganz bevorzugt mindestens von -30°C oder weniger bis 75°C oder mehr und insbesondere mindestens von -40°C oder weniger bis 80°C oder mehr.

Das Δε des Flüssigkristallmediums gemäß der Erfindung bei 1 kHz und 20 °C beträgt vorzugsweise 2 oder mehr, stärker bevorzugt 3 oder mehr, noch stärker bevorzugt 4 oder mehr und ganz bevorzugt 6 oder mehr. Bevorzugt beträgt Δε 30 oder weniger, insbesondere bevorzugt beträgt Δε 20 oder weniger.

Das Δn der Flüssigkristallmedien gemäß der vorliegenden Erfindung liegt bei 589 nm (Na^{D}) und 20 °C vorzugsweise im Bereich von 0,060 oder mehr bis 0,300 oder weniger, bevorzugt im Bereich von 0,070 oder mehr bis 0,150 oder weniger, stärker bevorzugt im Bereich von 0,080 oder mehr bis 0,140 oder weniger, noch stärker bevorzugt im Bereich von 0,090 oder mehr bis 0,135 oder weniger und ganz besonders bevorzugt im Bereich von 0,100 oder mehr bis 0,130 oder weniger.

In einer ersten bevorzugten Ausführungsform der vorliegenden Anmeldung beträgt das Δn der Flüssigkristallmedien gemäß der vorliegenden Erfindung vorzugsweise 0,080 oder mehr bis 0,120 oder weniger, stärker bevorzugt im Bereich von 0,090 oder mehr bis 0,110 oder weniger und ganz besonderes bevorzugt im Bereich von 0,095 oder mehr bis 0,105 oder weniger, während Δε vorzugsweise im Bereich von 6 oder mehr bis 11 oder weniger, vorzugsweise im Bereich von 7 oder mehr bis 10 oder weniger und besonders bevorzugt im Bereich von 8 oder mehr bis 9 oder weniger liegt.

In dieser Ausführungsform erstreckt sich die nematische Phase der erfindungsgemäßen Medien vorzugsweise mindestens von -20°C oder weniger bis 70°C oder mehr, stärker bevorzugt mindestens von -20°C oder weniger bis 70°C oder mehr, ganz bevorzugt mindestens von -30°C oder weniger bis 70°C oder mehr und insbesondere mindestens von - 40°C oder weniger bis 70°C oder mehr.

In einer zweiten bevorzugten Ausführungsform der vorliegenden Anmeldung beträgt das Δn der Flüssigkristallmedien gemäß der vorliegenden Erfindung vorzugsweise 0,060 oder mehr bis 0,300 oder weniger, bevorzugt liegt es im Bereich von 0,100 oder mehr bis 0,140 oder weniger, stärker bevorzugt im Bereich von 0,110 oder mehr bis 0,130 oder weniger und ganz besonderes bevorzugt im Bereich von 0,115 oder mehr bis 0,125 oder weniger, während Δε vorzugsweise im Bereich von 7 oder mehr bis 13 oder weniger, vorzugsweise im Bereich von 9 oder mehr bis 20 oder weniger und besonders bevorzugt im Bereich von 10 oder mehr bis 17 oder weniger liegt.

In dieser Ausführungsform erstreckt sich die nematische Phase der erfindungsgemäßen Medien vorzugsweise mindestens von -20°C oder weniger bis 80°C oder mehr, stärker bevorzugt mindestens von -20°C oder weniger bis 85°C oder mehr, ganz bevorzugt mindestens von -30°C oder weniger bis 80°C oder mehr und insbesondere mindestens von - 40°C oder weniger bis 85°C oder mehr.

Gemäß der vorliegenden Erfindung werden die Verbindungen der Formeln I zusammen vorzugsweise in den Medien in einer Gesamtkonzentration von 1 % bis 50 %, stärker bevorzugt von 1 % bis 30 %, stärker bevorzugt von 2 % bis 30 %, stärker bevorzugt von 3 % bis 30 % und ganz bevorzugt von 5 % bis 25 % der Gesamtmischung verwendet.
Die Verbindungen ausgewählt aus der Gruppe der Formeln II und III werden vorzugsweise in einer Gesamtkonzentration von 2 % bis 60 %, stärker bevorzugt von 3 % bis 35 %, noch stärker bevorzugt von 4 % bis 20 % und ganz bevorzugt von 5 % bis 15 % der Gesamtmischung verwendet.

Die Verbindungen der Formel IV werden vorzugsweise in einer Gesamtkonzentration von 5 % bis 70 %, stärker bevorzugt von 20 % bis 65 %, noch stärker bevorzugt von 30 % bis 60 % und ganz bevorzugt von 40 % bis 55 % der Gesamtmischung verwendet.

Die Verbindungen der Formel V werden vorzugsweise in einer Gesamtkonzentration von 0 % bis 30 %, stärker bevorzugt von 0 % bis 15 % und ganz bevorzugt von 1 % bis 10 % der Gesamtmischung verwendet.
Die Verbindungen der Formel VI werden vorzugsweise in einer Gesamtkonzentration von 0 % bis 50 %, stärker bevorzugt von 1 % bis 40 %, noch stärker bevorzugt von 5 % bis 30 % und ganz bevorzugt von 10 % bis 20 % der Gesamtmischung verwendet.

Gegebenenfalls können die erfindungsgemäßen Medien weitere Flüssigkristallverbindungen enthalten, um die physikalischen Eigenschaften einzustellen. Solche Verbindungen sind dem Fachmann bekannt. Ihre Konzentration in den Medien gemäß der vorliegenden Erfindung beträgt vorzugsweise 0 % bis 30 %, stärker bevorzugt 0,1 % bis 20 % und ganz bevorzugt 1 % bis 15 %.

Die Konzentration der Verbindung der Formel CC-3-V in den erfindungsgemäßen Medien kann in einer bevorzugten Ausführungsform 50 % bis 65 % betragen, besonders bevorzugt 55 % bis 60 %.

Die Flüssigkristallmedien enthalten vorzugsweise insgesamt 50 % bis 100 %, stärker bevorzugt 70 % bis 100 % und ganz bevorzugt 80 % bis 100 % und insbesondere 90 % bis 100 % der Verbindungen der Formeln I bis VII, vorzugsweise ausgewählt aus der Gruppe der Verbindungen der Formeln I-1, I-2 und II bis VI, besonders bevorzugt der Formeln I bis V, insbesondere der Formeln I-1, I-2, II, III, IV, V, und VII und ganz besonders bevorzugt der Formeln I-1, I-2, II, III, IV und V. Vorzugsweise bestehen sie überwiegend daraus und ganz bevorzugt bestehen sie nahezu vollständig daraus. In einer bevorzugten Ausführungsform enthalten die Flüssigkristallmedien jeweils eine oder mehrere Verbindungen von jeder dieser Formeln.

In der vorliegenden Anmeldung beschreibt der Ausdruck dielektrisch positiv Verbindungen oder Komponenten mit Δε > 3,0, dielektrisch neutral mit -1,5 ≤ Δε ≤ 3,0 und dielektrisch negativ mit Δε < -1,5. Δε wird bei einer Frequenz von 1 kHz und 20°C bestimmt. Die dielektrische Anisotropie der jeweiligen Verbindung wird aus den Ergebnissen einer Lösung von 10 % der jeweiligen einzelnen Verbindung in einer nematischen Host-Mischung bestimmt. Wenn die Löslichkeit der jeweiligen Verbindung in der Host-Mischung weniger als 10 % beträgt, wird die Konzentration auf 5 % reduziert. Die Kapazitäten der Testmischungen werden sowohl in einer Zelle mit homeotroper als auch mit homogener Orientierung bestimmt. Die Schichtdicke beträgt bei beiden Zelltypen ca. 20 µm. Die angelegte Spannung ist eine Rechteckwelle mit einer Frequenz von 1 kHz und einem Effektivwert von typischerweise 0,5 V bis 1,0 V, wird jedoch stets so ausgewählt, dass sie unterhalb der kapazitiven Schwelle für die jeweilige Testmischung liegt.

Δε ist als (ε_{∥} - ε_{⊥}) definiert, während ε_{Drchschn.} (ε_{∥} + 2 ε_{⊥}) / 3 ist.

Als Host-Mischung wird für dielektrisch positive Verbindungen die Mischung ZLI-4792 und für dielektrisch neutrale sowie für dielektrisch negative Verbindungen die Mischung ZLI-3086 verwendet, beide von Merck KGaA, Deutschland. Die absoluten Werte der dielektrischen Konstanten der Verbindungen werden aus der Änderung der jeweiligen Werte der Host-Mischung bei Zugabe der interessierenden Verbindungen bestimmt. Die Werte werden auf eine Konzentration der interessierenden Verbindungen von 100 % extrapoliert.

Komponenten, die bei der Messtemperatur von 20 °C eine nematische Phase aufweisen, werden als solche gemessen, alle anderen werden wie Verbindungen behandelt.

Der Ausdruck Schwellenspannung bezeichnet in der vorliegenden Anmeldung die optische Schwelle und ist für 10 % relativen Kontrast (V₁₀) angegeben, der Ausdruck Sättigungsspannung bezeichnet die optische Sättigung und ist für 90 % relativen Kontrast (V₉₀) angegeben, in beiden Fällen, soweit nicht ausdrücklich etwas anderes angegeben ist. Die kapazitive Schwellenspannung (Vo), auch Freedericks-Schwelle V_{Fr} genannt, wird nur verwendet, wenn dies ausdrücklich genannt ist.

Die in dieser Anmeldung angegebenen Parameterbereiche schließen sämtlich die Grenzwerte ein, wenn nicht ausdrücklich etwas anderes angegeben ist.

Die unterschiedlichen für verschiedene Bereiche von Eigenschaften angegebenen oberen und unteren Grenzwerte ergeben in Kombination miteinander zusätzliche bevorzugte Bereiche.

In der gesamten Anmeldung gelten, wenn nicht ausdrücklich anders angegeben, die folgenden Bedingungen und Definitionen. Alle Konzentrationen sind in Massenprozent angegeben und beziehen sich jeweils auf die Gesamtmischung, alle Temperaturen und alle Temperaturunterschiede sind in Grad Celsius bzw. Differenzgrad angegeben. Alle physikalischen Eigenschaften werden nach "Merck Liquid Crystals, Physical Properties of Liquid Crystals", Stand Nov. 1997, Merck KGaA, Deutschland, bestimmt und sind für eine Temperatur von 20 °C aufgeführt, wenn nicht ausdrücklich anders angegeben. Die optische Anisotropie (Δn) wird bei einer Wellenlänge von 589,3 nm bestimmt. Die dielektrische Anisotropie (Δε) wird bei einer Frequenz von 1 kHz bestimmt. Die Schwellenspannungen sowie alle anderen elektrooptischen Eigenschaften werden mit bei Merck KGaA, Deutschland, hergestellten Testzellen bestimmt. Die Testzellen für die Bestimmung von Δε besitzen eine Schichtdicke von circa 20 µm. Bei der Elektrode handelt es sich um eine kreisförmige ITO-Elektrode mit einer Fläche von 1,13 cm² und einem Schutzring. Die Ausrichtungsschichten sind SE-1211 von Nissan Chemicals, Japan, für homöotrope Ausrichtung (ε_{∥}) und Polyimid AL-1054 von Japan Synthetic Rubber, Japan, für homogene Ausrichtung (ε_{⊥}). Die Bestimmung der Kapazitäten erfolgt mit einem Frequenzgang-Analysegerät Solatron 1260 unter Verwendung einer Sinuswelle mit einer Spannung von 0,3 Vᵣₘₛ. Als Licht wird bei den elektrooptischen Messungen weißes Licht verwendet. Dabei wird ein Aufbau mit einem im Handel erhältlichen Gerät DMS der Fa. Autronic-Melchers, Germany verwendet. Die charakteristischen Spannungen wurden unter senkrechter Beobachtung bestimmt. Die Schwellenspannung (V₁₀), "Mittgrau-Spannung" (V₅₀) und Sättigungsspannung (V₉₀) wurden für 10 %, 50 % bzw. 90 % relativen Kontrast bestimmt.

Die Flüssigkristallmedien gemäß der vorliegenden Erfindung können weitere Zusatzstoffe und chirale Dotierstoffe in den üblichen Konzentrationen beinhalten. Die Gesamtkonzentration dieser weiteren Bestandteile liegt im Bereich von 0 % bis 10 %, vorzugsweise 0,1 % bis 6 %, bezogen auf die Gesamtmischung. Die Konzentrationen der einzelnen verwendeten Verbindungen liegen vorzugsweise jeweils im Bereich von 0,1 % bis 3 %. Die Konzentration dieser und ähnlicher Zusatzstoffe wird bei der Angabe der Werte und Konzentrationsbereiche der Flüssigkristallkomponenten und -verbindungen der Flüssigkristallmedien in dieser Anmeldung nicht berücksichtigt.

Die erfindungsgemäßen Flüssigkristallmedien bestehen aus mehreren Verbindungen, vorzugsweise aus 3 bis 30, stärker bevorzugt aus 4 bis 20 und ganz bevorzugt aus 4 bis 16 Verbindungen. Diese Verbindungen werden auf herkömmliche Weise gemischt. In der Regel wird die gewünschte Menge der in der geringeren Menge verwendeten Verbindung in der in der größeren Menge verwendeten Verbindung gelöst. Liegt die Temperatur über dem Klärpunkt der in der höheren Konzentration verwendeten Verbindung, ist die Vervollständigung des Lösungsvorgangs besonders leicht zu beobachten. Es ist jedoch auch möglich, die Medien auf anderen üblichen Wegen, beispielsweise unter Verwendung von so genannten Vormischungen, bei denen es sich z.B. um homologe oder eutektische Mischungen von Verbindungen handeln kann, oder unter Verwendung von so genannten "Multi-Bottle"-Systemen, deren Bestandteile selbst gebrauchsfertige Mischungen sind, herzustellen.

Durch Zugabe geeigneter Zusatzstoffe können die Flüssigkristallmedien gemäß der vorliegenden Erfindung so modifiziert werden, dass sie in allen bekannten Arten von Flüssigkristallanzeigen verwendbar sind, entweder durch Verwendung der Flüssigkristallmedien als solcher, wie TN-, TN-AMD, ECB-AMD, VAN-AMD, IPS-AMD, FFS-AMD LCDs oder in Verbundsystemen, wie PDLC, NCAP, PN LCDs und speziell in ASM-PA LCDs.

Alle Temperaturen, wie z.B. der Schmelzpunkt T(K,N) bzw. T(K,S), der Übergang von der smektischen (S) zur nematischen (N) Phase T(S,N) und der Klärpunkt T (N,I) der Flüssigkristalle sind in Grad Celsius angegeben. Alle Temperaturdifferenzen sind in Differenzgraden angegeben.

In der vorliegenden Erfindung und insbesondere in den folgenden Beispielen sind die Strukturen der mesogenen Verbindungen durch Abkürzungen angegeben, die auch als Akronyme bezeichnet werden. In diesen Akronymen sind die chemischen Formeln unter Verwendung der folgenden Tabellen A bis C wie folgt abgekürzt. Alle Gruppen CₙH₂ₙ₊₁, CₘH₂ₘ₊₁ und CₗH₂ₗ₊₁ bzw. CₙH₂ₙ₋₁, CₘH₂ₘ₋₁ und CₗH₂ₗ₋₁ bedeuten geradkettiges Alkyl bzw. Alkenyl, vorzugsweise 1-E-Alkenyl, jeweils mit n, m bzw. I C-Atomen. In der Tabelle A werden die für die Ringelemente der Kernstrukturen der Verbindungen verwendeten Codes aufgeführt, während in der Tabelle B die Verknüpfungsgruppen gezeigt sind. Tabelle C gibt die Bedeutungen der Codes für die Endgruppen der linken bzw. rechten Seite. Die Akronyme werden aus den Codes für die Ringelemente mit optionalen Verknüpfungsgruppen, gefolgt von einem ersten Bindestrich und den Codes für die linke Endgruppe, sowie einem zweiten Bindestrich und den Codes für die rechts Endgruppe, zusammengesetzt. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 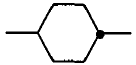 | | |
| **P** | 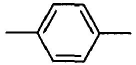 | | |
| **D** | 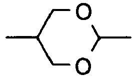 | **DI** | 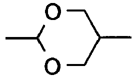 |
| **A** | 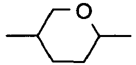 | **AI** | 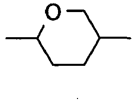 |
| **G** | 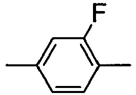 | **GI** | 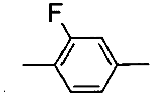 |
| **U** | 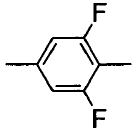 | **UI** | 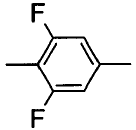 |
| **Y** | 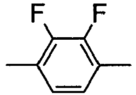 | | |
| **M** | 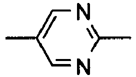 | **MI** | 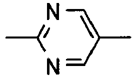 |
| **N** | 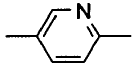 | **NI** | 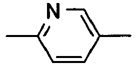 |
| **Np** | 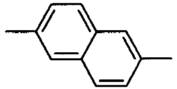 | **dH** | 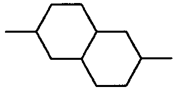 |
| **N3f** | 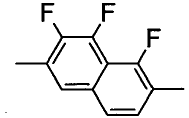 | **N3fl** | 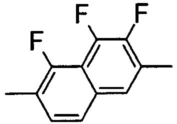 |
| **tH** | 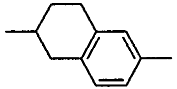 | **tHI** | 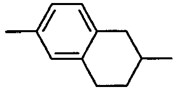 |
| **tH2f** | 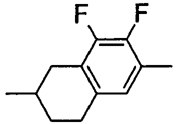 | **tH2fl** | 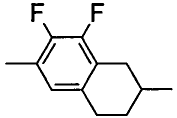 |
| **K** | 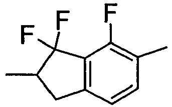 | **KI** | 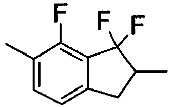 |
| **L** | 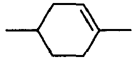 | **LI** | 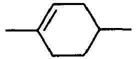 |
| **F** | 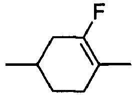 | **FI** | 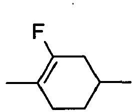 |
| **Nf** | 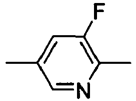 | **Nfl** | 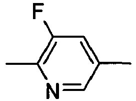 |

**Tabelle B: Verknüpfungsgruppen**

| | | | |
|---|---|---|---|
| **E** | -CH2CH2- | **Z** | -CO-O- |
| **V** | -CH=CH- | **ZI** | -O-CO- |
| **X** | -CF=CH- | **O** | -CH₂-O- |
| **XI** | -CH=CF- | **OI** | -O-CH₂- |
| **B** | -CF=CF- | **Q** | -CF₂-O- |
| **T** | -C≡C- | **QI** | -O-CF₂- |
| **W** | -CF₂CF₂- | | |

**Tabelle C: Endgruppen**

| **Linke Seite** | | **Rechte Seite** | |
|---|---|---|---|
| **Verwendung allein** | | | |
| **-n-** | CₙH₂ₙ₊₁- | **-n** | -CₙH₂ₙ₊₁ |
| **-nO-** | CₙH₂ₙ₊₁-O- | **-nO** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH-CₙH₂ₙ₊₁- | **-Vn** | -CH=CH-CₙH₂ₙ₊₁ |
| **-nVm-** | CₙH₂ₙ₊₁-CH=CH-CₘH₂ₘ- | **-nVm** | -CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O- | **-OM** | -OCFH₂ |
| **-DO-** | CF₂HO- | **-OD** | -OCF₂H |
| **-TO-** | CF₃O- | **-OT** | -OCF₃ |
| **-OXF-** | CF₂=CH-O- | **-OXF** | -O-CH=CF₂ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |

| **Verwendung zusammen miteinander und mit anderen** | | | |
|---|---|---|---|
| **-...A...-** | -C≡C- | **-...A...** | -C≡C- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |
| **-...X...-** | -CH=CF- | **-...X...** | -CH=CF- |
| **-...XI...-** | -CF=CH- | **-...XI...** | -CF=CH- |

worin n und m jeweils ganze Zahlen bedeuten und die drei Punkte "..." Platzhalter für andere Abkürzungen aus dieser Tabelle sind.

In der folgenden Tabelle werden Beispielstrukturen zusammen mit ihren jeweiligen Abkürzungen angegeben. Diese werden gezeigt, um die Bedeutung der Regeln für die Abkürzungen zu demonstrieren. Weiterhin stellen sie Verbindungen dar, die vorzugsweise verwendet werden.

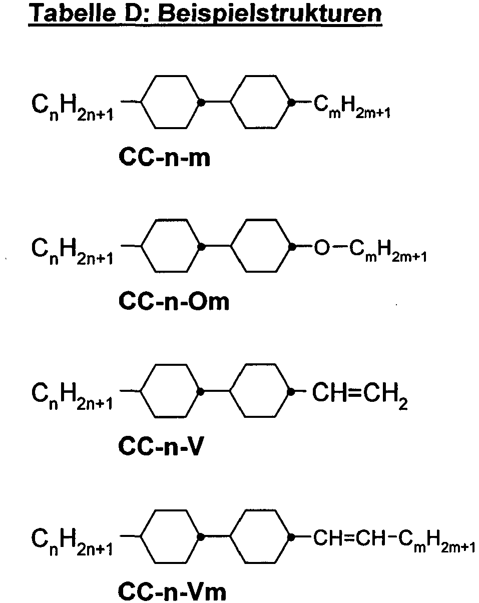

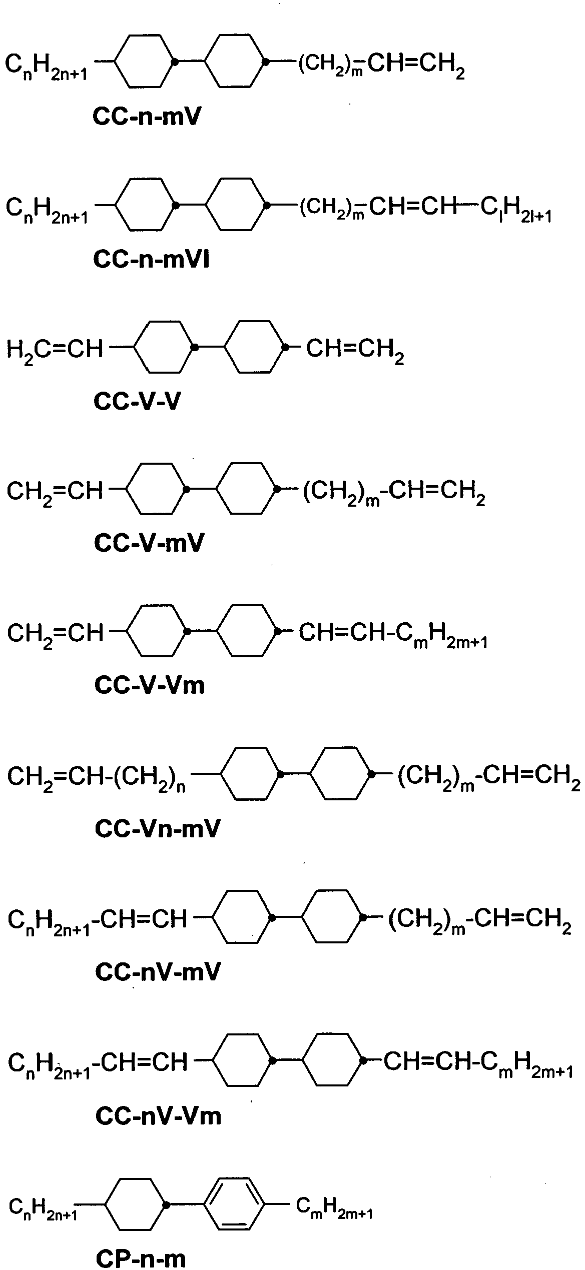

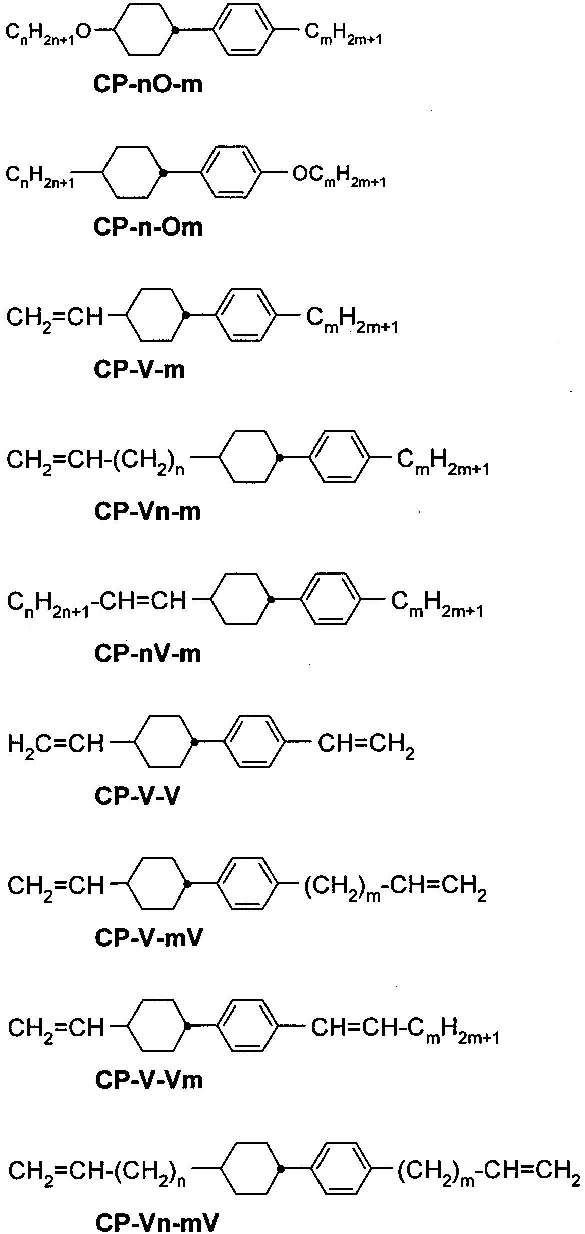

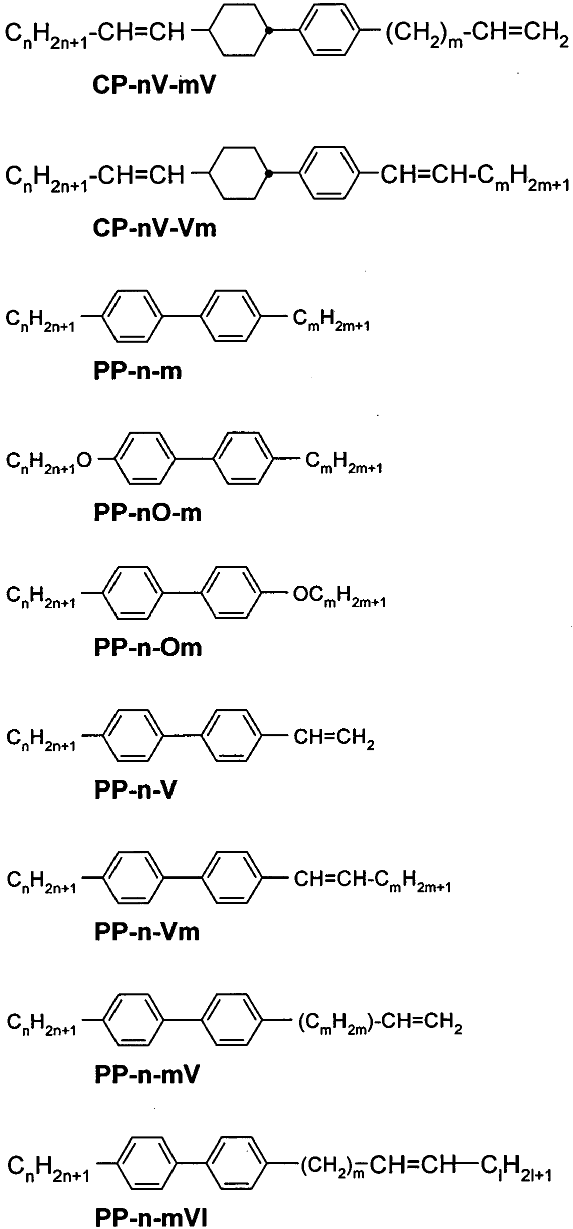

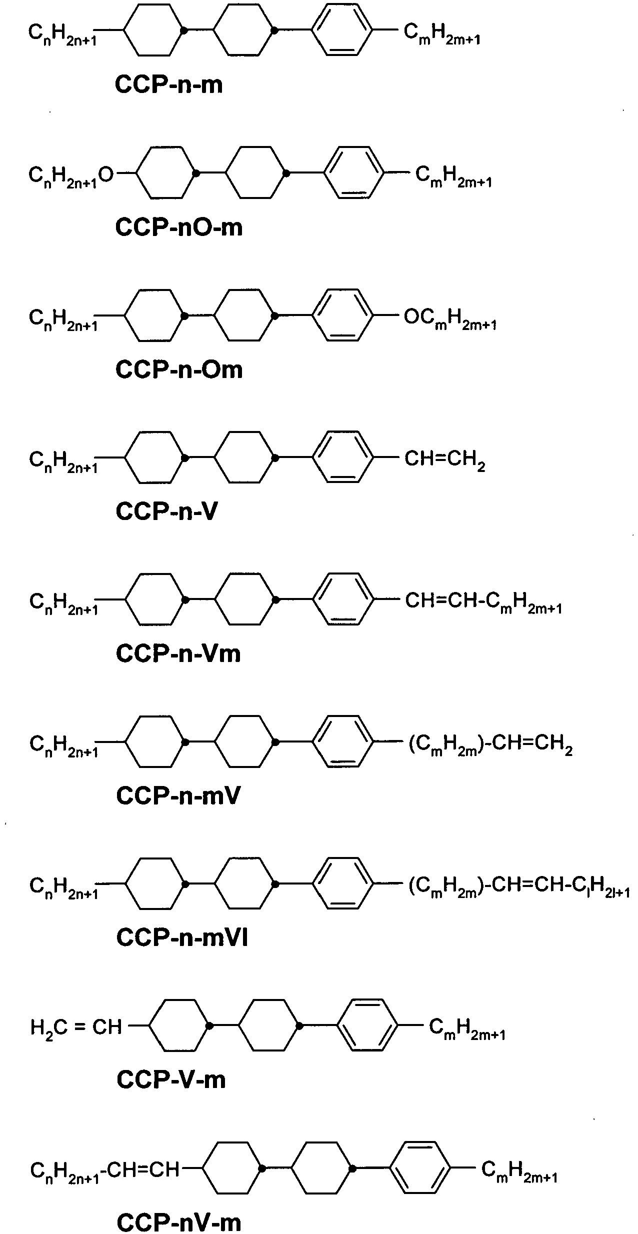

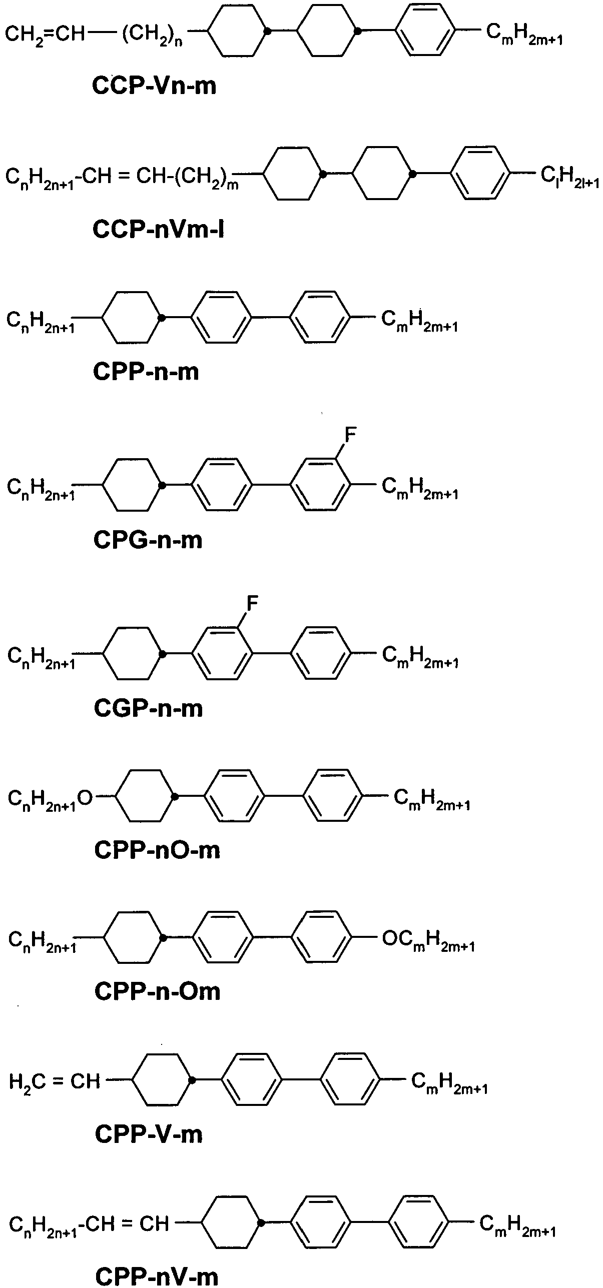

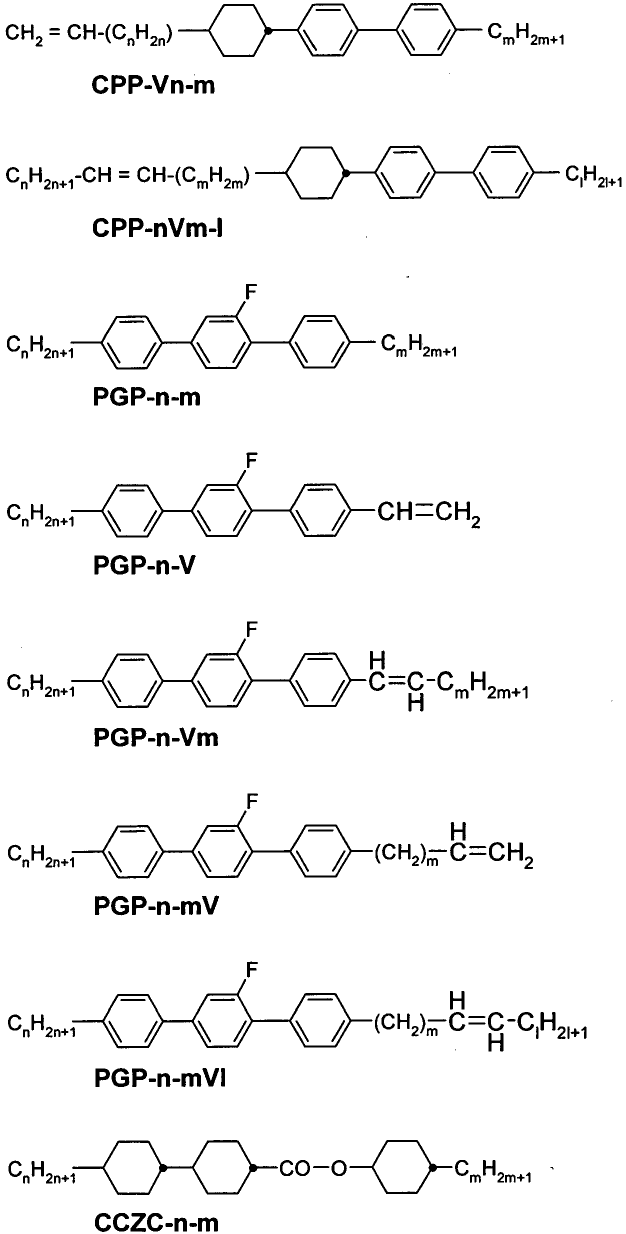

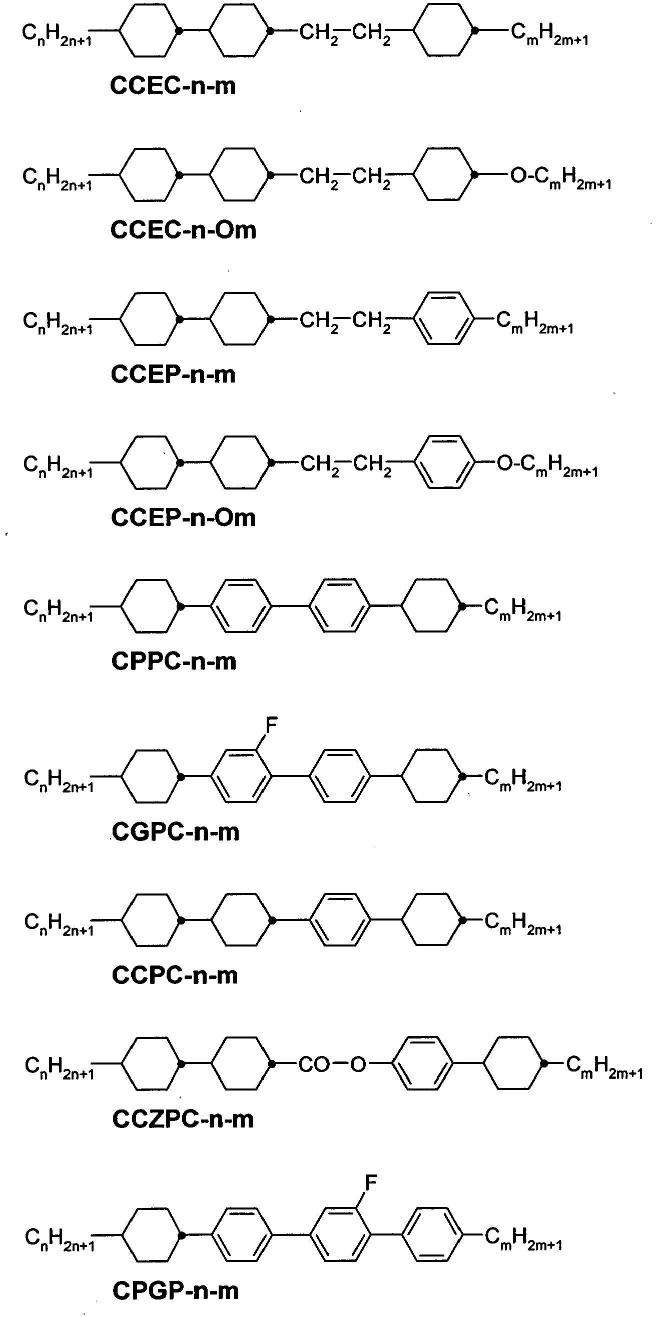

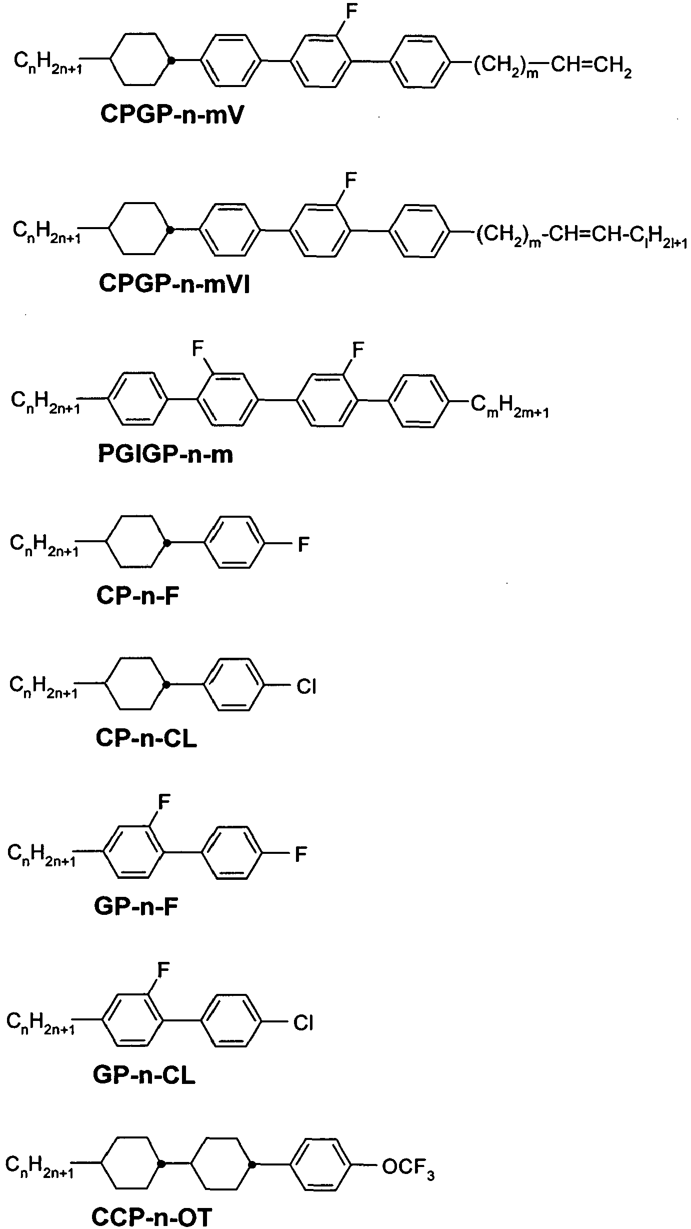

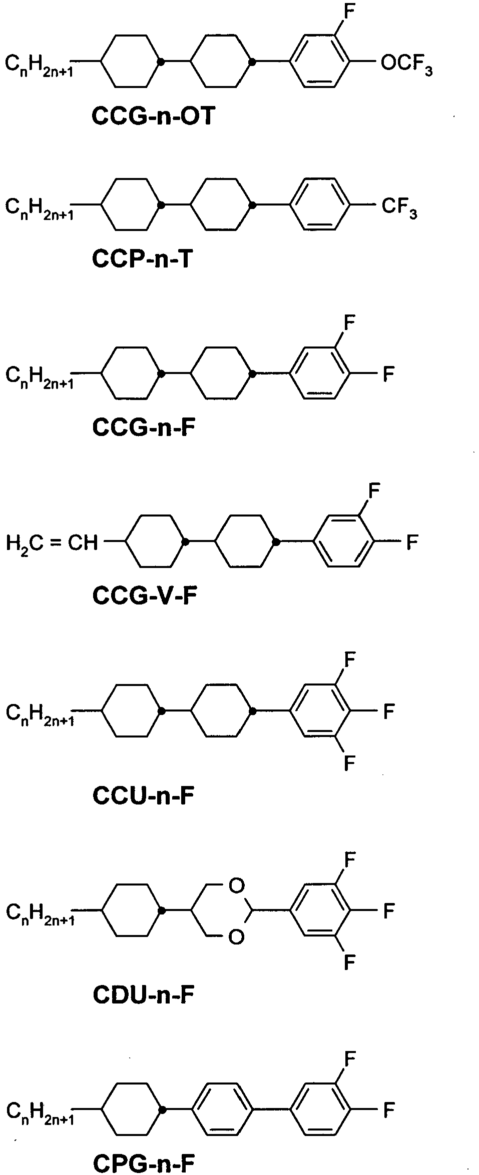

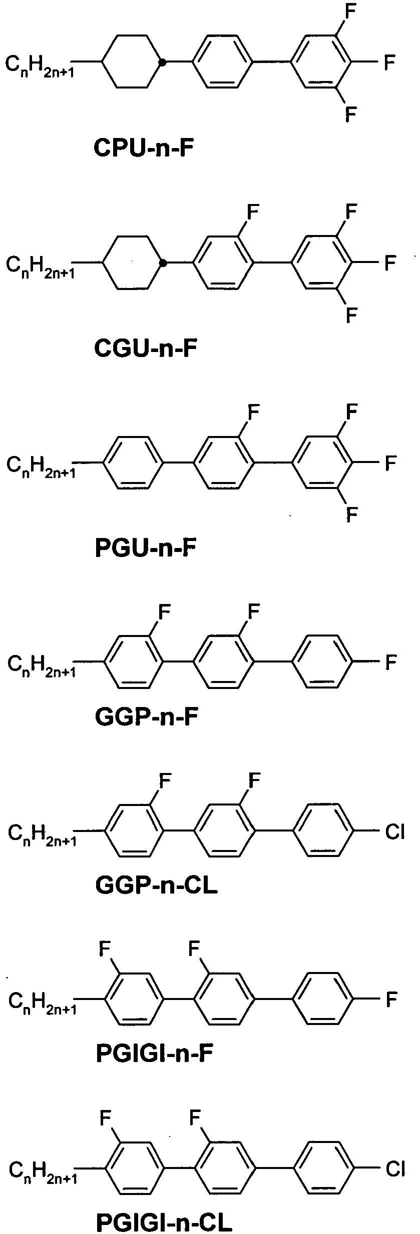

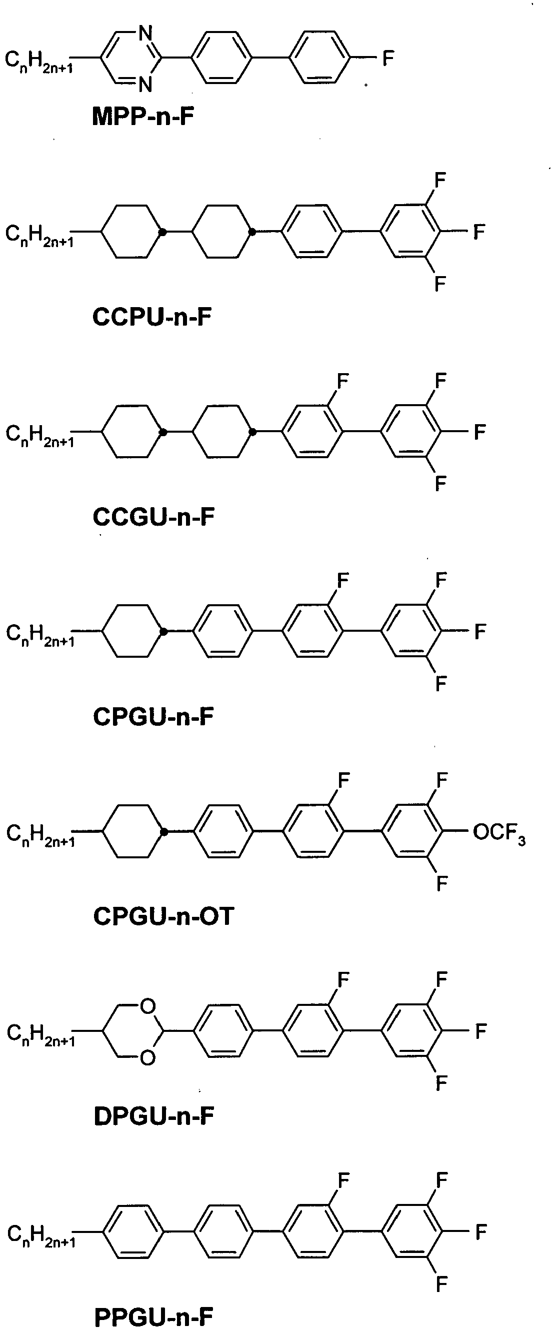

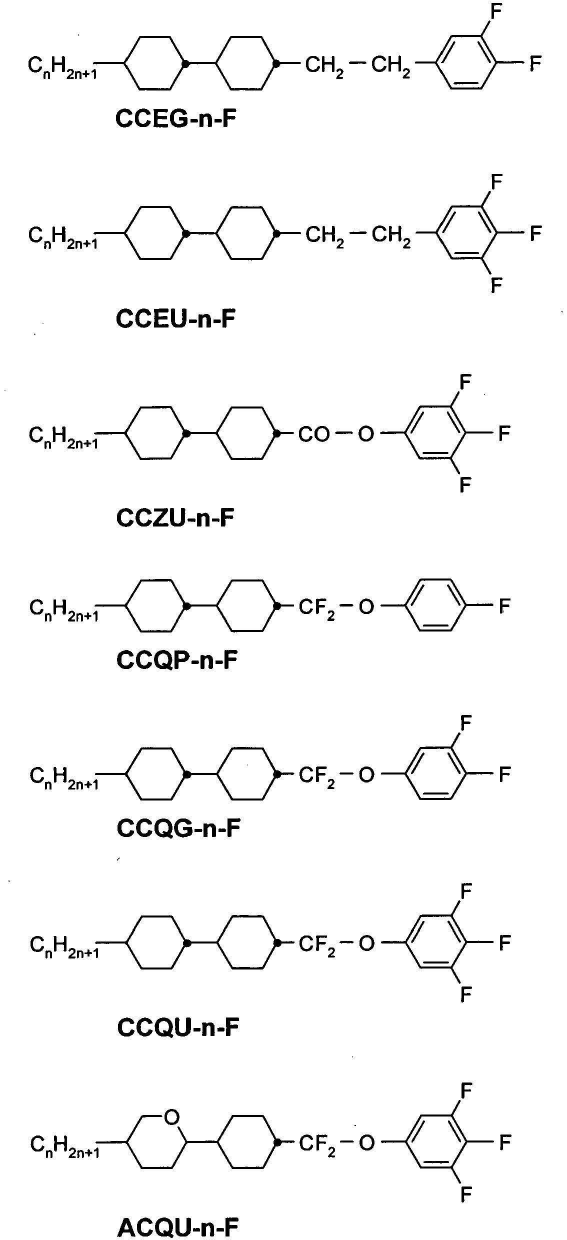

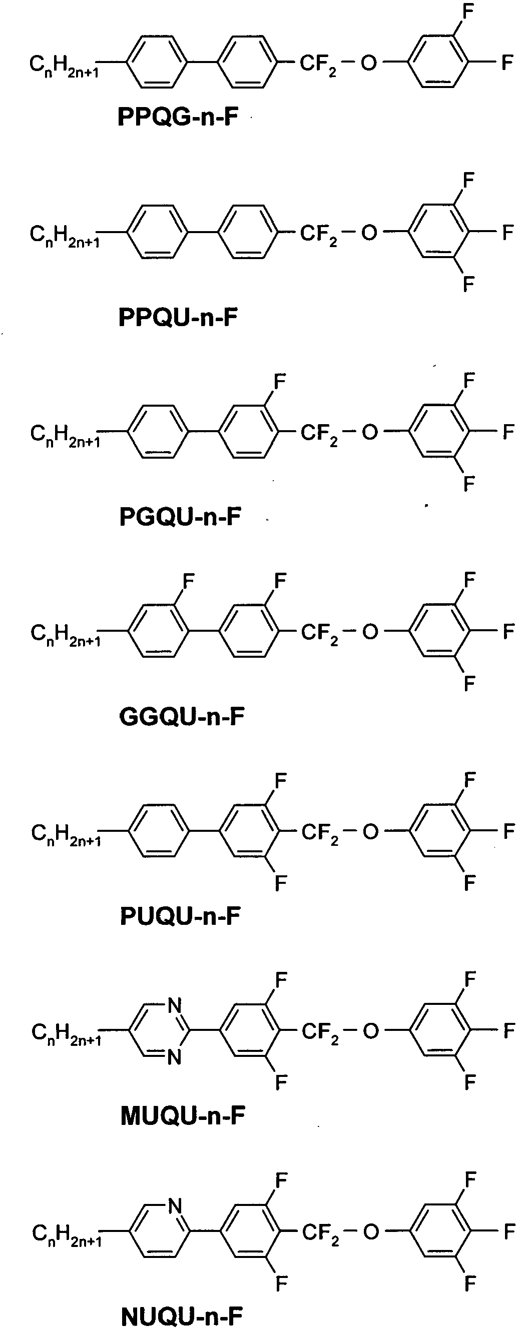

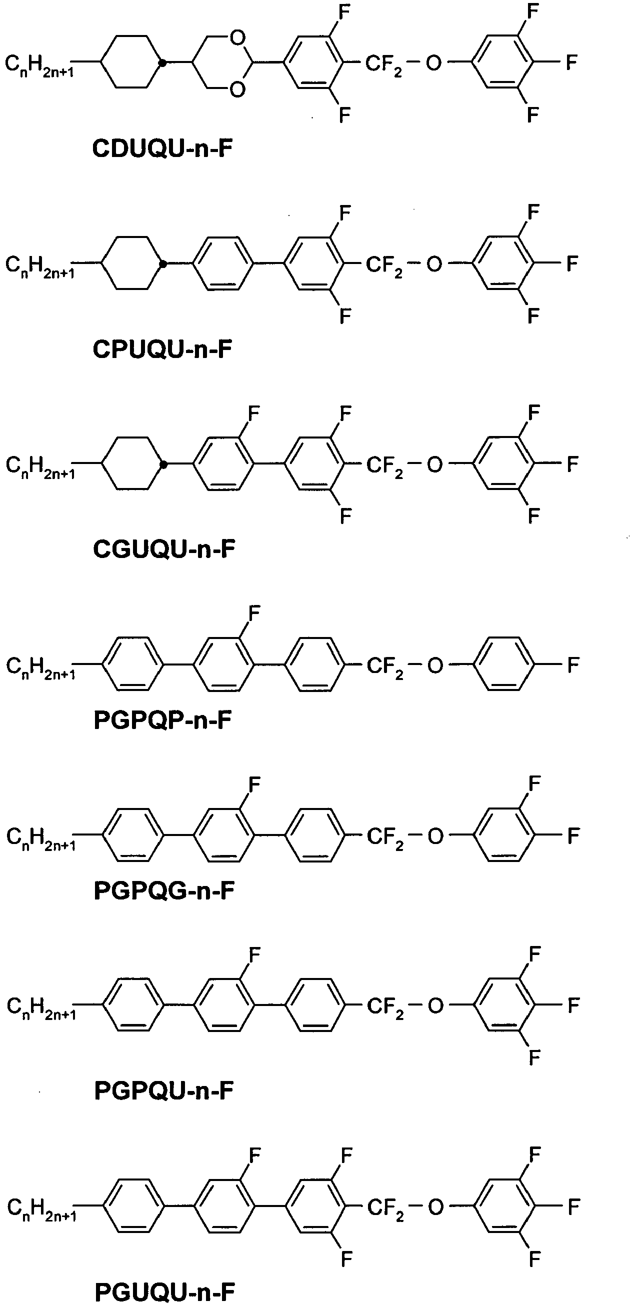

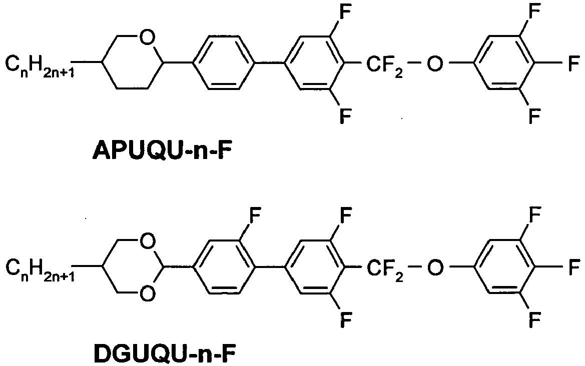

worin n, m und I bevorzugt unabhängig voneinander 1 bis 7 bedeuten.

In der folgenden Tabelle, Tabelle E, sind Beispielverbindungen zusammengestellt, die in den mesogenen Medien gemäß der vorliegenden Erfindung als zusätzliche Stabilisatoren verwendet werden können.

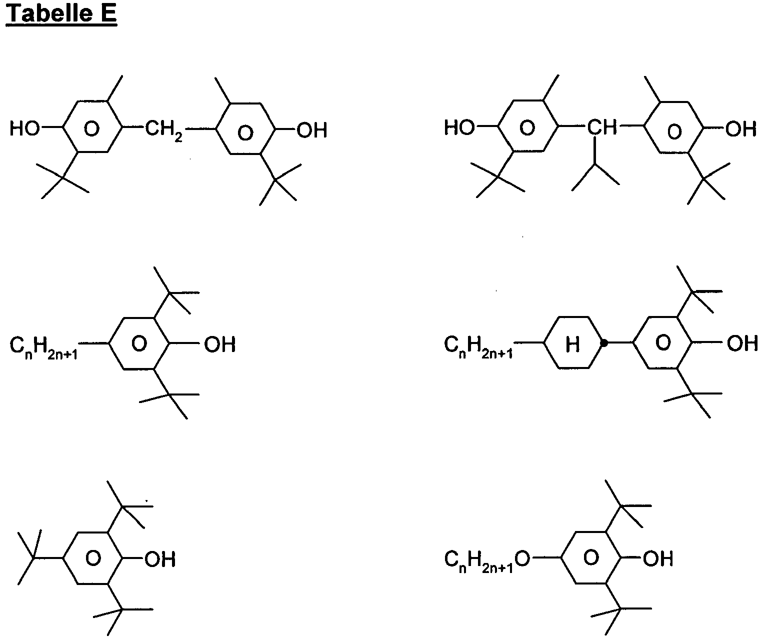

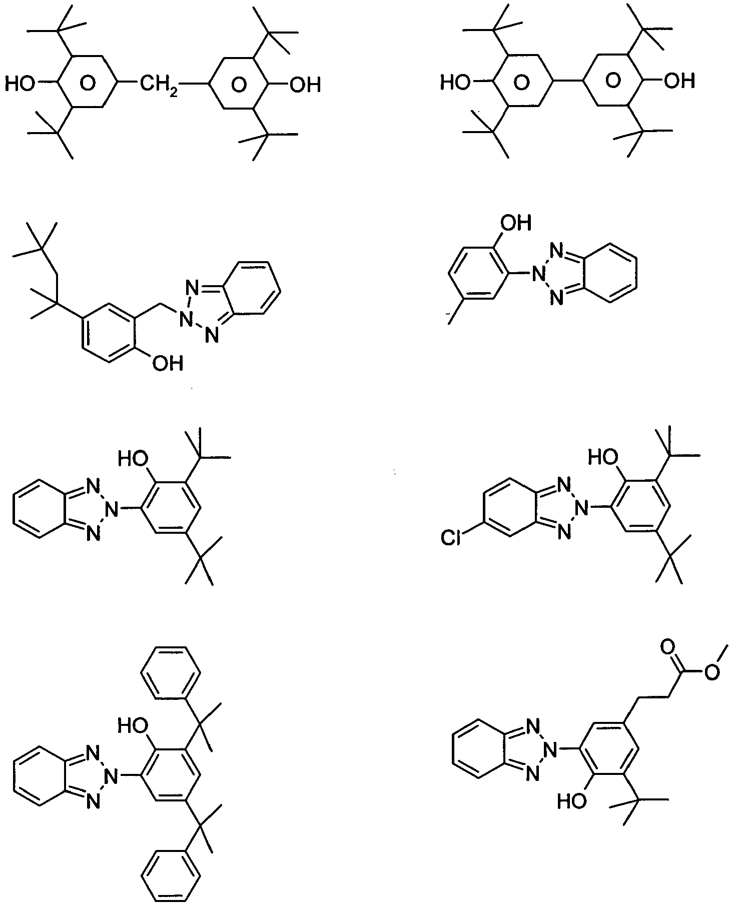

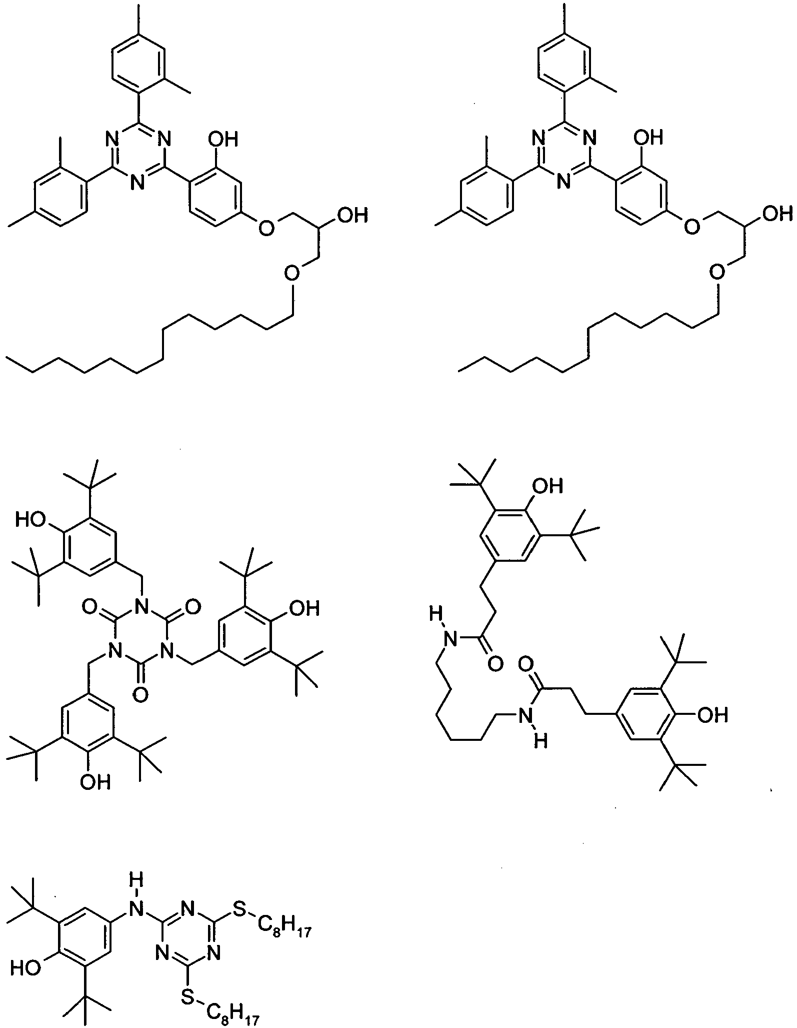

In einer bevorzugten Ausführungsform der vorliegenden Erfindung enthalten die mesogenen Medien eine oder mehrere Verbindungen ausgewählt aus der Gruppe der Verbindungen der Tabelle E.

In der folgenden Tabelle F, sind Beispielverbindungen zusammengestellt, die in den mesogenen Medien gemäß der vorliegenden Erfindung vorzugsweise als chirale Dotierstoffe verwendet werden können.

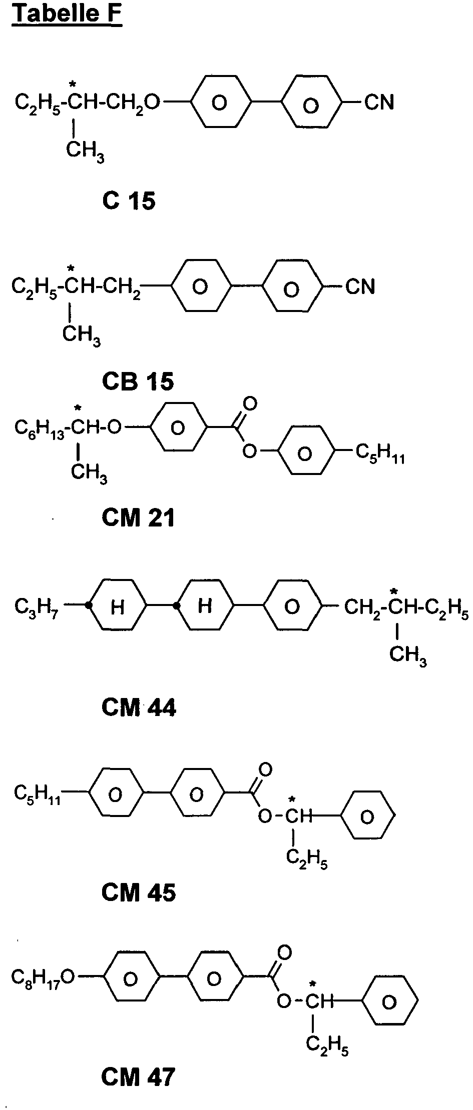

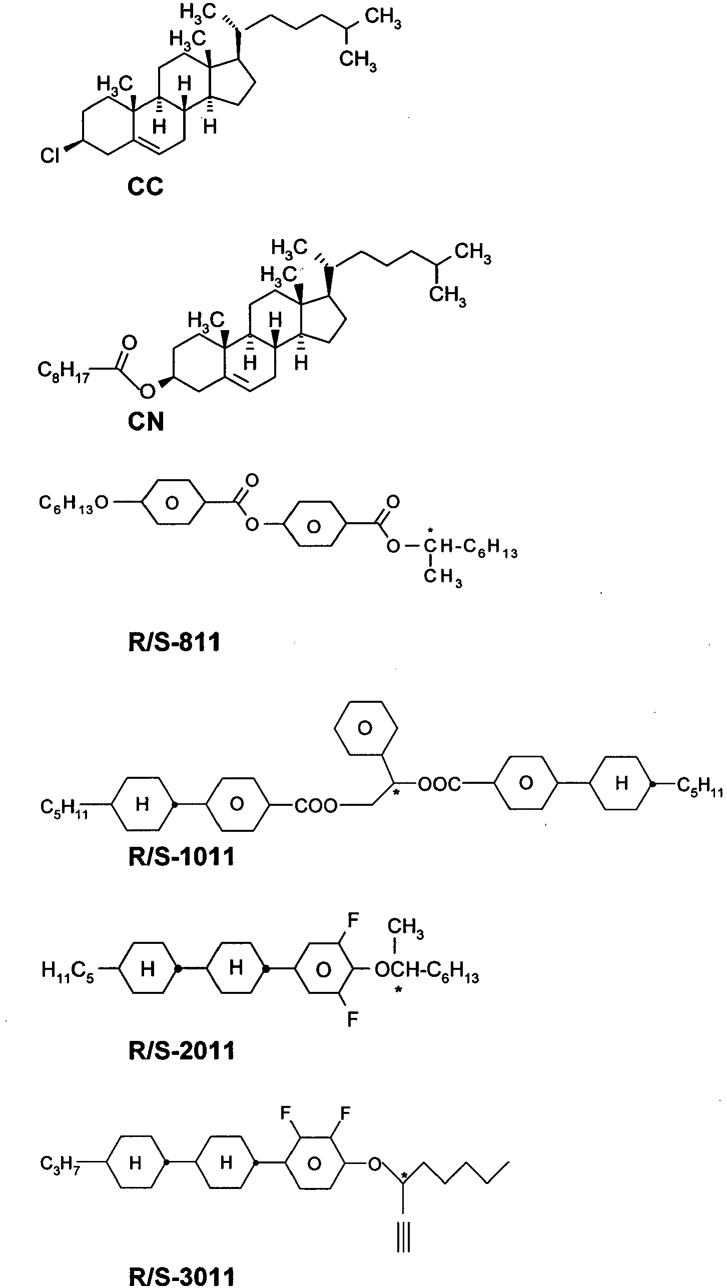

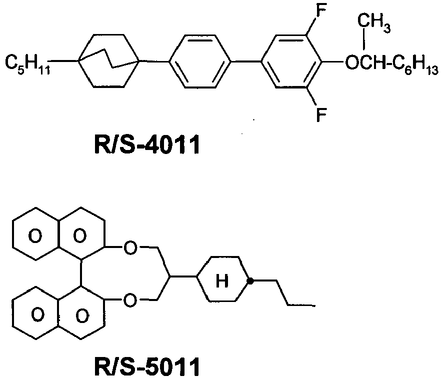

In einer bevorzugten Ausführungsform der vorliegenden Erfindung enthalten die mesogenen Medien eine oder mehrere Verbindungen ausgewählt aus der Gruppe der Verbindungen der Tabelle F.

Vorzugsweise enthalten die mesogenen Medien gemäß der vorliegenden Anmeldung zwei oder mehr, vorzugsweise vier oder mehr, Verbindungen ausgewählt aus der Gruppe bestehend aus den Verbindungen der obigen Tabellen.

Die Flüssigkristallmedien gemäß der vorliegenden Erfindung enthalten vorzugsweise
- sieben oder mehr, vorzugsweise acht oder mehr Einzelverbindungen, vorzugsweise von drei oder mehr, besonders bevorzugt von vier oder mehr, unterschiedlichen Formeln, ausgewählt aus der Gruppe der Verbindungen der Tabelle D.

### Beispiele

Die folgenden Beispiele erläutern die vorliegende Erfindung, ohne sie in irgendeiner Weise zu beschränken.

Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

Es werden Flüssigkristallmischungen mit den Zusammensetzungen und den Eigenschaften wie in den folgenden Tabellen angegeben hergestellt und untersucht.

Die im Folgende gegebenen Beispiele 13, 14, 19, 23, 43 und 45 stellen erfindungsgemäße Anwendungsbeispiele dar. Alle übrigen Beispiele sind Vergleichsbeispiele.

### Beispiel 1: Vergleichsbeispiele 1.0 bis 1.4 und Beispiele 1.1 und 1.2

| Mischung M-1: | | | | | | |
|---|---|---|---|---|---|---|
| Zusammensetzung | | | Physikalische Eigenschaften | | | |
| Verbindung | | | T(N,I) | = | 73,5 | °C |
| Nr. | Abkürzung | c/% | nₑ (20°C, 589,3 nm) | = | 1,5484 | |
| 1 | CCG-3-OT | 10,0 | Δn (20°C, 589,3 nm) | = | 0,0731 | |
| 2 | CCG-5-OT | 10,0 | ε_{∥} (20°C, 1 kHz) | = | 8,6 | |
| 3 | CCU-2-F | 12,0 | Δε (20°C, 1 kHz) | = | 5,4 | |
| 4 | CCU-3-F | 10,0 | ε_{av.}(20°C, 1 kHz) | = | 5,0 | |
| 5 | CCU-5-F | 8,0 | k₁(20°C) | = | 13 | pN |
| 6 | CCEG-3-F | 10,0 | k₃(20°C) | = | 16 | pN |
| 7 | CCEG-5-F | 10,0 | γ₁ (20°C) | = | 114 | mPa · s |
| 8 | CC-3-5 | 10,0 | V₁₀ (20°C) | = | 1,87 | V |
| 9 | CP-5-3 | 20,0 | V₉₀ / V₁₀ (20°C) | = | 1,49 | |
| ∑ | | 100,0 | | | | |

Diese Mischung (Mischung M-1) wird hergestellt und in fünf Teile geteilt. Der erste Teil wird ohne Zugabe einer weiteren Verbindung untersucht. Zu den weiteren vier Teilen der Mischung werden jeweils 1.000 ppm je einer der vier zu untersuchenden Verbindungen, hier, zum Vergleich, der bekannten Verbindung der Formel "Cyasorb UV 2908", kurz "Cya", ebenfalls zum Vergleich, der ebenfalls bekannten Verbindung der Formel "Stab." Jeweils eine Verbindung der Formel I, und zwar der Formel I-1-1a bzw. der Formel I-2-1a, wie in der folgenden Tabelle zusammengestellt, gegeben.

| | |
|---|---|
| 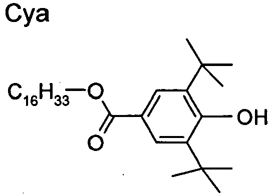 | |
| 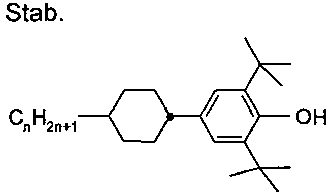 | |
| 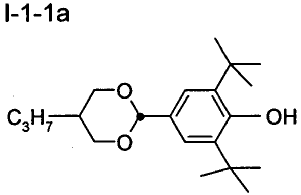 | Phasenfolge: T_{g} 8 K 110 I, |
| 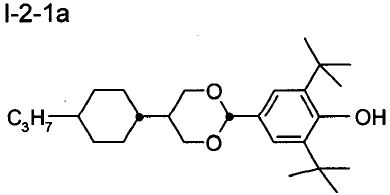 | Phasenfolge: K 144 I. |

Die vier Teile der Mischung werden wie folgt untersucht.

Alternativ zu den Verbindungen der Formeln 1-1-1a und I-2-1a eignen sich auch die Verbindungen der Formeln I-1-2, I-1-3 und I-3-1a

| | |
|---|---|
| 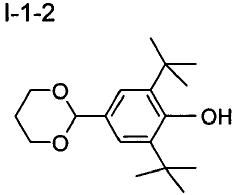 | |
| 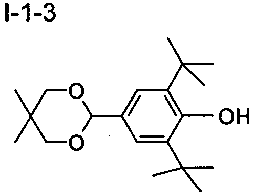 | Phasenfolge: K 129 I, |
| 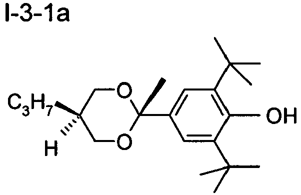 | Phasenfolge: T_{g} 6 K 147 I. |

Es werden jeweils sechs Testzellen mit der Orientierungsschicht AL-3046 (Fa. Japan Synthetic Rubber (JSR), Japan) und einer Schichtdicke von 3,2 µm und transversalen Elektroden wie für TN-Zellen gefüllt und bezüglich ihrer Voltage Holding Ratio (kurz VHR oder HR) untersucht. Dabei wird der Anfangswert und der Wert nach vier Stunden thermischer Belastung im "Bulk" bei einer Temperatur von 150°C bestimmt. Die HR wird jeweils bei einer Temperatur von 100°C, nach 5 Minuten im Ofen gemessen. Die Spannung beträgt 1 V bei 50 Hz (Signalspannung ("source"): Rechteckspannung mit 1 V, 25 Hz, Pulsspannung ("gate") 10 V, 50 Hz, 60 µs, Wiederholfrequenz ("refresh rate") 50 Hz). Die Ergebnisse sind in der folgenden Tabelle zusammengestellt.

| Beispiel | Formel | c(X) / ppm | HR₀ / % | HR_{Temp} / % |
|---|---|---|---|---|
| V1.0a | None | 0 | 99,6 | 90,6 |
| V1.1a | Cya | 1.000 | 98,4 | 98,4 |
| V1.2a | Stab. | 1.000 | 99,6 | 99,5 |
| 1.1a.1 | I-1-1a | 1.000 | 99,5 | 99,6 |
| 1.2a.1 | I-2-1a | 1.000 | 99,7 | 99,6 |
| 1.1a.2 | I-1-1a | 10.000 | 99,6 | 99,4 |
| 1.2a.2 | I-2-1a | 10.000 | 99,7 | 99,6 |

| | | | | |
|---|---|---|---|---|
| Bemerkungen: ... X: Verbindung der entsprechenden Formel, HR bei 100°C, HR_{Temp} nach 4 h bei 150°C im Bulk. | | | | |

Die Mischungen der Beispiele 1.1 und 1.2, die jeweils eine Verbindung der Formel I (I-1-1a bzw. I-2-1a) enthalten, zeichnen sich insbesondere durch eine ausgezeichnete Stabilität gegen thermische Belastung aus.

Die Abwesenheit von Zusätzen führt zu einem deutlichen Abfall der HR der Mischung um 9 % nach Temperaturbelastung. Die Verbindung Cya zeigt zwar keinen weiteren Abfall nach thermischer Belastung, zeichnet sich aber durch einen sehr ungünstigen niedrigeren Startwert aus. Zwischen Stab. und I-1-1a und I-2-1a ist bei reiner thermischer Belastung kein wesentlicher Unterschied zu erkennen. Die Materialien erfüllen alle drei die notwendigen Voraussetzungen zu einer sehr guten thermischen Stabilisierung. Die Verbesserung der Verbindungen der Formeln I-1-1a und I-2-1a gegenüber Cya. werden in den weiteren Untersuchungen z.B. durch höhere HR Werte und deren geringere Abnahme bei UV-Belastungen erkennbar.

In der vorhergehenden Tabelle sind zusätzlich entsprechende Ergebnisse für Mischungen aufgenommen, die 10.000 ppm je einer der Verbindungen der Formel I-1-1a bzw. I-1-2a enthalten (Beispiele 1.1a.2 und 1.2a.2).

Die erfindungsgemäßen Substanzen können somit, wie gezeigt, auch in Konzentrationen, die größer sind, als die, die typischerweise bei üblichen Stabilisatoren verwendeten, eingesetzt werden, ohne, dass die Eigenschaften der Mischungen darunter leiden bzw. die stabilisierende Wirkung nachlässt.

Anschließend wurden entsprechende Untersuchungen der beschriebenen vier verschiedenen Mischungen in verschlossenen Testzellen unter Lichtbelastung durchgeführt. Die Stabilität gegen Licht wird durch einen Test in einem entsprechende Gerät, "Suntest CPS+" der Fa. Atlas MTS untersucht. Dazu wird die HR vor und nach Lichtbelastung bestimmt. Dazu werden die Zellen für bestimmte Zeiten bei 20°C in dem "Suntest" für 1 Stunde bzw. für 4 Stunden einer Beleuchtung ausgesetzt. Danach wird die HR wie oben beschreiben bestimmt. Zusätzlich wurden in zwei weiteren Teilen der Mischung M-1 die Verbindungen (1): 2,6-Di-*tert*.-butyl-4-methylphenol (auch BHT genannt) bzw. (2) 2,6-Di-*tert*.-butyl-4-heptylphenol (auch αHBHT genannt), wie in der folgenden Tabelle gezeigt, ebenfalls in einer Konzentration von 1.000 ppm, als weitere Vergleichsverbindungen untersucht.

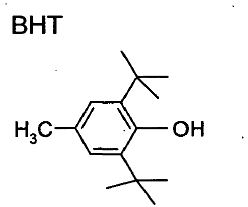

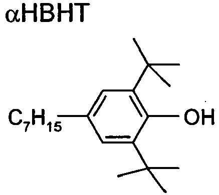

Die Ergebnisse sind in der folgenden Tabelle zusammengefasst.

| | | t_{UV} / h | 1 | 4 |
|---|---|---|---|---|
| Beispiel | Formel | c(X) / ppm | HR_{UV}(t) / % | HR_{UV}(t) / % |
| V1.0b | None | 0 | 98,7 | 98,0 |
| V1.1b | Cya | 1.000 | 97,0 | 91,1 |
| V1.2b | Stab. | 1.000 | 98,9 | n.z.b. |
| V1.3b | (1) | 1.000 | 99,2 | n.z.b. |
| V1.4b | (2) | 1.000 | 99,1 | n.z.b. |
| 1.1b | I-1-1a | 1.000 | 98,4 | 95,1 |
| 1.2b | I-2-1a | 1.000 | 99,4 | 95,9 |

| | | | | |
|---|---|---|---|---|
| Bemerkungen: ... X: Verbindung der entsprechenden Formel, n.z.b.: noch zu bestimmen, HR bei 100°C, HRuv nach Beleuchtung in der Zelle mit 765 W/m² über die angegebene Zeitspanne von 1 Stunde bzw. 4 Stunden. | | | | |

Die Verbindungen der Formeln I-1-1a und I-2-1a sind zur Stabilisierung dieser Mischung (M-1) mindestens ähnlich gut geeignet, wie die Vergleichsverbindungen. Ihre Überlegenheit in anderen Mischungen, z.B. mit höherer Polarität, wird in den folgenden Beispielen gezeigt.

### Beispiel 2: Vergleichsbeispiele 2.0 bis 2.4 und Beispiele 2.1 und 2.2

Der Mischung M-1 des Beispiels 1 werden 10 % der Verbindung MPP-5-F zugesetzt. Die resultierende Mischung (M-2) wird wie unter Beispiel 1 beschrieben untersucht. Die Ergebnisse sind in der folgenden Tabelle zusammengestellt.

| Beispiel | Formel | c(X) / ppm | HR₀ / % | HR_{Temp} / % |
|---|---|---|---|---|
| V2.0a | None | 0 | 98,9 | 49,2 |
| V2.1a1 | Cya | 1.000 | 95,1 | 83,8 |
| V2.1a2 | Cya | 2.500 | 98,2 | 78,8 |
| V2.1a3 | Cya | 10.000 | 96,2 | 39 |
| V2.2a | Stab. | 1.000 | 99,8 | 99,9 |
| 2.1a | I-1-1a | 1.000 | n.z.b. | n.z.b. |
| 2.2a1 | I-2-1a | 1.000 | 99,2 | 99,3 |
| 2.2a.2 | I-2-1a | 10.000 | 99,2 | 99,0 |

| | | | | |
|---|---|---|---|---|
| Bemerkungen: ... X: Verbindung der entsprechenden Formel, n.z.b.: noch zu bestimmen, HR bei 100°C, HR_{Temp} nach 4 h bei 150°C im Bulk. | | | | |

In der vorhergehenden Tabelle sind zusätzlich entsprechende Ergebnisse für Mischungen aufgenommen, die 2.500 ppm bzw. 10.000 ppm der Verbindung Cya bzw. 10.000 ppm der Verbindung der Formel I-2-1a enthalten.

Die erfindungsgemäß einzusetzenden Substanzen können somit, wie gezeigt, auch in Konzentrationen, die größer sind, als die, die typischerweise bei üblichen Stabilisatoren verwendeten, eingesetzt werden, ohne, dass die Eigenschaften der Mischungen darunter leiden bzw. die stabilisierende Wirkung nachlässt.

Die Vergleichsverbindung Cya erzielt im Gegensatz zu den Verbindungen, die gemäß der vorliegenden Anmeldung verwendet werden, bei 1.000 ppm noch keine ausreichende Stabilisierung gegen thermische Belastung. Die Erhöhung der Konzentration der Verbindung Cya auf 2.500 ppm oder 10.000 ppm führt sogar noch zu einer Abnahme der Stabilisierungswirkung gegen thermische Belastung. Daraus ergibt sich hier klar die mangelnde Eignung von Cya.

Anschließend wurde, wie bei Beispiel 1 beschrieben, die Stabilität der Mischungen gegenüber Lichtbelastung bestimmt. Die Ergebnisse sind in der folgenden Tabelle zusammengefasst.

| | | t_{UV} / h | 1 | 4 |
|---|---|---|---|---|
| Beispiel | Formel | c(X) / ppm | HR_{UV}(t) / % | HR_{UV}(t) / % |
| V2.0b | None | 0 | 61,8 | 98,0 |
| V2.1b | Cya | 1.000 | 46 | 26 |
| V2.2b | Stab. | 1.000 | 395 | n.z.b. |
| V2.3b | (1) | 1.000 | 33 | n.z.b. |
| V2.4b | (2) | 1.000 | 378 | n.z.b. |
| 2.1b | I-1-1a | 1.000 | 48 | 38 |
| 2.2b | I-2-1a | 1.000 | 46 | 37 |

| | | | | |
|---|---|---|---|---|
| Bemerkungen: ... X: Verbindung der entsprechenden Formel, n.z.b.: noch zu bestimmen, HR bei 100°C, HRuv nach Beleuchtung in der Zelle mit 765 W/m² über die angegebene Zeitspanne von 1 Stunde bzw. 4 Stunden. | | | | |

In der vorhergehenden Tabelle sieht man, dass Cya, welches, wie oben gezeigt, nicht ausreichend thermisch stabilisiert, bei einer UV Belastung von nur 1 Stunde zunächst noch ein äquivalentes Verhalten zeigt. Bei einer längeren UV-Belastung zeigen die beiden erfindungsgemäß einzusetzenden Verbindungen I-1-1a und I-2-1a jedoch deutliche Vorteile gegenüber Cya nach der Lichtbelastung.

Die beiden erfindungsgemäß einzusetzenden Verbindungen I-1-1a und I-2-1a zeigen gegenüber allen drei weiteren Vergleichsverbindungen Stab., (1) und (2) bereits nach 1 Stunde Belastung deutliche Vorteile. Besonders deutlich ist der Unterschied im Vergleich zu der strukturell ähnlichen Verbindung Stab.

### Beispiel 3: Vergleichsbeispiele 3.0 bis 3.4 und Beispiele 3.1 und 3.2

Der Mischung M-1 des Beispiels 1 werden 10 % der Verbindung PGUQU-5-F zugesetzt. Die resultierende Mischung (M-3) wird, wie unter Beispiel 1 beschrieben, untersucht. Die Ergebnisse sind in der folgenden Tabelle zusammengestellt.

| Beispiel | Formel | c(X) / ppm | HR₀ / % | HR_{Temp} / % |
|---|---|---|---|---|
| V3.0 | None | 0 | 99,0 | 77,0 |
| V3.1.1 | Cya | 1.000 | 96,6 | 88,8 |
| V3.2 | Stab. | 1.000 | 99,1 | 98,4 |
| 3.1 | I-1-1a | 1.000 | 98,0 | 98,2 |
| 3.2 | I-2-1a | 1.000 | 99,1 | 98,9 |
| V3.1.2 | Cya | 10.000 | 96,9 | 55,4 |
| 3.2.2 | I-2-1a | 10.000 | 99,1 | 98,8 |

| | | | | |
|---|---|---|---|---|
| Bemerkungen: ... X: Verbindung der entsprechenden Formel, HR bei 100°C, HR_{Temp} nach 4 h bei 150°C im Bulk. | | | | |

Auch hier konnte gezeigt werden, dass die erfindungsgemäß einzusetzenden Substanzen auch in Konzentrationen, die größer sind, als die, die typischerweise bei üblichen Stabilisatoren verwendeten, eingesetzt werden können, ohne, dass die Eigenschaften der Mischungen darunter leiden bzw. die stabilisierende Wirkung nachlässt.

Im Gegensatz dazu erzielt etwa die Vergleichsverbindung Cya bei einer Konzentration von 1.000 ppm noch keine ausreichende thermische Stabilisierung und eine Erhöhung der Konzentration von Cya auf 10.000 ppm führt sogar zu einer Abnahme der thermischen Stabilisierung.

Folglich eignet sich die Verbindung Cya nicht um die entsprechenden Mischungen zu stabilisieren.

Anschließend wurde, wie bei Beispiel 1 beschrieben, die Stabilität der Mischungen gegenüber Lichtbelastung bestimmt. Die Ergebnisse sind in der folgenden Tabelle zusammengefasst.

| | | t_{UV} / h | 1 | 4 |
|---|---|---|---|---|
| Beispiel | Formel | c(X) / ppm | HR_{UV}(t) / % | HR_{UV}(t) / % |
| V3.0b | None | 0 | 75,3 | 77,6 |
| V3.1b | Cya | 1.000 | n.z.b. | n.z.b. |
| V3.2b | Stab. | 1.000 | 42 | 20 |
| V3.3b | (1) | 1.000 | 51 | n.z.b. |
| V3.4b | (2) | 1.000 | 50 | n.z.b. |
| 3.1b | I-1-1a | 1.000 | 77,8 | 63,3 |
| 3.2b | I-2-1a | 1.000 | 76,7 | 64,7 |

| | | | | |
|---|---|---|---|---|
| Bemerkungen: ... X: Verbindung der entsprechenden Formel, n.z.b.: noch zu bestimmen, HR bei 100°C, HRuv nach Beleuchtung in der Zelle mit 765 W/m² über die angegebene Zeitspanne von 1 Stunde bzw. 4 Stunden. | | | | |

Bei diesem Beispiel wurde zusätzlich der Einfluss der zugesetzten Verbindungen auf die elektrooptischen Eigenschaften und auf das Schaltverhalten der resultierenden Mischungen untersucht. Hierzu wurden TN-Testzellen mit einer Schichtdicke, die zu einer optischen Verzögerung (d·Δn) von 0,5 µm führt, entsprechend dem 1 Transmissionsminimum nach Gooch und Tarry, verwendet. Die Untersuchungen werden mit einem Gerät DMS-301 der Firma Autronic Melchers, Karlsruhe durchgeführt. Hierzu wird bei einer Temperatur von 20°C eine Rechteckspannung von 6 V (PP: "peak to peak", also Spize-Spitze) mit einer Frequenz von 80 Hz verwendet. In der folgenden Tabelle werden beispielhaft für die charakteristischen Spannungen, die Schwellenspannung und beispielhaft für die Schaltzeiten, die Schaltzeit für das Ausschalten zusammengestellt.

| Beispiel | Formel | c(X) / ppm | τ_{off}(0) / ms | τ_{off}(1 h) / msV |
|---|---|---|---|---|
| V3.0b | None | 0 | 75,3 | 77,6 |
| V3.1b | Cya | 1.000 | 82,3 | 73,4 |
| V3.2b | Stab. | 1.000 | 41,7 | 19,6 |
| V3.3b | (1) | 1.000 | 50,8 | 36,2 |
| V3.4b | (2) | 1.000 | 50,0 | 38,4 |
| 3.1b | I-1-1a | 1.000 | 77,8 | 63,3 |
| 3.2b | I-2-1a | 1.000 | 76,7 | 64,7 |

| | | | | |
|---|---|---|---|---|
| Bemerkungen: ... X: Verbindung der entsprechenden Formel, τ_{off}(t=0) vor Beleuchtung, τ_{off}(t=1) nach 1 h Beleuchtung in der Zelle mit 765 W/m² über die angegebene Zeitspanne von 1 Stunde | | | | |

| | | t_{UV} / h | 0 | 1 | 0 | 1 |
|---|---|---|---|---|---|---|
| Beispiel | Formel | c(X) / ppm | V₁₀ / V | V₁₀ / V | τ_{off} / ms | τ_{off} ms |
| V3.0b | None | 0 | 1,51 | 1,51 | 24,7 | 24,8 |
| V3.1b | Cya | 1.000 | n.z.b. | n.z.b. | n.z.b. | n.z.b. |
| V3.2b | Stab. | 1.000 | 1,51 | 1,54 | 24,8 | 23,2 |
| V3.3b | (1) | 1.000 | 1,51 | 1,55 | 24,8 | 23,6 |
| V3.4b | (2) | 1.000 | n.z.b. | n.z.b. | n.z.b. | n.z.b. |
| 3.1b | I-1-1a | 1.000 | 1,50 | 1,51 | 25,3 | 24,4 |
| 3.2b | I-2-1a | 1.000 | 1,51 | 1,51 | 25,0 | 24,6 |

| | | | | | | |
|---|---|---|---|---|---|---|
| Bemerkungen: n.z.b.: noch zu bestimmen, | | | | | | |

Aus den Ergebnissen in der vorhergehenden Tabelle kann man entnehmen, dass die erfindungsgemäß einzusetzenden Verbindungen der Formeln I-1-1a und I-1-1b nach der Belastung mit Licht zu einer geringeren Erhöhung der Schwelle führen als z.B. die beiden Vergleichsverbindungen "Stab." und (1).

Auch diesem Beispiel kann man wieder entnehmen, dass eine Stabilisierung der Mischung gegen thermische Belastung generell notwendig ist. Die drei Verbindungen Stab., I-1-1a und I-2-1a, und insbesondere die letzten beiden, sind der Verbindung Cya in ihrer Wirksamkeit eindeutig überlegen.

### Beispiel 4: Vergleichsbeispiele 4.0 bis 4.4 und Beispiele 4.1 und 4.2

Der Mischung M-1 des Beispiels 1 werden 20 % der Verbindung CC-3-V zugesetzt. Die resultierende Mischung (M-4) wird, wie unter Beispiel 1 beschrieben, untersucht. Allerdings werden hier der Ausgangsmischungen alternativ drei verschiede Konzentrationen (und zwar 50 ppm, 100 ppm bzw. 1.000 ppm) der zu untersuchenden Verbindungen zugesetzt. Die Ergebnisse sind in der folgenden Tabelle zusammengestellt.

| Beispiel | Formel | c(X) / ppm | HR₀ / % | HR_{Temp} / % |
|---|---|---|---|---|
| V4.0 | None | 0 | 99,8 | 90,2 |
| V4.1-1 | Cya | 1.000 | 99,1 | 98,4 |
| V4.1-2 | Cya | 100 | n.z.b. | n.z.b. |
| V4.1-3 | Cya | 50 | n.z.b. | n.z.b. |
| V4.2-1 | Stab. | 1.000 | 99,5 | 99,4 |
| V4.2-2 | Stab. | 100 | 99,2 | 99,4 |
| V4.2-3 | Stab. | 50 | 99,5 | 99,4 |
| 4.1-1 | I-1-1a | 1.000 | 99,6 | 99,7 |
| 4.1-2a | I-1-1a | 100 | 99,7 | 99,7 |
| 4.1-2b | I-1-1a | 200 | 99,7 | 99,7 |
| 4.1-2c | I-1-1a | 300 | 99,7 | 99,7 |
| 4.1-3 | I-1-1a | 50 | 99,8 | 99,6 |
| 4.2-1a | I-2-1a | 1.000 | 99,7 | 99,8 |
| 4-2-1b | I-2-1a | 10.000 | 99,9 | 99,8 |
| 4.2-2 | I-2-1a | 100 | n.z.b. | n.z.b. |
| 4.2-3 | I-2-1a | 50 | n.z.b. | n.z.b. |

| | | | | |
|---|---|---|---|---|
| Bemerkungen: ... X: Verbindung der entsprechenden Formel, n.z.b.: noch zu bestimmen, HR bei 100°C, HR_{Temp} nach 4 h bei 150°C im Bulk. | | | | |

Die exzellente stabilisierende Wirkung der erfindungsgemäß einzusetzenden Verbindungen gegen thermische Belastung über einen größeren Konzentrationsbereich von 50 ppm bis 10.000 ppm ist aus diesen Ergebnissen deutlich erkennbar.

Die Verbindung Cya ist auch bei dieser Mischung, die im Vergleich mit der Mischung des vorhergehenden Beispiels deutlich weniger polar ist, deutlich erkennbar schwächer in ihrer Stabilisierungswirkung gegen thermische Belastung.

Anschließend wurde, wie bei Beispiel 1 beschrieben, die Stabilität der Mischungen gegenüber Lichtbelastung bestimmt. Die Ergebnisse sind in der folgenden Tabelle zusammengefasst.

| | | t_{UV} / h | 1 | 4 |
|---|---|---|---|---|
| Beispiel | Formel | c(X) / ppm | HR_{UV}(t) / % | HR_{UV}(t) / % |
| V4.0b | None | 0 | 98,7 | 95,9 |
| V4.1b | Cya | 1.000 | 98,8 | 96,4 |
| V4.2b | Stab. | 1.000 | n.z.b. | n.z.b. |
| V4.3b | (1) | 1.000 | n.z.b. | n.z.b. |
| V4.4b | (2) | 1.000 | n.z.b. | n.z.b. |
| 4.1b | I-1-1a | 1.000 | 99,4 | 94,6 |
| 4.2b | I-2-1a | 1.000 | 99,6 | 95,9 |

| | | | | |
|---|---|---|---|---|
| Bemerkungen: ... X: Verbindung der entsprechenden Formel, n.z.b.: noch zu bestimmen, HR bei 100°C, HRuv nach Beleuchtung in der Zelle mit 765 W/m² über die angegebene Zeitspanne von 1 Stunde bzw. 4 Stunden. | | | | |

Die erfindungsgemäß einzusetzenden Verbindungen sind auch hier diejenigen, die am besten geeignet sind. Zur Erzielung einer guten Stabilisierung gegen thermische Belastung können sie in einem sehr weiten Konzentrationsbereich eingesetzt werden und die resultierenden Mischungen zeigen allenfalls nur einen geringen Abfall in der HR bei Belastung mit licht bzw. UV Strahlung. Die Vergleichsverbindung Cya ist hier aufgrund ihrer deutlich geringer ausgeprägten Stabilisierungswirkung gegen thermische Belastung weniger gut geeignet.

### Beispiele 5 bis 12:

Wie bei Beispiel 1 werden hier die entsprechenden Mischungen M-6 bis M-12 hergestellt und untersucht. In allen Tabellen bedeutet "n.z.b." noch zu bestimmen.

### Beispiel 5:

| Mischung M-5: | | | | | | |
|---|---|---|---|---|---|---|
| Zusammensetzung | | | Physikalische Eigenschaften | | | |
| Verbindung | | | T(N,I) | = | 76,0 | °C |
| Nr. | Abkürzung | c/% | nₑ (20°C, 589,3 nm) | = | 1,5949 | |
| 1 | CP-3-CL | 3,0 | Δn (20°C, 589,3 nm) | = | 0,1142 | |
| 2 | CCP-3-OT | 8,0 | ε∥ (20°C, 1 kHz) | = | 17,6 | |
| 3 | CCP-5-OT | 7,0 | Δε (20°C, 1 kHz) | = | 11,7 | |
| 4 | CPU-3-F | 10,0 | ε_{av.}(20°C, 1 kHz) | = | 9,8 | |
| 5 | CCQU-3-F | 15,0 | k₁(20°C) | = | n.z.b. | pN |
| 6 | PUQU-3-F | 8,5 | k₃(20°C) | = | n.z.b. | pN |
| 7 | CPGU-3-OT | 4,0 | γ₁ (20°C) | = | n.z.b. | mPa · s |
| 8 | APUQU-3-F | 7,0 | V₁₀ (20°C) | = | n.z.b. | V |
| 9 | PGUQU-3-F | 7,0 | V₉₀ / V₁₀ (20°C) | = | n.z.b. | |
| 10 | CC-3-V | 16,0 | | | | |
| 11 | CP-3-O1 | 9,0 | | | | |
| 12 | PGP-2-5 | 5,5 | | | | |
| ∑ | | 100,0 | | | | |

| | | | | | | |
|---|---|---|---|---|---|---|
| Bemerkungen: n.z.b. = noch zu bestimmen (Diese Abkürzung gilt für die gesamte Anmeldung.) | | | | | | |

### Beispiel 6:

| Mischung M-6: | | | | | | |
|---|---|---|---|---|---|---|
| Zusammensetzung | | | Physikalische Eigenschaften | | | |
| Verbindung | | | T(N,I) | = | 75,5 | °C |
| Nr. | Abkürzung | c/% | nₑ (20°C, 589,3 nm) | = | 1,5935 | |
| 1 | PGU-3-F | 7,0 | Δn (20°C, 589,3 nm) | = | 0,1114 | |
| 2 | CCQU-3-F | 4,0 | ε∥ (20°C, 1 kHz) | = | 17,6 | |
| 3 | PUQU-3-F | 15,0 | Δε (20°C, 1 kHz) | = | 13,8 | |
| 4 | CPGU-3-OT | 3,0 | ε_{av.}(20°C, 1 kHz) | = | 8,4 | |
| 5 | APUQU-2-F | 7,0 | k₁(20°C) | = | n.z.b. | pN |
| 6 | APUQU-3-F | 7,0 | k₃(20°C) | = | n.z.b. | pN |
| 7 | PGUQU-3-F | 7,0 | γ₁ (20°C) | = | n.z.b. | mPa · s |
| 8 | CC-3-V | 32,0 | V₁₀ (20°C) | = | n.z.b. | V |
| 9 | CC-3-V1 | 6,0 | V₉₀ / V₁₀ (20°C) | = | n.z.b. | |
| 10 | CCP-3-1 | 12,0 | | | | |
| ∑ | | 100,0 | | | | |

### Beispiel 7:

| Mischung M-7: | | | | | | |
|---|---|---|---|---|---|---|
| Zusammensetzung | | | Physikalische Eigenschaften | | | |
| Verbindung | | | T(N,I) | = | 76,0 | °C |
| Nr. | Abkürzung | c/% | nₑ (20°C, 589,3 nm) | = | 1,6316 | |
| 1 | PGU-3-F | 10,0 | Δn (20°C, 589,3 nm) | = | 0,1385 | |
| 2 | DPGU-3-F | 2,0 | ε∥ (20°C, 1 kHz) | = | 8,6 | |
| 3 | DPGU-4-F | 3,0 | Δε (20°C, 1 kHz) | = | 5,6 | |
| 4 | PGUQU-3-F | 8,0 | ε_{av.}(20°C, 1 kHz) | = | 4,9 | |
| 5 | CC-3-V | 42,0 | k₁(20°C) | = | n.z.b. | pN |
| 6 | CC-3-V1 | 8,0 | k₃(20°C) | = | n.z.b. | pN |
| 7 | PGP-2-3 | 9,0 | γ₁ (20°C) | = | n.z.b. | mPa · s |
| 8 | PGP-2-4 | 8,0 | V₁₀ (20°C) | = | n.z.b. | V |
| 9 | PGP-2-5 | 10,0 | V₉₀ / V₁₀ (20°C) | = | n.z.b. | |
| ∑ | | 100,0 | | | | |

### Beispiel 8:

| Mischung M-8: | | | | | | |
|---|---|---|---|---|---|---|
| Zusammensetzung | | | Physikalische Eigenschaften | | | |
| Verbindung | | | T(N,I) | = | 70,0 | °C |
| Nr. | Abkürzung | c/% | nₑ (20°C, 589,3 nm) | = | 1,5956 | |
| 1 | PUQU-3-F | 7,5 | Δn (20°C, 589,3 nm) | = | 0,1114 | |
| 2 | CPGU-3-OT | 2,5 | ε∥ (20°C, 1 kHz) | = | 9,5 | |
| 3 | APUQU-3-F | 8,0 | Δε (20°C, 1 kHz) | = | 6,3 | |
| 4 | PGUQU-3-F | 8,0 | ε_{av.}(20°C, 1 kHz) | = | 5,3 | |
| 5 | CC-3-V | 48,0 | k₁(20°C) | = | n.z.b. | pN |
| 6 | CC-3-V1 | 9,0 | k₃(20°C) | = | n.z.b. | pN |
| 7 | PGP-2-4 | 7,0 | γ₁ (20°C) | = | n.z.b. | mPa · s |
| 8 | PGP-2-5 | 10,0 | V₁₀ (20°C) | = | n.z.b. | V |
| ∑ | | 100,0 | V₉₀ / V₁₀ (20°C) | = | n.z.b. | |

### Beispiel 9

| Mischung M-9: | | | | | | |
|---|---|---|---|---|---|---|
| Zusammensetzung | | | Physikalische Eigenschaften | | | |
| Verbindung | | | T(N,I) | = | 75,5 | °C |
| Nr. | Abkürzung | c/% | nₑ (20°C, 589,3 nm) | = | 1,5903 | |
| 1 | PGU-3-F | 3,0 | Δn (20°C, 589,3 nm) | = | 0,1113 | |
| 2 | CCQU-2-F | 8,0 | ε∥ (20°C, 1 kHz) | = | 24,4 | |
| 3 | ACQU-3-F | 10,0 | Δε (20°C, 1 kHz) | = | 20,0 | |
| 4 | PUQU-3-F | 15,0 | ε_{av.}(20°C, 1 kHz) | = | 11,1 | |
| 5 | DPGU-4-F | 8,0 | k₁(20°C) | = | n.z.b. | pN |
| 6 | APUQU-2-F | 6,0 | k₃(20°C) | = | n.z.b. | pN |
| 7 | APUQU-3-F | 7,0 | γ₁ (20°C) | = | n.z.b. | mPa · s |
| 8 | PGUQU-3-F | 7,0 | V₁₀ (20°C) | = | n.z.b. | V |
| 9 | CC-3-V | 22,0 | V₉₀ / V₁₀ (20°C) | = | n.z.b. | |
| 10 | CC-3-V1 | 8,0 | | | | |
| 11 | CCP-3-1 | 6,0 | | | | |
| ∑ | | 100,0 | | | | |

### Beispiel 10

| Mischung M-10: | | | | | | |
|---|---|---|---|---|---|---|
| Zusammensetzung | | | Physikalische Eigenschaften | | | |
| Verbindung | | | T(N,I) | = | 81,0 | °C |
| Nr. | Abkürzung | c/% | nₑ (20°C, 589,3 nm) | = | 1,5786 | |
| 1 | ACQU-2-F | 10,0 | Δn (20°C, 589,3 nm) | = | 0,1030 | |
| 2 | ACQU-3-F | 12,0 | ε∥ (20°C, 1 kHz) | = | 20,9 | |
| 3 | PUQU-3-F | 11,0 | Δε (20°C, 1 kHz) | = | 16,7 | |
| 4 | CPGU-3-OT | 4,0 | ε_{av.}(20°C, 1 kHz) | = | 9,8 | |
| 5 | APUQU-2-F | 6,0 | k₁(20°C) | = | n.z.b. | pN |
| 6 | APUQU-3-F | 7,0 | k₃(20°C) | = | n.z.b. | pN |
| 7 | PGUQU-3-F | 8,0 | γ₁ (20°C) | = | n.z.b. | mPa · s |
| 8 | CC-3-V | 24,0 | V₁₀ (20°C) | = | n.z.b. | V |
| 9 | CC-3-V1 | 6,0 | V₉₀ / V₁₀ (20°C) | = | n.z.b. | |
| 10 | CCP-3-1 | 12,0 | | | | |
| ∑ | | 100,0 | | | | |

### Beispiel 11:

| Mischung M-11 | | | | | | |
|---|---|---|---|---|---|---|
| Zusammensetzung | | | Physikalische Eigenschaften | | | |
| Verbindung | | | T(N,I) | = | 75,5 | °C |
| Nr. | Abkürzung | c/% | nₑ (20°C, 589,3 nm) | = | 1,5831 | |
| 1 | PUQU-3-F | 8,0 | Δn (20°C, 589,3 nm) | = | 0,1001 | |
| 2 | APUQU-2-F | 9,0 | ε∥ (20°C, 1 kHz) | = | 13,0 | |
| 3 | APUQU-3-F | 9,0 | Δε (20°C, 1 kHz) | = | 9,6 | |
| 4 | PGUQU-3-F | 9,0 | ε_{av.}(20°C, 1 kHz) | = | 6,6 | |
| 5 | CC-3-V | 48,0 | k₁(20°C) | = | n.z.b. | pN |
| 6 | CCP-V-1 | 15,0 | k₃(20°C) | = | n.z.b. | pN |
| 7 | PGP-2-3 | 2,0 | γ₁ (20°C) | = | n.z.b. | mPa · s |
| ∑ | | 100,0 | V₁₀ (20°C) | = | n.z.b. | V |
| | | | V₉₀ / V₁₀ (20°C) | = | n.z.b. | |

### Beispiel 12:

| Mischung M-12: | | | | | | |
|---|---|---|---|---|---|---|
| Zusammensetzung | | | Physikalische Eigenschaften | | | |
| Verbindung | | | T(N,I) | = | 75,5 | °C |
| Nr. | Abkürzung | c/% | nₑ (20°C, 589,3 nm) | = | n.z.b. | |
| 1 | PGU-3-F | 7,0 | Δn (20°C, 589,3 nm) | = | 0,1114 | |
| 2 | CCQU-3-F | 4,0 | ε∥ (20°C, 1 kHz) | = | 17,6 | |
| 3 | PUQU-3-F | 7,0 | Δε (20°C, 1 kHz) | = | 13,8 | |
| 4 | CPGU-3-OT | 3,0 | ε_{av.}(20°C, 1 kHz) | = | 8,4 | |
| 5 | APUQU-2-F | 7,0 | k₁(20°C) | = | n.z.b. | pN |
| 6 | APUQU-3-F | 7,0 | k₃(20°C) | = | n.z.b. | pN |
| 7 | PGUQU-3-F | 7,0 | γ₁ (20°C) | = | n.z.b. | mPa · s |
| 8 | CC-3-V | 32,0 | V₁₀ (20°C) | = | n.z.b. | V |
| 9 | CC-3-V1 | 6,0 | V₉₀ / V₁₀ (20°C) | = | n.z.b. | |
| 10 | CCP-3-1 | 12,0 | | | | |
| ∑ | | 100,0 | | | | |

Die Mischungen der Beispiele 5 bis 12 werden jeweils in vier Teile geteilt. Je einem der vier Teile jeder der Mischungen werden alternativ 50 ppm oder 100 ppm der Verbindung der Formel I-1-1a oder I-2-1a der Verbindung der Formel zugesetzt. Die resultierenden Mischungen werden wie oben beschrieben untersucht.

Die resultierenden Mischungen der Beispiele 5 bis 12, die eine Verbindung der Formel I (insbesondere der Formel I-1-1a bzw. I-2-1a) enthalten, zeichnen sich insbesondere durch eine ausgezeichnete Stabilität gegen thermische Belastung aus.

### Beispiel 13:

| Mischung M-13: | | | | | | |
|---|---|---|---|---|---|---|
| Zusammensetzung | | | Physikalische Eigenschaften | | | |
| Verbindung | | | T(N,I) | = | 106 | °C |
| Nr. | Abkürzung | c/% | nₑ (20°C, 589,3 nm) | = | 1,5800 | |
| 1 | CCG-V-F | 18,0 | Δn (20°C, 589,3 nm) | = | 0,0945 | |
| 2 | CCP-3-OT | 5,0 | ε∥ (20°C, 1 kHz) | = | 7,5 | |
| 3 | CCP-5-OT | 3,0 | Δε (20°C, 1 kHz) | = | 4,6 | |
| 4 | APUQU-2-F | 1,5 | ε_{av.}(20°C, 1 kHz) | = | 4,4 | |
| 5 | APUQU-3-F | 4,0 | k₁(20°C) | = | 15,4 | pN |
| 6 | CDUQU-3-F | 3,0 | k₃(20°C) | = | 20,2 | pN |
| 7 | DGUQU-4-F | 3,0 | γ₁ (20°C) | = | 83 | mPa · s |
| 8 | CC-3-V | 25,0 | V₀ (20°C) | = | 1,93 | V |
| 9 | CC-3-V1 | 5,5 | V₉₀ / V₁₀ (20°C) | = | n.z.b. | |
| 10 | CC-3-2V1 | 2,0 | | | | |
| 11 | CCP-V-1 | 10,0 | | | | |
| 12 | CCP-V2-1 | 8,0 | | | | |
| 13 | CCVC-3-V | 5,0 | | | | |
| 14 | PP-1-2V1 | 4,0 | | | | |
| 15 | PGP-2-2V | 3,0 | | | | |
| ∑ | | 100,0 | | | | |

Der Mischung werden 40 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 14:

| Mischung M-14: | | | | | | |
|---|---|---|---|---|---|---|
| Zusammensetzung | | | Physikalische Eigenschaften | | | |
| Verbindung | | | T(N,I) | = | 104 | °C |
| Nr. | Abkürzung | c/% | nₑ (20°C, 589,3 nm) | = | 1,5794 | |
| 1 | CCG-V-F | 17,0 | Δn (20°C, 589,3 nm) | = | 0,0949 | |
| 2 | CCP-3-OT | 4,0 | ε∥ (20°C, 1 kHz) | = | 7,4 | |
| 3 | CCP-5-OT | 3,0 | Δε (20°C, 1 kHz) | = | 4,5 | |
| 4 | CLP-3-T | 3,0 | ε_{av.}(20°C, 1 kHz) | = | 4,4 | |
| 5 | CCQU-3-F | 5,5 | k₁(20°C) | = | 16,0 | pN |
| 6 | APUQU-2-F | 2,0 | k₃(20°C) | = | 20,2 | pN |
| 7 | DGUQU-4-F | 4,0 | γ₁ (20°C) | = | 84 | mPa · s |
| 8 | DPGU-4-F | 2,0 | V₀ (20°C) | = | 1,98 | V |
| 9 | CC-3-V | 23,5 | V₉₀ / V₁₀ (20°C) | = | n.z.b. | |
| 10 | CC-3-V1 | 5,5 | | | | |
| 11 | CC-3-2V1 | 4,0 | | | | |
| 12 | CCP-V-1 | 10,0 | | | | |
| 13 | CCP-V2-1 | 4,0 | | | | |
| 14 | CCVC-3-V | 5,0 | | | | |
| 15 | PP-1-2V1 | 4,5 | | | | |
| 16 | PGP-2-2V | 3,0 | | | | |
| ∑ | | 100,0 | | | | |

Der Mischung werden 40 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 15:

| Mischung M-15: | | | | | | |
|---|---|---|---|---|---|---|
| Zusammensetzung | | | Physikalische Eigenschaften | | | |
| Verbindung | | | T(N,I) | = | 69,5 | °C |
| Nr. | Abkürzung | c/% | nₑ (20°C, 589,3 nm) | = | 1,6300 | |
| 1 | PGU-3-F | 4,0 | Δn (20°C, 589,3 nm) | = | 0,1337 | |
| 2 | PUQU-3-F | 9,50 | ε∥ (20°C, 1 kHz) | = | 8,2 | |
| 3 | PGUQU-3-F | 5,0 | Δε (20°C, 1 kHz) | = | 5,1 | |
| 4 | DGUQU-4-F | 2,0 | ε_{av.}(20°C, 1 kHz) | = | 4,8 | |
| 5 | PPGU-3-F | 0,50 | k₁(20°C) | = | 13,5 | pN |
| 6 | CC-3-V | 35,0 | k₃(20°C) | = | 12,0 | pN |
| 7 | CC-3-V1 | 7,0 | γ₁ (20°C) | = | 59 | mPa · s |
| 8 | CCP-V-1 | 7,0 | V₀ (20°C) | = | n.z.b. | V |
| 9 | PP-1-2V1 | 7,0 | V₉₀ / V₁₀ (20°C) | = | n.z.b. | |
| 10 | PGP-2-3 | 8,0 | | | | |
| 11 | PGP-2-4 | 8,0 | | | | |
| 12 | PGP-2-5 | 7,0 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 16:

| Mischung M-16: | | | | | | |
|---|---|---|---|---|---|---|
| Zusammensetzung | | | Physikalische Eigenschaften | | | |
| Verbindung | | | T(N,I) | = | 77 | °C |
| Nr. | Abkürzung | c/% | nₑ (20°C, 589,3 nm) | = | 1,6052 | |
| 1 | CCU-3-F | 2,50 | Δn (20°C, 589,3 nm) | = | 0,1206 | |
| 2 | CCQU-3-F | 4,0 | ε∥ (20°C, 1 kHz) | = | 15,8 | |
| 3 | PUQU-3-F | 14,0 | Δε (20°C, 1 kHz) | = | 12,2 | |
| 4 | CPGU-3-OT | 4,5 | ε_{av.}(20°C, 1 kHz) | = | 7,7 | |
| 5 | APUQU-2-F | 4,0 | k₁(20°C) | = | 12,0 | pN |
| 6 | APUQU-3-F | 5,0 | k₃(20°C) | = | 12,4 | pN |
| 7 | PGUQU-3-F | 4,0 | γ₁(20°C) | = | 78 | mPa · s |
| 8 | PGUQU-4-F | 6,0 | V₀ (20°C) | = | 1,05 | V |
| 9 | PGUQU-5-F | 1,50 | V₉₀ / V₁₀ (20°C) | = | n.z.b. | |
| 10 | PPGU-3-F | 0,50 | | | | |
| 11 | CC-3-V | 35,0 | | | | |
| 12 | CC-3-V1 | 5,0 | | | | |
| 13 | CCP-V-1 | 5,0 | | | | |
| 14 | PGP-2-2V | 9,0 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 17:

| Mischung M-17: | | | | | | |
|---|---|---|---|---|---|---|
| Zusammensetzung | | | Physikalische Eigenschaften | | | |
| Verbindung | | | T(N,I) | = | 74,7 | °C |
| Nr. | Abkürzung | c/% | nₑ (20°C, 589,3 nm) | = | 1,6284 | |
| 1 | PUQU-2-F | 3,0 | Δn (20°C, 589,3 nm) | = | 0,1338 | |
| 2 | PUQU-3-F | 13,5 | ε∥ (20°C, 1 kHz) | = | 10,6 | |
| 3 | PGUQU-3-F | 4,0 | Δε (20°C, 1 kHz) | = | 7,2 | |
| 4 | PGUQU-4-F | 4,0 | ε_{av.}(20°C, 1 kHz) | = | 5,8 | |
| 5 | DPGU-4-F | 3,0 | k₁(20°C) | = | 11,7 | pN |
| 6 | PPGU-3-F | 1,0 | k₃(20°C) | = | 12,7 | pN |
| 7 | CC-3-V | 38,5 | γ₁ (20°C) | = | 53 | mPa · s |
| 8 | CCP-V-1 | 9,0 | V₀ (20°C) | = | 1,34 | V |
| 9 | PP-1-2V1 | 4,0 | V₉₀ / V₁₀ (20°C) | = | n.z.b. | |
| 10 | PGP-1-2V | 10,0 | | | | |
| 11 | PGP-2-2V | 10,0 | | | | |
| ∑ | | 100,0 | | | | |

Der Mischung werden 40 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 18:

| Mischung M-18: | | | | | | |
|---|---|---|---|---|---|---|
| Zusammensetzung | | | Physikalische Eigenschaften | | | |
| Verbindung | | | T(N,I) | = | 61 | °C |
| Nr. | Abkürzung | c/% | nₑ (20°C, 589,3 nm) | = | 1,5989 | |
| 1 | PGU-3-F | 3,50 | Δn (20°C, 589,3 nm) | = | 0,1095 | |
| 2 | PUQU-3-F | 11,0 | ε∥ (20°C, 1 kHz) | = | 8,0 | |
| 3 | PGUQU-3-F | 5,0 | Δε (20°C, 1 kHz) | = | 4,9 | |
| 4 | DGUQU-4-F | 2,0 | ε_{av.}(20°C, 1 kHz) | = | 4,7 | |
| 5 | PPGU-3-F | 0,50 | k₁(20°C) | = | 10,9 | pN |
| 6 | CC-3-V | 52,0 | k₃(20°C) | = | 10,4 | pN |
| 7 | CC-3-V1 | 3,0 | γ₁ (20°C) | = | 45 | mPa · s |
| 8 | CCP-V-1 | 4,0 | V₀ (20°C) | = | n.z.b. | V |
| 9 | PP-1-2V1 | 2,0 | V₉₀ / V₁₀ (20°C) | = | n.z.b. | |
| 10 | PGP-2-3 | 7,0 | | | | |
| 11 | PGP-2-4 | 8,0 | | | | |
| 12 | PGP-2-5 | 2,0 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 19:

| Mischung M-19: | | | | | | |
|---|---|---|---|---|---|---|
| Zusammensetzung | | | Physikalische Eigenschaften | | | |
| Verbindung | | | T(N,I) | = | 99,9 °C | |
| Nr. | Abkürzung | c/% | nₑ (20°C, 589,3 nm) | = | 1,5700 | |
| 1 | PUQU-3-F | 8,0 | Δn (20°C, 589,3 nm) | = | 0,0889 | |
| 2 | DGUQU-4-F | 2,0 | ε∥ (20°C, 1 kHz) | = | 10,4 | |
| 3 | APUQU-3-F | 8,0 | Δε (20°C, 1 kHz) | = | 7,3 | |
| 4 | CDUQU-3-F | 8,0 | ε_{av.}(20°C, 1 kHz) | = | 5,5 | |
| 5 | CDU-3-F | 2,0 | k₁(20°C) | = | 15,7 | pN |
| 6 | CC-3-V | 32,0 | k₃(20°C) | = | 18,9 | pN |
| 7 | CC-3-V1 | 8,0 | γ₁(20°C) | = | 83 | mPa · s |
| 8 | CC-3-2V1 | 5,0 | V₀ (20°C) | = | 1,55 | V |
| 9 | CCP-V-1 | 8,0 | V₉₀ / V₁₀ (20°C) | = | n.z.b. | |
| 10 | CCP-V2-1 | 10,0 | | | | |
| 11 | CPP-3-2 | 2,0 | | | | |
| 12 | CCVC-3-V | 5,0 | | | | |
| 13 | CCPC-3-3 | 2,0 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 20:

| Mischung M-20: | | | | | | |
|---|---|---|---|---|---|---|
| Zusammensetzung | | | Physikalische Eigenschaften | | | |
| Verbindung | | | T(N,I) | = | 74,5 | °C |
| Nr. | Abkürzung | c/% | nₑ (20°C, 589,3 nm) | = | 1,6118 | |
| 1 | PGU-3-F | 2,0 | Δn (20°C, 589,3 nm) | = | 0,1197 | |
| 2 | PUQU-3-F | 11,0 | ε∥ (20°C, 1 kHz) | = | 8,0 | |
| 3 | PGUQU-3-F | 5,0 | Δε (20°C, 1 kHz) | = | 5,0 | |
| 4 | DGUQU-4-F | 2,0 | ε_{av.}(20°C, 1 kHz) | = | 4,7 | |
| 5 | PPGU-3-F | 0,5 | k₁(20°C) | = | 12,8 | pN |
| 6 | CC-3-V | 38,5 | k₃(20°C) | = | 13,2 | pN |
| 7 | CC-3-V1 | 8,0 | γ₁ (20°C) | = | 58 | mPa · s |
| 8 | CCP-V-1 | 13,0 | V₀ (20°C) | = | n.z.b. | V |
| 9 | PP-1-2V1 | 3,0 | V₉₀ / V₁₀ (20°C) | = | n.z.b. | |
| 10 | PGP-1-2V | 5,5 | | | | |
| 11 | PGP-2-2V | 4,5 | | | | |
| 12 | PGP-2-4 | 7,0 | | | | |
| ∑ | | 100,0 | | | | |

Der Mischung werden 40 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 21:

| Mischung M-21: | | | | | | |
|---|---|---|---|---|---|---|
| Zusammensetzung | | | Physikalische Eigenschaften | | | |
| Verbindung | | | T(N,I) | = | 74 | °C |
| Nr. | Abkürzung | c/% | nₑ (20°C, 589,3 nm) | = | 1,6413 | |
| 1 | PGU-3-F | 2,0 | Δn (20°C, 589,3 nm) | = | 0,1428 | |
| 2 | PUQU-3-F | 9,5 | ε∥ (20°C, 1 kHz) | = | 8,0 | |
| 3 | PGUQU-3-F | 5,0 | Δε (20°C, 1 kHz) | = | 4,9 | |
| 4 | DGUQU-4-F | 2,0 | ε_{av.}(20°C, 1 kHz) | = | 4,7 | |
| 5 | PPGU-3-F | 0,5 | k₁(20°C) | = | 14,2 | pN |
| 6 | CC-3-V | 33,0 | k₃(20°C) | = | 13,2 | pN |
| 7 | CC-3-V1 | 7,0 | γ₁ (20°C) | = | 63 | mPa · s |
| 8 | CCP-V-1 | 7,0 | V₀ (20°C) | = | n.z.b. | V |
| 9 | PP-1-2V1 | 9,0 | V₉₀ / V₁₀ (20°C) | = | n.z.b. | |
| 10 | PGP-2-3 | 8,0 | | | | |
| 11 | PGP-1-2V | 8,0 | | | | |
| 12 | PGP-2-2V | 9,0 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 22:

| Mischung M-22: | | | | | | |
|---|---|---|---|---|---|---|
| Zusammensetzung | | | Physikalische Eigenschaften | | | |
| Verbindung | | | T(N,I) | = | 78 | °C |
| Nr. | Abkürzung | c/% | nₑ (20°C, 589,3 nm) | = | 1,6090 | |
| 1 | CCU-5-F | 4,0 | Δn (20°C, 589,3 nm) | = | 0,1230 | |
| 2 | CPU-3-F | 10,0 | ε∥ (20°C, 1 kHz) | = | 14,4 | |
| 3 | CPU-3-F | 6,0 | Δε (20°C, 1 kHz) | = | 10,9 | |
| 4 | CCQU-3-F | 6,0 | ε_{av.}(20°C, 1 kHz) | = | 7,1 | |
| 5 | PUQU-3-F | 5,0 | k₁(20°C) | = | 12,8 | pN |
| 6 | APUQU-3-F | 3,50 | k₃(20°C) | = | 12,1 | pN |
| 7 | PGUQU-3-F | 3,0 | γ₁ (20°C) | = | 82 | mPa · s |
| 8 | PGUQU-4-F | 7,0 | V₀ (20°C) | = | 1,13 | V |
| 9 | PGUQU-5-F | 7,0 | V₉₀ / V₁₀ (20°C) | = | n.z.b. | |
| 10 | CC-3-V | 28,0 | | | | |
| 11 | CC-3-V1 | 8,0 | | | | |
| 12 | PGP-2-2V | 3,0 | | | | |
| 13 | PGP-2-3 | 5,0 | | | | |
| 14 | PGP-2-4 | 4,5 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 23:

| Mischung M-23: | | | | | | |
|---|---|---|---|---|---|---|
| Zusammensetzung | | | Physikalische Eigenschaften | | | |
| Verbindung | | | T(N,I) | = | 104,5 | °C |
| Nr. | Abkürzung | c/% | nₑ (20°C, 589,3 nm) | = | 1,6041 | |
| 1 | CCG-V-F | 4,0 | Δn (20°C, 589,3 nm) | = | 0,1148 | |
| 2 | CCP-3-OT | 6,5 | ε\|\| (20°C, 1 kHz) | = | 7,6 | |
| 3 | CDUQU-3-F | 4,0 | Δε (20°C, 1 kHz) | = | 4,7 | |
| 4 | PGUQU-3-F | 3,0 | ε_{av.}(20°C, 1 kHz) | = | 4,5 | |
| 5 | PGUQU-4-F | 1,5 | k₁(20°C) | = | 16,9 | pN |
| 6 | DGUQU-4-F | 3,5 | k₃(20°C) | = | 19,2 | pN |
| 7 | DPGU-4-F | 2,0 | γ₁ (20°C) | = | 80 | mPa · s |
| 8 | CC-3-V | 27,5 | V₀ (20°C) | = | 2,01 | V |
| 9 | CC-3-V1 | 8,5 | V₉₀ / V₁₀ (20°C) | = | n.z.b. | |
| 10 | CP-3-O2 | 1,5 | | | | |
| 11 | CCP-V-1 | 14,5 | | | | |
| 12 | CCP-V2-1 | 2,5 | | | | |
| 13 | CCVC-3-V | 5,0 | | | | |
| 14 | PP-1-2V1 | 4,0 | | | | |
| 15 | PGP-1-2V | 3,5 | | | | |
| 16 | PGP-2-2V | 6,0 | | | | |
| 17 | PGP-3-2V | 2,5 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 24:

| Mischung M-24: | | | | | | |
|---|---|---|---|---|---|---|
| Zusammensetzung | | | Physikalische Eigenschaften | | | |
| Verbindung | | | T(N,I) | = | 100,4 | °C |
| Nr. | Abkürzung | c/% | Δn (20°C, 589,3 nm) | = | 0,1173 | |
| 1 | CCP-3-OT | 5,0 | Δn (25°C, 589,3 nm) | = | 0,1159 | |
| 2 | CPG-3-F | 4,0 | Δε (20°C, 1 kHz) | = | 3,6 | |
| 3 | PUQU-3-F | 3,0 | Δε (25°C, 1 kHz) | = | 3,4 | |
| 4 | CCGU-3-F | 7,5 | ε_{av.}(20°C, 1 kHz) | = | n.z.b. | |
| 5 | APUQU-2-F | 4,0 | k₁(20°C) | = | 16,0 | pN |
| 6 | PPGU-3-F | 0,5 | k₃(20°C) | = | 18,3 | pN |
| 7 | CC-3-V | 36,5 | γ₁ (20°C) | = | 90 | mPa · s |
| 8 | CCP-V-1 | 14,0 | V₀ (20°C) | = | 2,23 | V |
| 9 | CCP-V2-1 | 5,0 | V₉₀ / V₁₀ (20°C) | = | n.z.b. | |
| 10 | CCP-3-1 | 1,5 | | | | |
| 11 | PP-1-2V1 | 6,5 | | | | |
| 12 | PGP-2-2V | 9,5 | | | | |
| 13 | CPGP-5-2 | 1,5 | | | | |
| 14 | CPGP-5-3 | 1,5 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 25:

| Mischung M-25: | | | | | | |
|---|---|---|---|---|---|---|
| Zusammensetzung | | | Physikalische Eigenschaften | | | |
| Verbindung | | | T(N,I) | = | 74,5 | °C |
| Nr. | Abkürzung | c/% | nₑ (20°C, 589,3 nm) | = | 1,6066 | |
| 1 | CCU-3-F | 2,5 | Δn (20°C, 589,3 nm) | = | 0,1200 | |
| 2 | CCQU-3-F | 4,0 | ε∥ (20°C, 1 kHz) | = | 14,1 | |
| 3 | PUQU-3-F | 13,0 | Δε (20°C, 1 kHz) | = | 10,6 | |
| 4 | CPGU-3-OT | 1,5 | ε_{av.}(20°C, 1 kHz) | = | 7,0 | |
| 5 | APUQU-2-F | 3,0 | k₁(20°C) | = | 11,9 | pN |
| 6 | APUQU-3-F | 4,0 | k₃(20°C) | = | 12,6 | pN |
| 7 | PGUQU-3-F | 3,0 | γ₁ (20°C) | = | 70 | mPa · s |
| 8 | PGUQU-4-F | 7,0 | V₀ (20°C) | = | 1,11 | V |
| 9 | PGUQU-5-F | 3,0 | V₉₀ / V₁₀ (20°C) | = | n.z.b. | |
| 10 | CC-3-V | 40,5 | | | | |
| 11 | CCP-V-1 | 6,5 | | | | |
| 12 | PGP-1-2V | 2,0 | | | | |
| 13 | PGP-2-2V | 8,0 | | | | |
| 14 | PGP-3-2V | 2,0 | | | | |
| Σ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 26:

| Mischung M-26: | | | | | | |
|---|---|---|---|---|---|---|
| Zusammensetzung | | | Physikalische Eigens chaften | | | |
| Verbindung | | | T(N,I) | = | 76,5 | °C |
| Nr. | Abkürzung | c/% | nₑ (20°C, 589,3 nm) | = | 1,6085 | |
| 1 | CCP-3-OT | 5,0 | Δn (20°C, 589,3 nm) | = | 0,1230 | |
| 2 | CCP-5-OT | 4,5 | ε∥ (20°C, 1 kHz) | = | 13,6 | |
| 3 | CCU-3-F | 4,0 | Δε (20°C, 1 kHz) | = | 10,1 | |
| 4 | CPU-3-F | 10,0 | ε_{av.}(20°C, 1 kHz) | = | 6,9 | |
| 5 | PUQU-3-F | 8,0 | k₁(20°C) | = | 12,7 | pN |
| 6 | PGUQU-3-F | 4,0 | k₃(20°C) | = | 12,2 | pN |
| 7 | PGUQU-4-F | 8,0 | γ₁ (20°C) | = | 73 | mPa · s |
| 8 | PGUQU-5-F | 7,0 | V₀ (20°C) | = | n.z.b. | V |
| 9 | CC-3-V | 32,5 | V₉₀ / V₁₀ (20°C) | = | n.z.b. | |
| 10 | CC-3-V1 | 5,5 | | | | |
| 11 | PGP-2-3 | 5,0 | | | | |
| 12 | PGP-2-5 | 4,0 | | | | |
| 13 | PGP-2-2V | 2,5 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 27:

| Mischung M-27: | | | | | | |
|---|---|---|---|---|---|---|
| Zusammensetzung | | | Physikalische Eigenschaften | | | |
| Verbindung | | | T(N,I) | = | 99,6 | °C |
| Nr. | Abkürzung | c/% | Δn (20°C, 589,3 nm) | = | 0,1230 | |
| 1 | PUQU-3-F | 5,0 | Δn (25°C, 589,3 nm) | = | 0,1224 | |
| 2 | APUQU-2-F | 4,5 | Δε (20°C, 1 kHz) | = | 5,4 | |
| 3 | APUQU-3-F | 4,5 | Δε (25°C, 1 kHz) | = | 5,2 | |
| 4 | CDUQU-3-F | 5,0 | ε_{av.}(20°C, 1 kHz) | = | 4,6 | |
| 5 | PPGU-3-F | 1,0 | k₁(20°C) | = | 16,7 | pN |
| 6 | CC-3-V | 36,0 | k₃(20°C) | = | 18,1 | pN |
| 7 | CC-3-2V1 | 3,0 | γ₁ (20°C) | = | 95 | mPa · s |
| 8 | CCP-V-1 | 13,0 | V₀ (20°C) | = | n.z.b. | V |
| 9 | CCP-V2-1 | 5,0 | V₉₀ / V₁₀ (20°C) | = | n.z.b. | |
| 10 | CPP-3-2 | 3,0 | | | | |
| 11 | PP-1-2V1 | 2,0 | | | | |
| 12 | PGP-1-2V | 5,0 | | | | |
| 13 | PGP-2-2V | 5,0 | | | | |
| 14 | PGP-2-3 | 4,0 | | | | |
| 15 | CPGP-5-2 | 2,0 | | | | |
| 16 | CPGP-5-3 | 2,0 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 28:

| Mischung M-28: | | | | | | |
|---|---|---|---|---|---|---|
| Zusammensetzung | | | Physikalische Eigenschaften | | | |
| Verbindung | | | T(N,I) | = | 98,8 | °C |
| Nr. | Abkürzung | c/% | nₑ (20°C, 589,3 nm) | = | 1,7025 | |
| 1 | PUQU-3-F | 7,5 | Δn (20°C, 589,3 nm) | = | 0,1957 | |
| 2 | PGUQU-3-F | 6,0 | ε∥ (20°C, 1 kHz) | = | 12,2 | |
| 3 | PGUQU-4-F | 7,0 | Δε (20°C, 1 kHz) | = | 8,6 | |
| 4 | DGUQU-4-F | 4,0 | ε_{av.}(20°C, 1 kHz) | = | 6,5 | |
| 5 | CC-3-V | 15,0 | k₁(20°C) | = | 16,7 | pN |
| 6 | CP-3-O1 | 10,0 | k₃(20°C) | = | 17,6 | pN |
| 7 | PP-1-2V1 | 5,0 | γ₁ (20°C) | = | 138 | mPa · s |
| 8 | PGP-1-2V | 13,0 | V₀ (20°C) | = | 1,47 | V |
| 9 | PGP-2-2V | 16,0 | V₉₀ / V₁₀ (20°C) | = | n.z.b. | |
| 10 | PGP-3-2V | 12,0 | | | | |
| 11 | CPGP-5-2 | 4,5 | | | | |
| ∑ | | 100,0 | | | | |

Der Mischung werden 40 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 29:

| Mischung M-29: | | | | | | |
|---|---|---|---|---|---|---|
| Zusammensetzung | | | Physikalische Eigenschaften | | | |
| Verbindung | | | T(N,I) | = | 74,7 | °C |
| Nr. | Abkürzung | c/% | nₑ (20°C, 589,3 nm) | = | 1,6156 | |
| 1 | UQU-3-F | 11,5 | Δn (20°C, 589,3 nm) | = | 0,1245 | |
| 2 | CPGU-3-OT | 7,0 | ε∥ (20°C, 1 kHz) | = | 6,8 | |
| 3 | PPGU-3-F | 0,5 | Δε (20°C, 1 kHz) | = | 3,8 | |
| 4 | CC-3-V | 51,5 | ε_{av.}(20°C, 1 kHz) | = | 4,3 | |
| 5 | CCP-V-1 | 2,0 | k₁(20°C) | = | 12,1 | pN |
| 6 | PGP-2-3 | 12,0 | k₃(20°C) | = | 12,0 | pN |
| 7 | PGP-2-2V | 15,5 | γ₁ (20°C) | = | 47 | mPa · s |
| ∑ | | 100,0 | V₀ (20°C) | = | 1,88 | V |
| | | | V₉₀ / V₁₀ (20°C) | = | n.z.b. | |

Der Mischung werden 40 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 30:

| Mischung M-30: | | | | | | |
|---|---|---|---|---|---|---|
| Zusammensetzung | | | Physikalische Eigenschaften | | | |
| Verbindung | | | T(N,I) | = | 102,9 | °C |
| Nr. | Abkürzung | c/% | nₑ (20°C, 589,3 nm) | = | 1,5950 | |
| 1 | CCG-V-F | 4,0 | Δn (20°C, 589,3 nm) | = | 0,1091 | |
| 2 | CCGU-3-F | 3,0 | ε∥ (20°C, 1 kHz) | = | 9,0 | |
| 3 | CCQU-3-F | 14,0 | Δε (20°C, 1 kHz) | = | 6,0 | |
| 4 | PUQU-3-F | 9,5 | ε_{av.}(20°C, 1 kHz) | = | 5,0 | |
| 5 | CPGU-3-OT | 3,0 | k₁(20°C) | = | 15,8 | pN |
| 6 | PGUQU-4-F | 3,0 | k₃(20°C) | = | 18,2 | pN |
| 7 | CC-3-V | 23,5 | γ₁ (20°C) | = | 94 | mPa · s |
| 8 | CC-3-V1 | 8,0 | V₀ (20°C) | = | 1,70 | V |
| 9 | CC-3-2V1 | 3,0 | V₉₀ / V₁₀ (20°C) | = | n.z.b. | |
| 10 | CCP-V-1 | 10,5 | | | | |
| 11 | CCP-V2-1 | 8,0 | | | | |
| 12 | PGP-2-2V | 4,5 | | | | |
| 13 | PGP-2-3 | 3,0 | | | | |
| 14 | CGPC-3-3 | 1,5 | | | | |
| 15 | CPGP-5-2 | 1,5 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 31:

| Mischung M-31: | | | | | | |
|---|---|---|---|---|---|---|
| Zusammensetzung | | | Physikalische Eigenschaften | | | |
| Verbindung | | | T(N,I) | = | 80,2 | °C |
| Nr. | Abkürzung | c/% | nₑ (20°C, 589,3 nm) | = | 1,5823 | |
| 1 | CCP-3-OT | 5,5 | Δn (20°C, 589,3 nm) | = | 0,1021 | |
| 2 | CCU-3-F | 2,5 | ε∥ (20°C, 1 kHz) | = | 15,7 | |
| 3 | PUQU-3-F | 13,5 | Δε (20°C, 1 kHz) | = | 12,0 | |
| 4 | CPGU-3-OT | 4,0 | ε_{av.}(20°C, 1 kHz) | = | 7,7 | |
| 5 | DPGU-4-F | 4,0 | k₁(20°C) | = | 12,3 | pN |
| 6 | APUQU-2-F | 4,5 | k₃(20°C) | = | 14,0 | pN |
| 7 | APUQU-3-F | 8,0 | γ₁(20°C) | = | 79 | mPa · s |
| 8 | CDUQU-3-F | 3,0 | V₀ (20°C) | = | 1,06 | V |
| 9 | PGUQU-3-F | 4,0 | V₉₀ / V₁₀ (20°C) | = | n.z.b. | |
| 10 | CC-3-V | 36,0 | | | | |
| 11 | CC-3-V1 | 6,5 | | | | |
| 12 | CCP-V-1 | 8,5 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 32:

| Mischung M-32: | | | | | | |
|---|---|---|---|---|---|---|
| Zusammensetzung | | | Physikalische Eigenschaften | | | |
| Verbindung | | | T(N,I) | = | 94,5 | °C |
| Nr. | Abkürzung | c/% | nₑ (20°C, 589,3 nm) | = | 1,5909 | |
| 1 | CCP-3-OT | 4,5 | Δn (20°C, 589,3 nm) | = | 0,1088 | |
| 2 | CCGU-3-F | 2,5 | ε∥ (20°C, 1 kHz) | = | 14,4 | |
| 3 | PUQU-3-F | 6,0 | Δε (20°C, 1 kHz) | = | 11,0 | |
| 4 | APUQU-2-F | 5,0 | ε_{av.}(20°C, 1 kHz) | = | 7,1 | |
| 5 | APUQU-3-F | 9,0 | k₁(20°C) | = | 14,4 | pN |
| 6 | PGUQU-4-F | 8,0 | k₃(20°C) | = | 16,2 | pN |
| 7 | PGUQU-5-F | 7,0 | γ₁ (20°C) | = | 91 | mPa · s |
| 8 | CC-3-V | 28,0 | V₀ (20°C) | = | 1,20 | V |
| 9 | CC-3-V1 | 13,0 | V₉₀ / V₁₀ (20°C) | = | n.z.b. | |
| 10 | CCP-V-1 | 10,0 | | | | |
| 11 | CCP-V2-1 | 7,0 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 33:

| Mischung M-33: | | | | | | |
|---|---|---|---|---|---|---|
| Zusammensetzung | | | Physikalische Eigenschaften | | | |
| Verbindung | | | T(N,I) | = | 89,0 | °C |
| Nr. | Abkürzung | c/% | nₑ (20°C, 589,3 nm) | = | 1,5888 | |
| 1 | CCP-3-OT | 8,0 | Δn (20°C, 589,3 nm) | = | 0,1092 | |
| 2 | APUQU-2-F | 8,0 | ε∥ (20°C, 1 kHz) | = | 18,8 | |
| 3 | APUQU-3-F | 7,0 | Δε (20°C, 1 kHz) | = | 15,1 | |
| 4 | PGUQU-3-F | 3,0 | ε_{av.}(20°C, 1 kHz) | = | 8,7 | |
| 5 | PGUQU-4-F | 9,0 | k₁(20°C) | = | 14,3 | pN |
| 6 | DPGU-4-F | 6,0 | k₃(20°C) | = | 15,0 | pN |
| 7 | DGUQU-4-F | 8,0 | γ₁ (20°C) | = | 91 | mPa · s |
| 8 | CC-3-V | 33,5 | V₀ (20°C) | = | 1,02 | V |
| 9 | CC-3-V1 | 12,0 | V₉₀ / V₁₀ (20°C) | = | n.z.b. | |
| 10 | CCP-V-1 | 4,0 | | | | |
| 11 | PP-1-2V1 | 1.5 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 34:

| Mischung M-34: | | | | | | |
|---|---|---|---|---|---|---|
| Zusammensetzung | | | Physikalische Eigenschaften | | | |
| Verbindung | | | T(N,I) | = | 75,5 | °C |
| Nr. | Abkürzung | c/% | nₑ (20°C, 589,3 nm) | = | 1,5857 | |
| 1 | CPGU-3-OT | 3,5 | Δn (20°C, 589,3 nm) | = | 0,1028 | |
| 2 | PPGU-3-F | 0,5 | ε∥ (20°C, 1 kHz) | = | 9,3 | |
| 3 | APUQU-2-F | 8,0 | Δε (20°C, 1 kHz) | = | 6,2 | |
| 4 | APUQU-3-F | 8,0 | ε_{av.}(20°C, 1 kHz) | = | 5,2 | |
| 5 | CDUQU-3-F | 1,5 | k₁(20°C) | = | 12,8 | pN |
| 6 | PGUQU-3-F | 4,0 | k₃(20°C) | = | 13,3 | pN |
| 7 | CC-3-V | 52,0 | γ₁ (20°C) | = | 53 | mPa · s |
| 8 | CC-3-V1 | 10,0 | V₀ (20°C) | = | 1,52 | V |
| 9 | PGP-2-3 | 3,5 | V₉₀ / V₁₀ (20°C) | = | n.z.b. | |
| 10 | PGP-2-4 | 9,0 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 35:

| Mischung M-35: | | | | | | |
|---|---|---|---|---|---|---|
| Zusammensetzung | | | Physikalische Eigenschaften | | | |
| Verbindung | | | T(N,I) | = | 75,0 | °C |
| Nr. | Abkürzung | c/% | nₑ (20°C, 589,3 nm) | = | 1,5871 | |
| 1 | APUQU-2-F | 5,5 | Δn (20°C, 589,3 nm) | = | 0,1025 | |
| 2 | APUQU-3-F | 8,0 | ε∥ (20°C, 1 kHz) | = | 8,1 | |
| 3 | CDUQU-3-F | 1,0 | Δε (20°C, 1 kHz) | = | 5,1 | |
| 4 | CPGU-3-OT | 1,0 | ε_{av.}(20°C, 1 kHz) | = | 4,7 | |
| 5 | PGUQU-3-F | 5,0 | k₁(20°C) | = | 12,8 | pN |
| 6 | PPGU-3-F | 0,5 | k₃(20°C) | = | 13,5 | pN |
| 7 | CC-3-V | 52,0 | γ₁ (20°C) | = | 51 | mPa · s |
| 8 | CC-3-V1 | 10,0 | V₀ (20°C) | = | 1,67 | V |
| 9 | CCP-V-1 | 3,0 | V₉₀ / V₁₀ (20°C) | = | n.z.b. | |
| 10 | PGP-2-3 | 6,0 | | | | |
| 11 | PGP-2-4 | 8,0 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 36:

| Mischung M-36: | | | | | | |
|---|---|---|---|---|---|---|
| Zusammensetzung | | | Physikalische Eigenschaften | | | |
| Verbindung | | | T(N,I) | = | 99,6 | °C |
| Nr. | Abkürzung | c/% | Δn (20°C, 589,3 nm) | = | 0,1278 | |
| 1 | CPU-3-F | 5,0 | Δε (20°C, 1 kHz) | = | 5,2 | |
| 2 | PUQU-3-F | 9,5 | k₁(20°C) | = | 15,8 | pN |
| 3 | APUQU-3-F | 4,0 | k₃(20°C) | = | 17,4 | pN |
| 4 | PGUQU-3-F | 3,5 | γ₁ (20°C) | = | 96 | mPa · s |
| 5 | PPGU-3-F | 0,5 | V₀ (20°C) | = | 1,85 | V |
| 6 | CC-3-V | 30,5 | | | | |
| 7 | CC-3-V1 | 1,5 | | | | |
| 8 | CC-3-2V1 | 3,0 | | | | |
| 9 | CCP-V-1 | 12,0 | | | | |
| 10 | CCP-V2-1 | 7,0 | | | | |
| 11 | CCP-3-3 | 1,5 | | | | |
| 12 | PP-1-2V1 | 4,0 | | | | |
| 13 | PGP-2-3 | 5,0 | | | | |
| 14 | PGP-2-4 | 5,0 | | | | |
| 15 | CPGP-4-3 | 2,0 | | | | |
| 16 | CPGP-5-2 | 3,0 | | | | |
| 17 | CPGP-5-3 | 3,0 | | | | |
| ∑ | | 100,0 | | | | |

Der Mischung werden 40 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 37:

| Mischung M-37: | | | | | | |
|---|---|---|---|---|---|---|
| Zusammensetzung | | | Physikalische Eigenschaften | | | |
| Verbindung | | | T(N,I) | = | 100,7 | °C |
| Nr. | Abkürzung | c/% | Δn (20°C, 589,3 nm) | = | 0,1193 | |
| 1 | PUQU-3-F | 10,0 | Δε (20°C, 1 kHz) | = | 5,3 | |
| 2 | CPGU-3-OT | 5,5 | k₁(20°C) | = | 15,9 | pN |
| 3 | CDUQU-3-F | 5,0 | k₃(20°C) | = | 18,4 | pN |
| 4 | PGUQU-3-F | 1,0 | γ₁ (20°C) | = | 83 | mPa · s |
| 5 | PPGU-3-F | 0,5 | V₀ (20°C) | = | 1,84 | V |
| 6 | CC-3-V | 31,0 | | | | |
| 7 | CC-3-V1 | 3,5 | | | | |
| 8 | CC-3-2V1 | 4,0 | | | | |
| 9 | CCP-V-1 | 13,0 | | | | |
| 10 | CCP-V2-1 | 12,5 | | | | |
| 11 | PGP-1-2V | 7,0 | | | | |
| 12 | PGP-2-2V | 7,0 | | | | |
| ∑ | | 100,0 | | | | |

Der Mischung werden 40 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 38:

| Mischung M-38: | | | | | | |
|---|---|---|---|---|---|---|
| Zusammensetzung | | | Physikalische Eigenschaften | | | |
| Verbindung | | | T(N,I) | = | 90,7 | °C |
| Nr. | Abkürzung | c/% | Δn (20°C, 589,3 nm) | = | 0,1188 | |
| 1 | PUQU-3-F | 12,0 | Δε (20°C, 1 kHz) | = | 9,8 | |
| 2 | APUQU-2-F | 6,0 | k₁(20°C) | = | 14,3 | pN |
| 3 | APUQU-3-F | 7,0 | k₃(20°C) | = | 16,4 | pN |
| 4 | CDUQU-3-F | 8,0 | γ₁ (20°C) | = | 78 | mPa · s |
| 5 | PPGU-3-F | 1,0 | V₀ (20°C) | = | 1,28 | V |
| 6 | CC-3-V | 31,0 | | | | |
| 7 | CC-3-V1 | 3,0 | | | | |
| 8 | CC-3-2V1 | 3,0 | | | | |
| 9 | CCP-3-1 | 2,0 | | | | |
| 10 | CCP-V-1 | 12,0 | | | | |
| 11 | PGP-2-3 | 4,5 | | | | |
| 12 | PGP-1-2V | 4,5 | | | | |
| 13 | PGP-2-2V | 4,5 | | | | |
| 14 | CCPC-3-3 | 1,5 | | | | |
| ∑ | | 100,0 | | | | |

Der Mischung werden 40 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 39:

| Mischung M-39: | | | | | | |
|---|---|---|---|---|---|---|
| Zusammensetzung | | | Physikalische Eigenschaften | | | |
| Verbindung | | | T(N,I) | = | 89,6 | °C |
| Nr. | Abkürzung | c/% | Δn (20°C, 589,3 nm) | = | 0,1192 | |
| 1 | CCP-3-OT | 8,0 | Δε (20°C, 1 kHz) | = | 9,9 | |
| 2 | PUQU-2-F | 5,0 | k₁(20°C) | = | 14,0 | pN |
| 3 | PUQU-3-F | 1,5 | k₃(20°C) | = | 14,7 | pN |
| 4 | CPGU-3-OT | 6,0 | γ₁ (20°C) | = | 77 | mPa · s |
| 5 | APUQU-2-F | 5,5 | V₀ (20°C) | = | 1,26 | V |
| 6 | APUQU-3-F | 5,0 | | | | |
| 7 | CDUQU-3-F | 3,0 | | | | |
| 8 | PGUQU-3-F | 7,5 | | | | |
| 9 | PPGU-3-F | 1,0 | | | | |
| 10 | CC-3-V | 40,0 | | | | |
| 11 | CC-3-V1 | 2,5 | | | | |
| 12 | CCP-3-1 | 5,0 | | | | |
| 13 | PGP-2-2V | 10,0 | | | | |
| ∑ | | 100,0 | | | | |

Der Mischung werden 40 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 40:

| Mischung M-40: | | | | | | |
|---|---|---|---|---|---|---|
| Zusammensetzung | | | Physikalische Eigenschaften | | | |
| Verbindung | | | T(N,I) | = | 94,8 | °C |
| Nr. | Abkürzung | c/% | Δn (20°C, 589,3 nm) | = | 0,1965 | |
| 1 | PGU-2-F | 3,0 | Δε (20°C, 1 kHz) | = | 9,9 | |
| 2 | PGU-3-F | 3,0 | k₁(20°C) | = | 17,1 | pN |
| 3 | PGIGI-3-F | 6,0 | k₃(20°C) | = | 17,2 | pN |
| 4 | PUQU-3-F | 13,0 | γ₁ (20°C) | = | 148 | mPa · s |
| 5 | PGUQU-3-F | 4,0 | V₀ (20°C) | = | 1,39 | V |
| 6 | PGUQU-4-F | 4,0 | | | | |
| 7 | PGUQU-5-F | 3,0 | | | | |
| 8 | PPGU-3-F | 1,0 | | | | |
| 9 | CC-3-V | 13,0 | | | | |
| 10 | CP-3-O1 | 6,0 | | | | |
| 11 | PP-1-2V1 | 10,0 | | | | |
| 12 | PGP-1-2V | 10,0 | | | | |
| 13 | PGP-2-2V | 13,0 | | | | |
| 14 | CPGP-4-3 | 3,0 | | | | |
| 15 | CPGP-5-2 | 4,0 | | | | |
| 16 | CPGP-5-3 | 4,0 | | | | |
| ∑ | | 100.0 | | | | |

Der Mischung werden 40 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 41:

| Mischung M-40: | | | | | | |
|---|---|---|---|---|---|---|
| Zusammensetzung | | | Physikalische Eigenschaften | | | |
| Verbindung | | | T(N,I) | = | 91,2 | °C |
| Nr. | Abkürzung | c/% | Δn (20°C, 589,3 nm) | = | 0,0709 | |
| 1 | CCU-1-F | 9,0 | Δε (20°C, 1 kHz) | = | 9,5 | |
| 2 | CCU-2-F | 10,0 | k₁(20°C) | = | 10,3 | pN |
| 3 | CCU-3-F | 12,0 | k₃(20°C) | = | 13,2 | pN |
| 4 | CCU-5-F | 5,0 | γ₁ (20°C) | = | 161 | mPa · s |
| 5 | CGU-2-F | 8,0 | V₀ (20°C) | = | 1,10 | V |
| 6 | CCQU-2-F | 12,0 | | | | |
| 7 | CCQU-3-F | 12,0 | | | | |
| 8 | CCQU-5-F | 12,0 | | | | |
| 9 | CC-3-4 | 9,0 | | | | |
| 10 | CCZC-3-3 | 3,0 | | | | |
| 11 | CCZC-3-5 | 3,0 | | | | |
| 12 | CCZC-4-3 | 2,0 | | | | |
| 13 | CCPC-3-4 | 3,0 | | | | |
| ∑ | | 100,0 | | | | |

Der Mischung werden 40 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 42:

| Mischung M-42: | | | | | | |
|---|---|---|---|---|---|---|
| Zusammensetzung | | | Physikalische Eigenschaften | | | |
| Verbindung | | | T(N,I) | = | 95,1 | °C |
| Nr. | Abkürzung | c/% | nₑ (20°C, 589,3 nm) | = | 1,5900 | |
| 1 | CCP-3-OT | 5,0 | Δn (20°C, 589,3 nm) | = | 0,1049 | |
| 2 | CCP-5-OT | 2,5 | ε∥ (20°C, 1 kHz) | = | 7,8 | |
| 3 | APUQU-2-F | 2,0 | Δε (20°C, 1 kHz) | = | 4,9 | |
| 4 | APUQU-3-F | 4,0 | ε_{av.}(20°C, 1 kHz) | = | 4,5 | |
| 5 | CDUQU-3-F | 8,0 | k₁(20°C) | = | 15,6 | pN |
| 6 | PGUQU-3-F | 3,0 | k₃(20°C) | = | 17,5 | pN |
| 7 | CC-3-V | 40,0 | γ₁ (20°C) | = | 67 | mPa · s |
| 8 | CC-3-V1 | 7,0 | V₀ (20°C) | = | 1,87 | V |
| 9 | CCP-V-1 | 10,5 | | | | |
| 10 | CCP-V2-1 | 5,0 | | | | |
| 11 | PGP-2-2V | 13,0 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 43:

| Mischung M-43: | | | | | | |
|---|---|---|---|---|---|---|
| Zusammensetzung | | | Physikalische Eigenschaften | | | |
| Verbindung | | | T(N,I) | = | 103 | °C |
| Nr. | Abkürzung | c/% | nₑ (20°C, 589,3 nm) | = | 1,6039 | |
| 1 | CCG-V-F | 3,0 | Δn (20°C, 589,3 nm) | = | 0,1144 | |
| 2 | CCP-3-OT | 6,5 | ε∥ (20°C, 1 kHz) | = | 7,6 | |
| 3 | APUQU-3-F | 2,0 | Δε (20°C, 1 kHz) | = | 4,7 | |
| 4 | DGUQU-4-F | 3,5 | ε_{av.}(20°C, 1 kHz) | = | 4,5 | |
| 5 | PGUQU-3-F | 4,0 | k₁(20°C) | = | 16,5 | pN |
| 6 | PGUQU-4-F | 5,0 | k₃(20°C) | = | 19,5 | pN |
| 7 | CC-3-V | 25,5 | γ₁ (20°C) | = | 82 | mPa · s |
| 8 | CC-3-V1 | 8,5 | V₀ (20°C) | = | 1,97 | V |
| 9 | CP-3-O2 | 4,0 | | | | |
| 10 | CPP-3-2 | 1,5 | | | | |
| 11 | CCP-V-1 | 14,5 | | | | |
| 12 | CCP-V2-1 | 5,0 | | | | |
| 13 | CCVC-3-V | 5,0 | | | | |
| 14 | PP-1-2V1 | 4,0 | | | | |
| 15 | PGP-1-2V | 6,0 | | | | |
| 16 | PGP-2-2V | 2,0 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 44:

| Mischung M-44: | | | | | | |
|---|---|---|---|---|---|---|
| Zusammensetzung | | | Physikalische Eigenschaften | | | |
| Verbindung | | | T(N,I) | = | 105 | °C |
| Nr. | Abkürzung | c/% | nₑ (20°C, 589,3 nm) | = | n.z.b. | |
| 1 | CCG-V-F | 1,0 | Δn (20°C, 589,3 nm) | = | n.z.b. | |
| 2 | CCP-3-OT | 6,5 | ε∥ (20°C, 1 kHz) | = | 7,6 | |
| 3 | APUQU-2-F | 3,0 | Δε (20°C, 1 kHz) | = | 4,7 | |
| 4 | APUQU-3-F | 3,0 | ε_{av.}(20°C, 1 kHz) | = | 4,5 | |
| 5 | PGUQU-3-F | 3,0 | k₁(20°C) | = | 16,8 | pN |
| 6 | PGUQU-4-F | 4,0 | k₃(20°C) | = | 19,5 | pN |
| 7 | PGUQU-5-F | 3,0 | γ₁ (20°C) | = | n.z.b. | mPa · s |
| 8 | CC-3-V | 24,0 | V₀ (20°C) | = | 1,98 | V |
| 9 | CC-3-V1 | 8,5 | | | | |
| 10 | CP-3-O2 | 6,0 | | | | |
| 11 | CCP-V-1 | 15,0 | | | | |
| 12 | CCP-V2-1 | 7,0 | | | | |
| 13 | CCVC-3-V | 5,0 | | | | |
| 14 | PP-1-2V1 | 2,5 | | | | |
| 15 | PGP-1-2V | 3,5 | | | | |
| 16 | PGP-2-2V | 5,0 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 45:

| Mischung M-45: | | | | | | |
|---|---|---|---|---|---|---|
| Zusammensetzung | | | Physikalische Eigenschaften | | | |
| Verbindung | | | T(N,I) | = | 105 | °C |
| Nr. | Abkürzung | c/% | nₑ (20°C, 589,3 nm) | = | n.z.b. | |
| 1 | CCP-3-OT | 6,5 | Δn (20°C, 589,3 nm) | = | n.z.b. | |
| 2 | APUQU-2-F | 2,0 | ε∥ (20°C, 1 kHz) | = | 7,6 | |
| 3 | APUQU-3-F | 3,0 | Δε (20°C, 1 kHz) | = | 4,7 | |
| 4 | CDUQU-3-F | 4,0 | ε_{av.}(20°C, 1 kHz) | = | 4,5 | |
| 5 | PGUQU-3-F | 3,0 | k₁(20°C) | = | 17,0 | pN |
| 6 | PGUQU-4-F | 4,0 | k₃(20°C) | = | 19,7 | pN |
| 7 | CC-3-V | 25,0 | γ₁ (20°C) | = | n.z.b. | mPa · s |
| 8 | CC-3-V1 | 8,5 | V₀ (20°C) | = | 1,99 | V |
| 9 | CP-3-O2 | 6,0 | | | | |
| 10 | CCP-V-1 | 15,0 | | | | |
| 11 | CCP-V2-1 | 4,5 | | | | |
| 12 | CCVC-3-V | 5,0 | | | | |
| 13 | PP-1-2V1 | 2,0 | | | | |
| 14 | PGP-1-2V | 3,5 | | | | |
| 15 | PGP-2-2V | 5,0 | | | | |
| 16 | PGP-3-2V | 3.0 | | | | |
| ∑ | | 100.0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 46:

| Mischung M-46: | | | | | | |
|---|---|---|---|---|---|---|
| Zusammensetzung | | | Physikalische Eigenschaften | | | |
| Verbindung | | | T(N,I) | = | 74 | °C |
| Nr. | Abkürzung | c/% | nₑ (20°C, 589,3 nm) | = | 1,6056 | |
| 1 | CCQU-3-F | 5,0 | Δn (20°C, 589,3 nm) | = | 0,1199 | |
| 2 | PUQU-3-F | 12,5 | ε∥ (20°C, 1 kHz) | = | 14,0 | |
| 3 | CPGU-3-OT | 3,0 | Δε (20°C, 1 kHz) | = | 10,4 | |
| 4 | APUQU-2-F | 3,0 | ε_{av.}(20°C, 1 kHz) | = | 7,1 | |
| 5 | APUQU-3-F | 4,5 | k₁(20°C) | = | n.z.b. | pN |
| 6 | PGUQU-3-F | 3,0 | k₃(20°C) | = | n.z.b. | pN |
| 7 | PGUQU-4-F | 6,5 | γ₁ (20°C) | = | n.z.b. | mPa · s |
| 8 | PGUQU-5-F | 3,0 | V₀ (20°C) | = | n.z.b. | V |
| 9 | CC-3-V | 43,0 | | | | |
| 10 | CCP-V-1 | 4,5 | | | | |
| 11 | PGP-1-2V | 2,5 | | | | |
| 12 | PGP-2-2V | 7,5 | | | | |
| 13 | PGP-3-2V | 2,0 | | | | |
| ∑ | | 100.0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 47:

| Mischung M-47: | | | | | | |
|---|---|---|---|---|---|---|
| Zusammensetzung | | | Physikalische Eigenschaften | | | |
| Verbindung | | | T(N,I) | = | 83 | °C |
| Nr. | Abkürzung | c/% | nₑ (20°C, 589,3 nm) | = | 1,5928 | |
| 1 | CCU-2-F | 7,5 | Δn (20°C, 589,3 nm) | = | 0,1103 | |
| 2 | CCU-3-F | 10,0 | ε∥ (20°C, 1 kHz) | = | 16,7 | |
| 3 | CCQU-2-F | 3,0 | Δε (20°C, 1 kHz) | = | 13,1 | |
| 4 | CCQU-3-F | 4,0 | ε_{av.}(20°C, 1 kHz) | = | 8,0 | |
| 5 | PUQU-3-F | 8,0 | k₁(20°C) | = | 12,9 | pN |
| 6 | APUQU-2-F | 6,0 | k₃(20°C) | = | 12,7 | pN |
| 7 | APUQU-3-F | 6,5 | γ₁ (20°C) | = | 94 | mPa · s |
| 8 | PGUQU-3-F | 4,0 | V₀ (20°C) | = | 1,04 | V |
| 9 | PGUQU-4-F | 6,5 | | | | |
| 10 | CC-3-V | 15,0 | | | | |
| 11 | CC-3-V1 | 8,0 | | | | |
| 12 | CC-3-4 | 8,0 | | | | |
| 13 | CCP-V-1 | 7,0 | | | | |
| 14 | PGP-2-2V | 6,5 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 48:

| Mischung M-48: | | | | | | |
|---|---|---|---|---|---|---|
| Zusammensetzung | | | Physikalische Eigenschaften | | | |
| Verbindung | | | T(N,I) | = | 100,8 | °C |
| Nr. | Abkürzung | c/% | nₑ (20°C, 589,3 nm) | = | 1,5924 | |
| 1 | CPU-3-F | 7,0 | Δn (20°C, 589,3 nm) | = | 0,1080 | |
| 2 | CCQU-3-F | 10,0 | ε∥ (20°C, 1 kHz) | = | 8,6 | |
| 3 | CCGU-3-F | 6,0 | Δε (20°C, 1 kHz) | = | 5,8 | |
| 4 | PGUQU-3-F | 2,0 | ε_{av.}(20°C, 1 kHz) | = | 4,7 | |
| 5 | PGUQU-4-F | 6,0 | k₁(20°C) | = | 15,5 | pN |
| 6 | PGUQU-5-F | 2,5 | k₃(20°C) | = | 18,3 | pN |
| 7 | PPGU-3-F | 0,5 | γ₁ (20°C) | = | 87 | mPa · s |
| 8 | CC-3-V | 34,5 | V₀ (20°C) | = | 1,72 | V |
| 9 | CC-3-V1 | 8,0 | | | | |
| 10 | CC-3-2V1 | 3,0 | | | | |
| 11 | CCP-V-1 | 5,5 | | | | |
| 12 | CCP-V2-1 | 5,5 | | | | |
| 13 | CPPC-3-3 | 1,5 | | | | |
| 14 | PGP-2-2V | 5,0 | | | | |
| 15 | CPGP-5-2 | 3,0 | | | | |
| ∑ | | 100.0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

### Beispiel 49:

| Mischung M-49: | | | | | | |
|---|---|---|---|---|---|---|
| Zusammensetzung | | | Physikalische Eigenschaften | | | |
| Verbindung | | | T(N,I) | = | 82,5 | °C |
| Nr. | Abkürzung | c/% | nₑ (20°C, 589,3 nm) | = | 1,5921 | |
| 1 | CCU-2-F | 2,0 | Δn (20°C, 589,3 nm) | = | 0,1101 | |
| 2 | CCU-3-F | 7,0 | ε∥ (20°C, 1 kHz) | = | 16,5 | |
| 3 | CCQU-2-F | 2,0 | Δε (20°C, 1 kHz) | = | 12,9 | |
| 4 | CCQU-3-F | 7,0 | ε_{av.}(20°C. 1 kHz) | = | 7,9 | |
| 5 | PUQU-3-F | 8,0 | k₁(20°C) | = | 12,6 | pN |
| 6 | APUQU-2-F | 7,0 | k₃(20°C) | = | 13,0 | pN |
| 7 | APUQU-3-F | 7,0 | γ₁ (20°C) | = | 88 | mPa · s |
| 8 | PGUQU-3-F | 4,0 | V₀ (20°C) | = | 1,04 | V |
| 9 | PGUQU-4-F | 7,5 | V₉₀ / V₁₀ (20°C) | = | n.z.b. | |
| 10 | CC-3-V | 25,0 | | | | |
| 11 | CC-3-V1 | 3,0 | | | | |
| 12 | CC-3-4 | 6,0 | | | | |
| 13 | CCP-V-1 | 9,0 | | | | |
| 14 | PGP-2-2V | 5,5 | | | | |
| ∑ | | 100,0 | | | | |

Der Mischung werden 50 ppm der Verbindung der Formel I-1-1a zugesetzt. Die resultierende Mischungen wird wie oben beschrieben untersucht. Sie zeichnen sich insbesondere durch eine ausgezeichnete Stabilität gegen thermische Belastung aus.

## Patentansprüche

1. Flüssigkristallmedium mit positiver dielektrischer Anisotropie, **dadurch gekennzeichnet, dass** es
a) eine oder mehrere Verbindungen der Formel I, 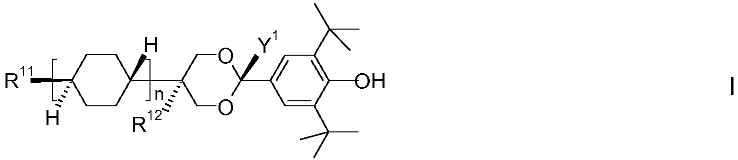 worin
n 0 oder 1,
R¹¹ H, F, Cl, eine geradkettige oder verzweigte Alkylkette mit 1-20 C-Atomen, in der eine -CH₂- -Gruppe oder mehrere -CH₂- -Gruppen durch -O- -C(=O)- oder 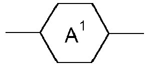 ersetzt sein können, jedoch nicht zwei benachbarte -CH₂- -Gruppen durch -O- ersetzt sein können, einen Kohlenwasserstoffrest, der eine Cycloalkandiyl-, oder eine Alkylcycloalkandiyleinheit enthält, und, in dem eine -CH₂- -Gruppe oder mehrere -CH₂--Gruppen durch -O- oder -C(=O)- ersetzt sein können, jedoch nicht zwei benachbarte -CH₂- -Gruppen durch -O- ersetzt sein können,
R¹² H, F, Cl, CN, CF₃, OCF oder eine geradkettige oder verzweigte Alkylkette mit 1-20 C-Atomen, in der eine -CH₂- -Gruppe oder mehrere -CH₂- -Gruppen durch -O- oder -C(=O)- ersetzt sein können, jedoch nicht zwei benachbarte -CH₂- -Gruppen durch -O- ersetzt sein können,
Y¹ H, F, Cl, CN, CF₃, OCF oder eine geradkettige oder verzweigte Alkylkette mit 1-20 C-Atomen, in der eine -CH₂- -Gruppe oder mehrere -CH₂- -Gruppen durch -O- oder -C(=O)- ersetzt sein können, jedoch nicht zwei benachbarte -CH₂- -Gruppen durch -O- ersetzt sein können,und 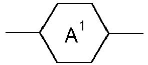 bei jedem Erscheinen unabhängig voneinander 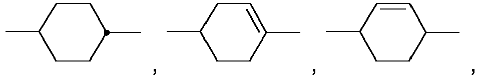 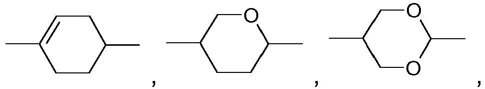 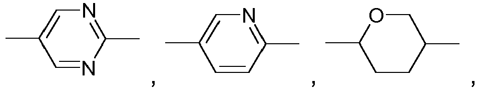 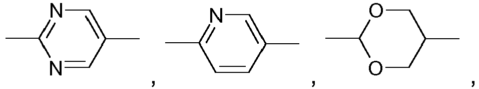 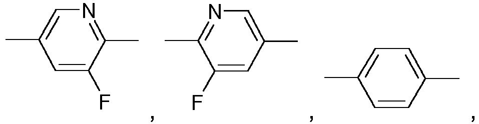 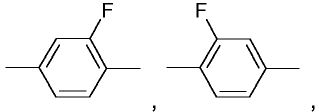 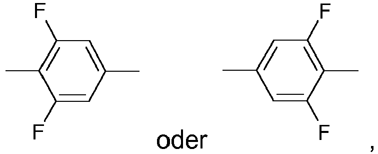 wobei bei Cyclohexandiyl und bei den Cyclohexendiyleinheiten auch einer oder mehrere H-Atome unabhängig voneinander durch F, Cl oder CN ersetzt sein können,
bedeutet,
b) eine oder mehrere Verbindungen ausgewählt aus der Gruppe der Verbindungen der Formeln II-2h-1 und II-2k-1 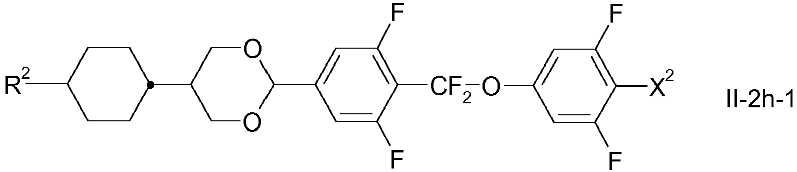 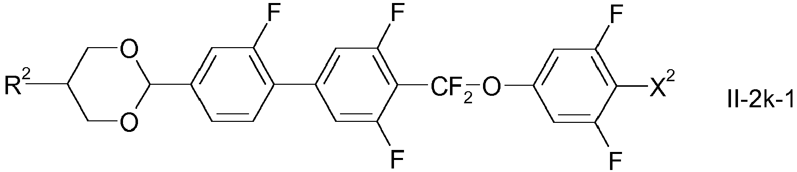 worin
R² Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und
X² Halogen, halogeniertes Alkyl oder Alkoxy mit 1 bis 3 C-Atomen oder halogeniertes Alkenyl oder Alkenyloxy mit 2 oder 3 C-Atomen,
bedeuten,
und
c) eine oder mehrere Verbindungen der Formel IV-3 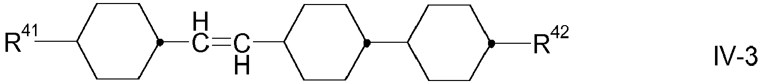 worin
R⁴¹ und R⁴² unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen,
bedeuten, enthält.

2. Medium nach Anspruch 1, **dadurch gekennzeichnet, dass** es zusätzlich
- eine oder mehrere Verbindungen ausgewählt aus der Gruppe der Verbindungen der Formeln II und III 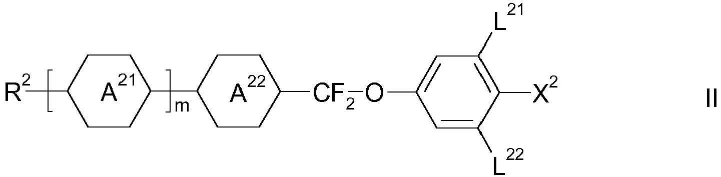 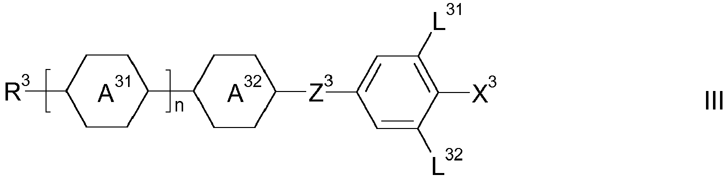 worin
R² und R³ unabhängig voneinander Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen, 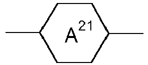 bis 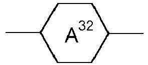 bei jedem Erscheinen unabhängig voneinander 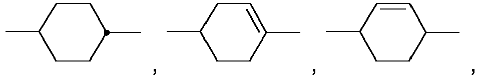 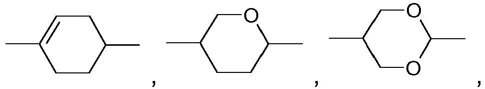 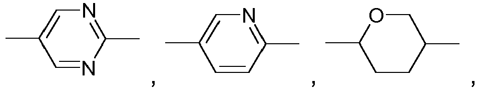 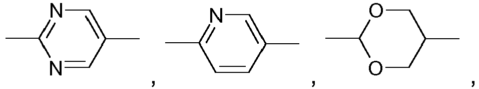 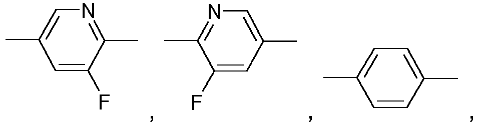 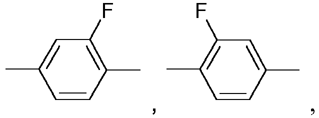 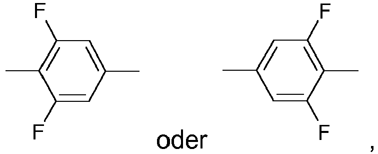
L²¹, L²², L³¹ und L³² unabhängig voneinander H oder F,
X² und X³ unabhängig voneinander Halogen, halogeniertes Alkyl oder Alkoxy mit 1 bis 3 C-Atomen oder halogeniertes Alkenyl oder Alkenyloxy mit 2 oder 3 C-Atomen,
Z³ -CH₂CH₂-, -CF₂CF₂-, -COO-, *trans-* -CH=CH-, *trans*--CF=CF-, -CH₂O- oder eine Einfachbindung und
m und n unabhängig voneinander 0, 1, 2 oder 3,
bedeuten,
wobei die Verbindungen der Formeln II-2h-1 und II-2k-2 gemäß Anspruch 1 ausgenommen sind,
enthält.

3. Medium nach einem der Ansprüche 1 oder 2, **dadurch gekennzeichnet, dass** es zusätzlich
- eine oder mehrere Verbindungen der Formel IV 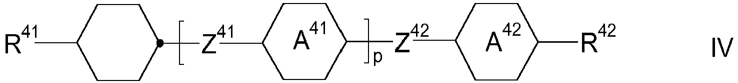 worin
R⁴¹ und R⁴² unabhängig voneinander die in Anspruch 2 oben unter Formel II für R² angegebene Bedeutung besitzen, 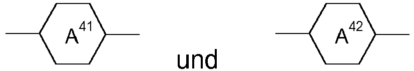 unabhängig voneinander und bei zweifachem Auftreten von 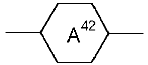 auch diese unabhängig voneinander 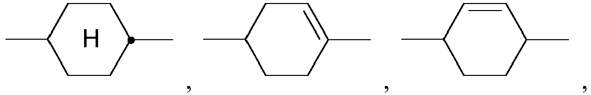 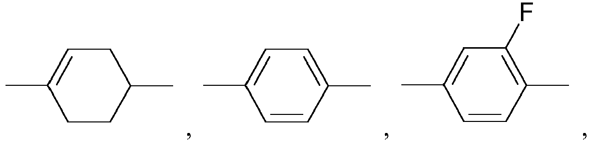 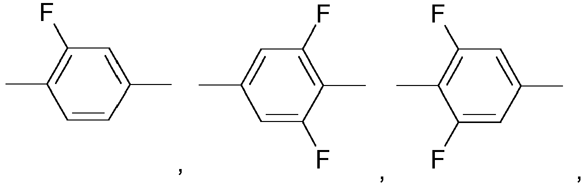 oder 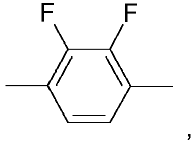
Z⁴¹ und Z⁴² unabhängig voneinander und bei zweifachem Auftreten von Z⁴¹ auch diese unabhängig voneinander -CH₂CH₂-, -COO-, *trans-* -CH=CH-, *trans-* -CF=CF-, -CH₂O-, -CF₂O-, -C=C- oder eine Einfachbindung und
p 0, 1 oder 2 bedeutet,
wobei die Verbindungen der Formel IV-3 gemäß Anspruch 1 ausgenommen sind,
enthält.

4. Medium nach einem oder mehreren der Ansprüche 1 bis 3, **dadurch gekennzeichnet, dass** die Gesamtkonzentration der Verbindungen der Formeln I im Medium im Bereich von 1 ppm bis 20.000 ppm liegt.

5. Medium nach einem oder mehreren der Ansprüche 1 bis 4, **dadurch gekennzeichnet, dass** die Verbindungen der Formel I Verbindungen ausgewählt aus der Gruppe der Verbindungen der Formeln I-1 bis I-3 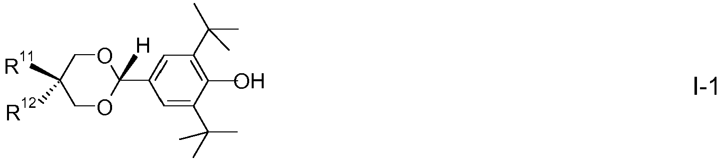 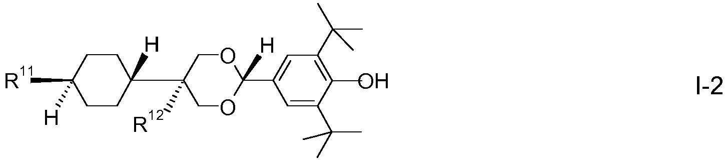 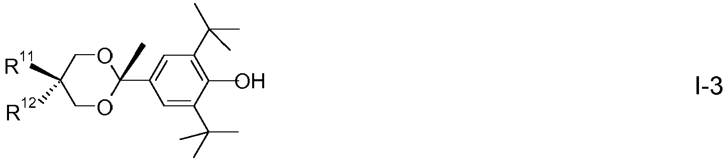 worin die Parameter die die in Anspruch 1 unter Formel I angegebenen Bedeutungen haben,
sind.

6. Medium nach einem oder mehreren der Ansprüche 1 bis 5, **dadurch gekennzeichnet, dass** es eine oder mehrere Verbindungen der Formel II-2h-1 wie in Anspruch 1 angegeben enthält.

7. Medium nach einem oder mehreren der Ansprüche 1 bis 6, **dadurch gekennzeichnet, dass** es eine oder mehrere Verbindungen der Formel II-2k-1 wie in Anspruch 1 angegeben enthält.

8. Medium nach einem oder mehreren der Ansprüche 1 bis 7, **dadurch gekennzeichnet, dass** es eine oder mehrere dielektrisch neutrale Verbindungen der Formel V 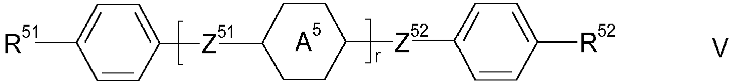 worin
R⁵¹ und R⁵² unabhängig voneinander die für R² unter Formel II in Anspruch 2 angegebene Bedeutung besitzen, 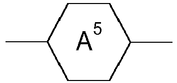 bei jedem Auftreten unabhängig voneinander 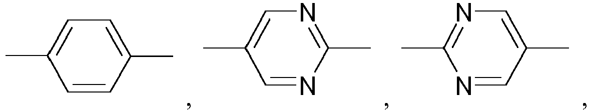 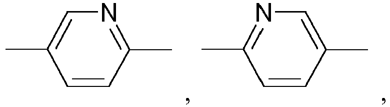 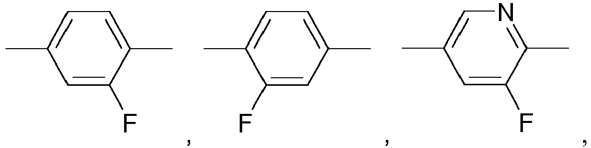 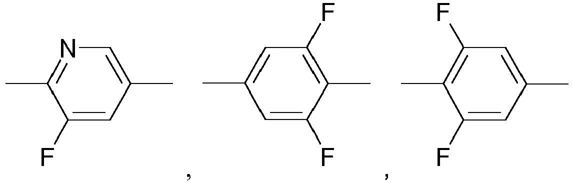 oder 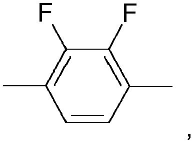
Z⁵¹ und Z⁵² unabhängig voneinander und bei zweifachem Auftreten von Z⁵¹ auch diese unabhängig voneinander -CH₂CH₂-, -COO-, *trans-* -CH=CH-, *trans-* -CF=CF-, -CH₂O-, -CF₂O- oder eine Einfachbindung und
r 0, 1 oder 2 bedeutet
enthält.

9. Flüssigkristallanzeige, **dadurch gekennzeichnet, dass** sie ein Medium nach einem oder mehreren der Ansprüche 1 bis 8 enthält.

10. Anzeige nach Anspruch 9, **dadurch gekennzeichnet, dass** sie durch eine Aktivmatrix adressiert wird.

11. Verwendung eines Mediums nach einem oder mehreren der Ansprüche 1 bis 8 in einer Flüssigkristallanzeige.

12. Verfahren zur Herstellung eines Mediums nach einem oder mehreren der Ansprüche 1 bis 8, **dadurch gekennzeichnet, dass** eine oder mehrere Verbindungen der Formel I, eine oder mehrere Verbindungen ausgewählt aus der Gruppe der Verbindungen der Formeln II-2h-1 und eine oder mehrere Verbindungen der Formel IV-3, wie in Anspruch 1 gegeben, mit einer oder mehreren der in einem oder mehreren der Ansprüchen 2 und 3 genannten Verbindungen und/oder einer oder mehreren weiteren mesogenen Verbindungen und/oder einem oder mehreren Additiven gemischt wird.

## Claims

1. Liquid-crystal medium having positive dielectric anisotropy, **characterised in that** it comprises
a) one or more compounds of the formula I, 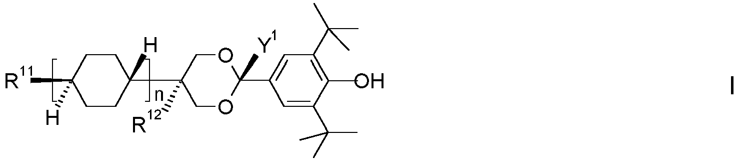 in which
n denotes 0 or 1,
R¹¹ denotes H, F, Cl, a straight-chain or branched alkyl chain having 1-20 C atoms, in which one -CH₂- group or a plurality of -CH₂- groups may be replaced by -O-, -C(=O)- or 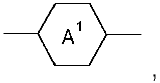 but two adjacent -CH₂-groups cannot be replaced by -O-, a hydrocarbon radical which contains a cycloalkanediyl unit or an alkylcycloalkanediyl unit, and in which one -CH₂- group or a plurality of -CH₂- groups may be replaced by -O- or -C(=O)-, but two adjacent -CH₂- groups cannot be replaced by -O-,
R¹² denotes H, F, Cl, CN, CF₃, OCF₃ or a straight-chain or branched alkyl chain having 1-20 C atoms, in which one -CH₂- group or a plurality of -CH₂- groups may be replaced by -O- or -C(=O)-, but two adjacent -CH₂-groups cannot be replaced by -O-,
Y¹ denotes H, F, Cl, CN, CF₃, OCF₃ or a straight-chain or branched alkyl chain having 1-20 C atoms, in which one -CH₂- group or a plurality of -CH₂- groups may be replaced by -O- or -C(=O)-, but two adjacent -CH₂-groups cannot be replaced by -O-, and 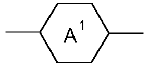 on each appearance, independently of one another, denotes 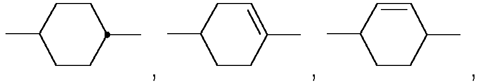 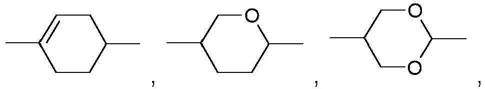 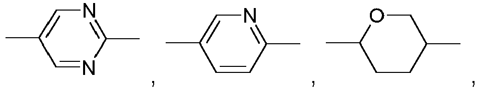 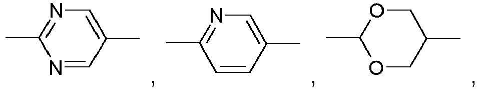 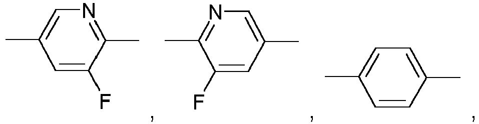 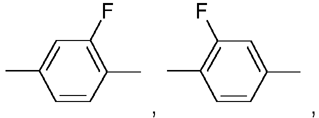 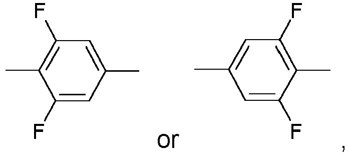 where, in the case of cyclohexanediyl and in the case of the cyclohexenediyl units, one or more H atoms may also be replaced, independently of one another, by F, Cl or CN,
b) one or more compounds selected from the group of the compounds of the formulae II-2h-1 and II-2k-1 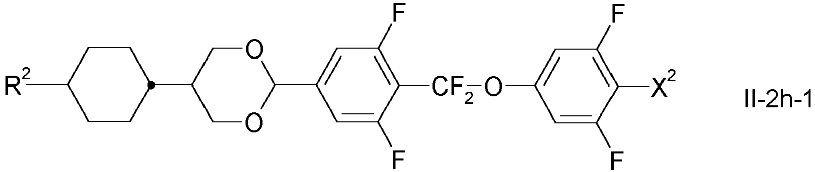 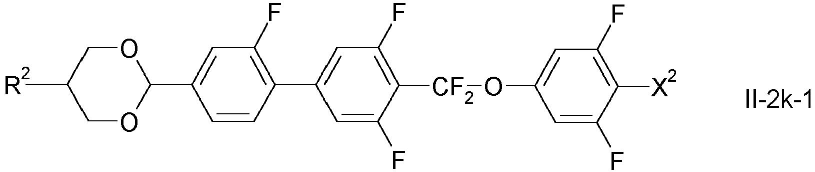 in which
R² denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, and
X² denotes halogen, halogenated alkyl or alkoxy having 1 to 3 C atoms or halogenated alkenyl or alkenyloxy having 2 or 3 C atoms,
and
c) one or more compounds of the formula IV-3 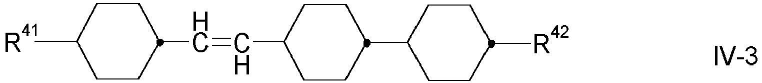 in which
R⁴¹ and R⁴², independently of one another, denote alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms.

2. Medium according to Claim 1, **characterised in that** it additionally comprises
- one or more compounds selected from the group of the compounds of the formulae II and III 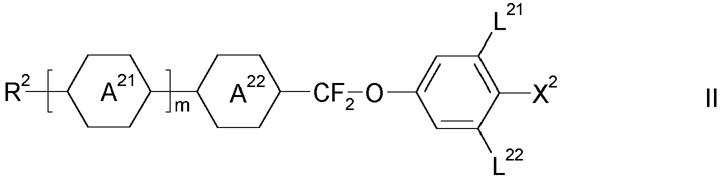 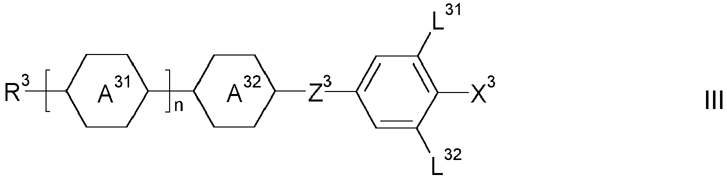 in which
R² and R³, independently of one another, denote alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, 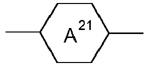 to 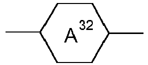 on each appearance, independently of one another, denote 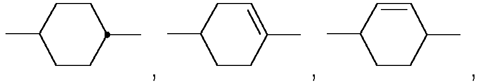 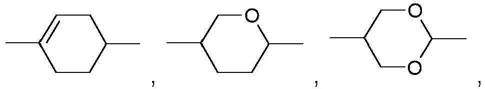 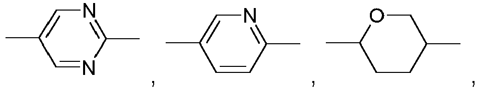 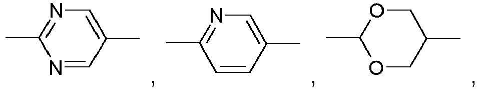 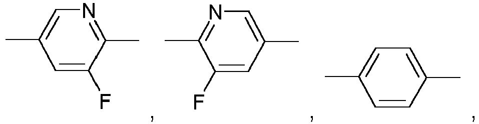 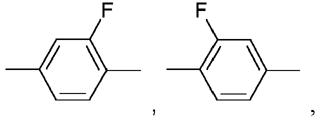 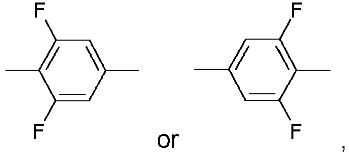
L²¹, L²², L³¹ and L³², independently of one another, denote H or F,
X² and X³, independently of one another, denote halogen, halogenated alkyl or alkoxy having 1 to 3 C atoms or halogenated alkenyl or alkenyloxy having 2 or 3 C atoms,
Z³ denotes -CH₂CH₂-, -CF₂CF₂-, -COO-, *trans* -CH=CH-, *trans* -CF=CF-, -CH₂O- or a single bond, and
m and n, independently of one another, denote 0, 1, 2 or 3,
where the compounds of the formula II-2h-1 and II-2k-1 according to Claim 1 are excluded.

3. Medium according to one of Claims 1 or 2, **characterised in that** it additionally comprises
- one or more compounds of the formula IV 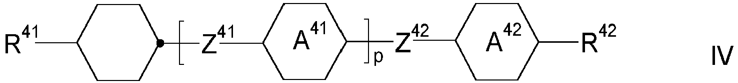 in which
R⁴¹ and R⁴², independently of one another, have the meaning indicated for R² in Claim 2 above under formula II, 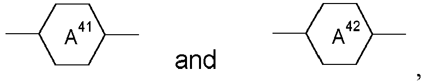 independently of one another, and, if 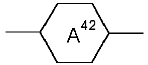 occurs twice, also these independently of one another, denote 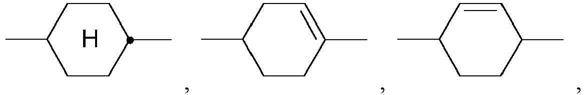 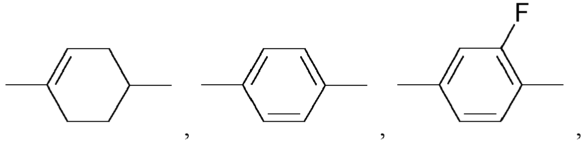 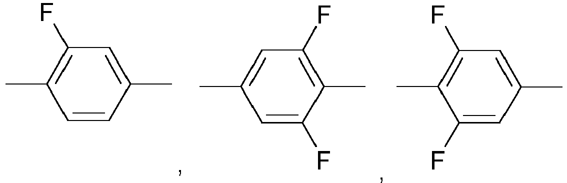 or 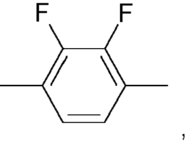
Z⁴¹ and Z⁴², independently of one another and, if Z⁴¹ occurs twice, also these independently of one another, denote -CH₂CH₂-, -COO-, *trans* -CH=CH-, *trans* -CF=CF-, -CH₂O-, -CF₂O-, -C≡C- or a single bond, and
p denotes 0, 1 or 2,
where the compounds of the formula IV-3 according to Claim 1 are excluded.

4. Medium according to one or more of Claims 1 to 3, **characterised in that** the total concentration of the compounds of the formula I in the medium is in the range from 1 ppm to 20,000 ppm.

5. Medium according to one or more of Claims 1 to 4, **characterised in that** the compounds of the formula I are compounds selected from the group of the compounds of the formulae I-1 to I-3 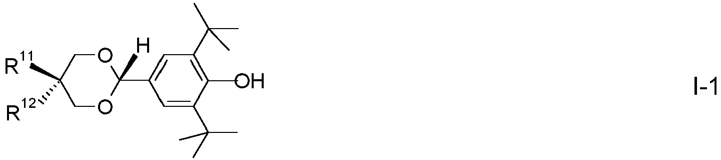 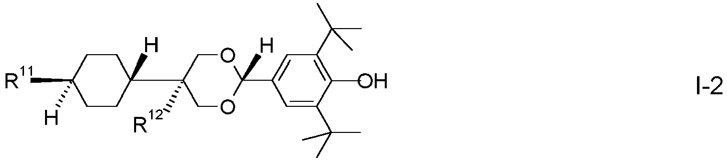 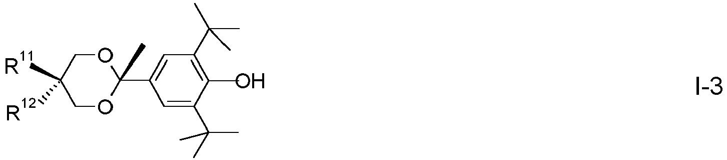 in which the parameters have the meanings indicated in Claim 1 under formula I.

6. Medium according to one or more of Claims 1 to 5, **characterised in that** it comprises one or more compounds of the formula II-2h-1 as indicated in Claim 1.

7. Medium according to one or more of Claims 1 to 6, **characterised in that** it comprises one or more compounds of the formula II-2k-1 as indicated in Claim 1.

8. Medium according to one or more of Claims 1 to 7, **characterised in that** it comprises one or more dielectrically neutral compounds of the formula V 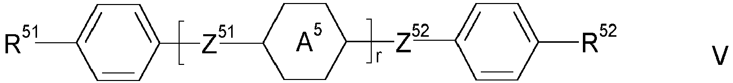 in which
R⁵¹ and R⁵², independently of one another, have the meaning indicated for R² under formula II in Claim 2, 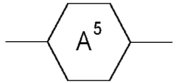 on each occurrence, independently of one another, denotes 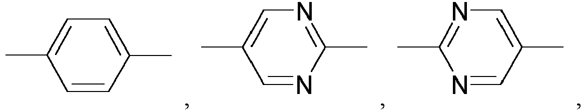 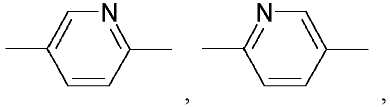 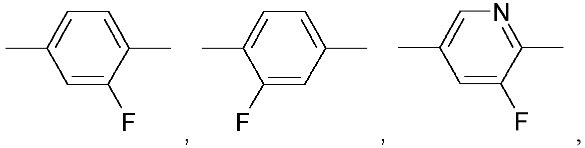 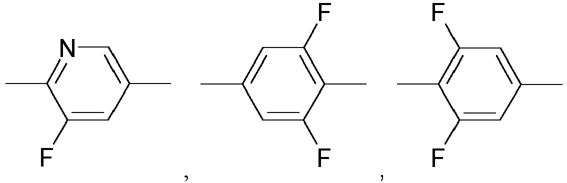 or 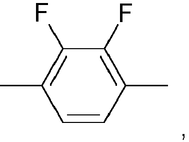
Z⁵¹ and Z⁵², independently of one another and, if Z⁵¹ occurs twice, also these independently of one another, denote -CH₂CH₂-, -COO-, *trans* -CH=CH-, *trans* -CF=CF-, -CH₂O-, -CF₂O- or a single bond, and
r denotes 0, 1 or 2.

9. Liquid-crystal display, **characterised in that** it contains a medium according to one or more of Claims 1 to 8.

10. Display according to Claim 9, **characterised in that** it is addressed by an active matrix.

11. Use of a medium according to one or more of Claims 1 to 8 in a liquid-crystal display.

12. Process for the preparation of a medium according to one or more of Claims 1 to 8, **characterised in that** one or more compounds of the formula I, one or more compounds selected from the group of the compounds of the formula II-2h-1 and one or more compounds of the formula IV-3, as given in Claim 1, are mixed with one or more of the compounds given in one or more of Claims 2 and 3 and/or one or more further mesogenic compounds and/or one or more additives.

## Revendications

1. Milieu cristallin liquide présentant une anisotropie diélectrique positive, **caractérisé en ce qu'**il comprend
a) un ou plusieurs composé(s) de la formule I, 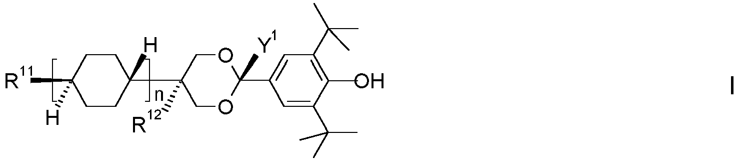 dans laquelle
n représente 0 ou 1,
R¹¹ représente H, F, Cl, une chaîne alkyle en chaîne droite ou ramifiée qui comporte de 1 à 20 atome(s) de C, où un groupe -CH₂- ou une pluralité de groupes -CH₂-peut/peuvent être remplacé(s) par -O-, -C(=O)- ou 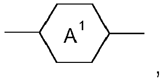 mais deux groupes -CH₂- adjacents ne peuvent pas être remplacés par -O-, un radical hydrocarbone qui contient une unité cycloalcanediyle ou une unité alkylcycloalcanediyle, et où un groupe -CH₂- ou une pluralité de groupes -CH₂- peut/peuvent être remplacé(s) par -O- ou par -C(=O)-, mais deux groupes -CH₂- adjacents ne peuvent pas être remplacés par -O-,
R¹² représente H, F, Cl, CN, CF₃, OCF₃ ou une chaîne alkyle en chaîne droite ou ramifiée qui comporte de 1 à 20 atome(s) de C, où un groupe -CH₂- ou une pluralité de groupes -CH₂- peut/peuvent être remplacé(s) par -O- ou par -C(=O)-, mais deux groupes -CH₂- adjacents ne peuvent pas être remplacés par -O-,
Y¹ représente H, F, Cl, CN, CF₃, OCF₃ ou une chaîne alkyle en chaîne droite ou ramifiée qui comporte de 1 à 20 atome(s) de C, où un groupe -CH₂- ou une pluralité de groupes -CH₂- peut/peuvent être remplacé(s) par -O- ou par -C(=O)-, mais deux groupes -CH₂- adjacents ne peuvent pas être remplacés par -O-, et 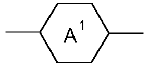 représente pour chaque occurrence, de manière indépendante les unes des autres, 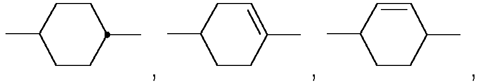 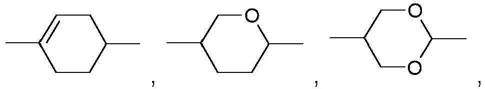 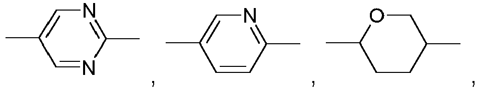 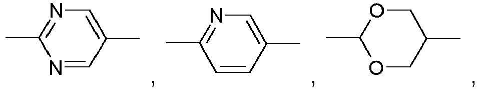 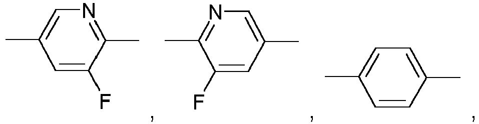 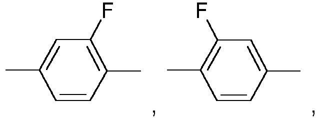 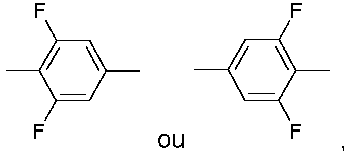 où, dans le cas du cyclohexanediyle et dans le cas des unités de cyclohexènediyle, un ou plusieurs atome(s) de H peut/peuvent également être remplacé(s), de manière indépendante les uns des autres, par F, Cl ou CN,
b) un ou plusieurs composé(s) qui est/sont sélectionné(s) parmi le groupe des composés des formules II-2h-1 et II-2k-1 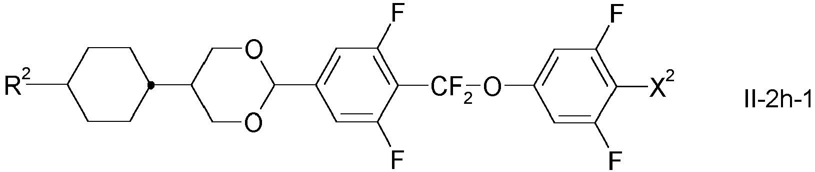 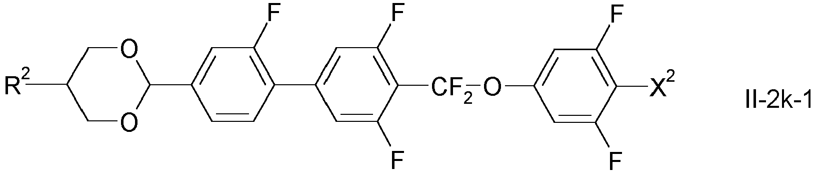 dans lesquelles
R² représente alkyle, alcoxy, alkyle fluoré ou alcoxy fluoré qui comporte de 1 à 7 atome(s) de C, alkényle, alkényloxy, alcoxyalkyle ou alkényle fluoré qui comporte de 2 à 7 atomes de C, et
X² représente halogène, alkyle ou alcoxy halogéné qui comporte de 1 à 3 atome(s) de C ou alkényle ou alkényloxy halogéné qui comporte 2 ou 3 atomes de C,
et
c) un ou plusieurs composé(s) de la formule IV-3 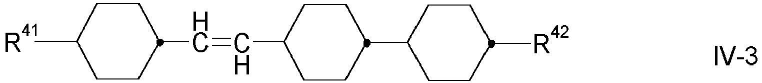 dans laquelle
R⁴¹ et R⁴² représentent, de manière indépendante l'un de l'autre, alkyle, alcoxy, alkyle fluoré ou alcoxy fluoré qui comporte de 1 à 7 atome(s) de C, alkényle, alkényloxy, alcoxyalkyle ou alkényle fluoré qui comporte de 2 à 7 atomes de C.

2. Milieu selon la revendication 1, **caractérisé en ce qu'**il comprend de façon additionnelle
- un ou plusieurs composé(s) qui est/sont sélectionné(s) parmi le groupe des composés des formules II et III 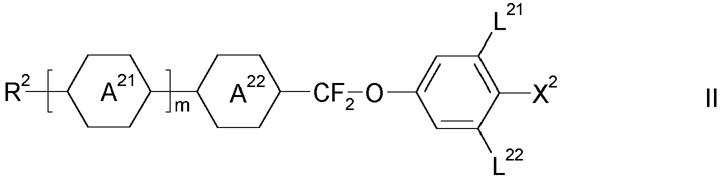 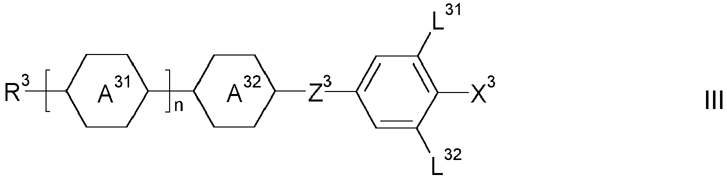 dans lesquelles
R² et R³ représentent, de manière indépendante l'un de l'autre, alkyle, alcoxy, alkyle fluoré ou alcoxy fluoré qui comporte de 1 à 7 atome(s) de C, alkényle, alkényloxy, alcoxyalkyle ou alkényle fluoré qui comporte de 2 à 7 atomes de C, 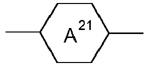 à 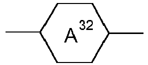 représentent pour chaque occurrence, de manière indépendante les uns des autres, 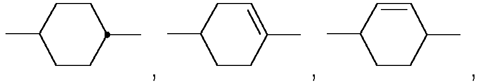 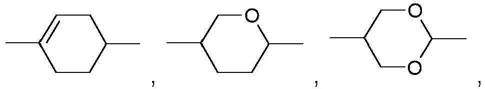 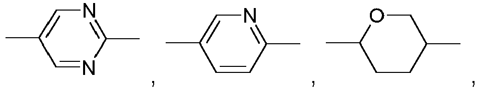 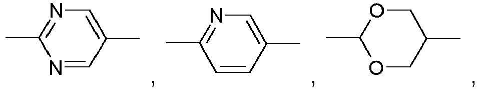 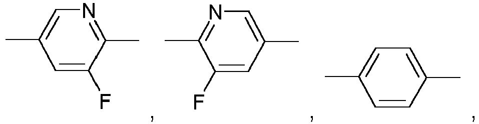 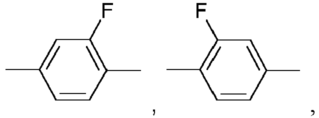 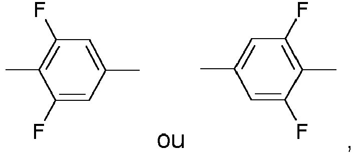
L²¹, L²², L³¹ et L³² représentent, de manière indépendante les uns des autres, H ou F,
X² et X³ représentent, de manière indépendante l'un de l'autre, halogène, alkyle ou alcoxy halogéné qui comporte de 1 à 3 atome(s) de C ou alkényle ou alkényloxy halogéné qui comporte 2 ou 3 atomes de C,
Z³ représente -CH₂CH₂-, -CF₂CF₂-, -COO-, *trans* -CH=CH-, *trans* -CF=CF-, -CH₂O- ou une liaison simple, et
m et n représentent, de manière indépendante l'un de l'autre, 0, 1, 2 ou 3,
où les composés des formules II-2h-1 et II-2k-1 selon la revendication 1 sont exclus.

3. Milieu selon l'une des revendications 1 ou 2, **caractérisé en ce qu'**il comprend de façon additionnelle
- un ou plusieurs composé(s) de la formule IV 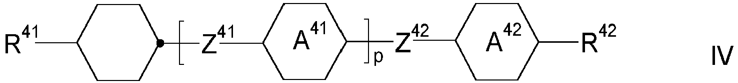 dans laquelle
R⁴¹ et R⁴² présentent, de manière indépendante l'un de l'autre, la signification qui a été indiquée pour R² selon la revendication 2 ci-avant au-dessous de la formule II, 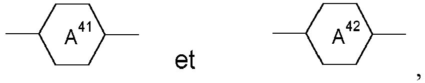 représentent, de manière indépendante l'un de l'autre, et, si 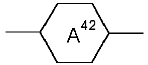 est présent deux fois, ces occurrences représentent, également de manière indépendante l'une de l'autre, 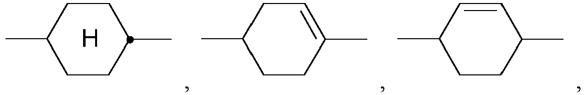 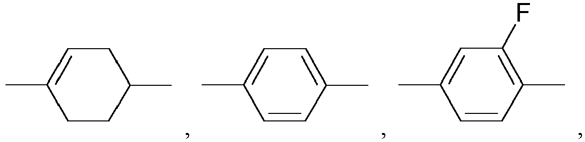 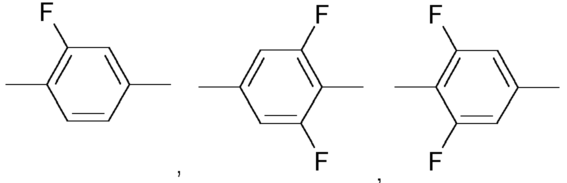 ou 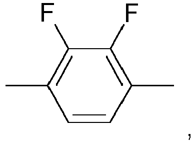
Z⁴¹ et Z⁴² représentent, de manière indépendante l'un de l'autre, et, si Z⁴¹ est présent deux fois, ces occurrences représentent, également de manière indépendante l'une de l'autre, -CH₂CH₂-, -COO-, *trans* -CH=CH-, *trans* -CF=CF-, -CH₂O-, -CF₂O-, -C≡C- ou une liaison simple, et
p représente 0, 1 ou 2,
où les composés de la formule IV-3 selon la revendication 1 sont exclus.

4. Milieu selon une ou plusieurs des revendications 1 à 3, **caractérisé en ce que** la concentration totale des composés de la formule I dans le milieu s'inscrit à l'intérieur de la plage qui va de 1 ppm à 20 000 ppm.

5. Milieu selon une ou plusieurs des revendications 1 à 4, **caractérisé en ce que** les composés de la formule I sont des composés qui sont sélectionnés parmi le groupe des composés des formules I-1 à I-3 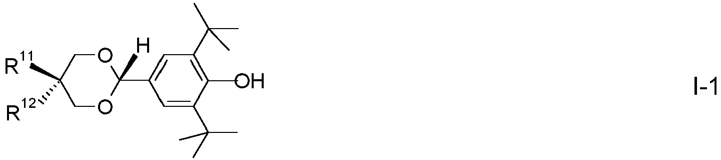 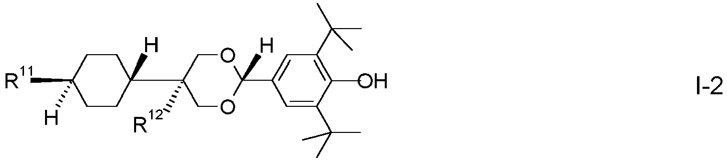 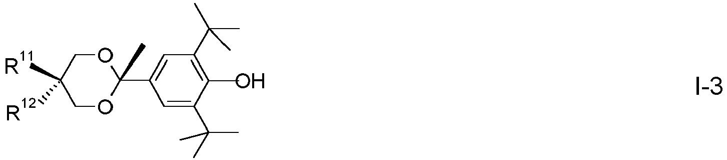 dans lesquelles les paramètres présentent les significations qui ont été indiquées selon la revendication 1 au-dessous de la formule I.

6. Milieu selon une ou plusieurs des revendications 1 à 5, **caractérisé en ce qu'**il comprend un ou plusieurs composé(s) de la formule II-2h-1 comme il a été indiqué selon la revendication 1.

7. Milieu selon une ou plusieurs des revendications 1 à 6, **caractérisé en ce qu'**il comprend un ou plusieurs composé(s) de la formule II-2k-1 comme il a été indiqué selon la revendication 1.

8. Milieu selon une ou plusieurs des revendications 1 à 7, **caractérisé en ce qu'**il comprend un ou plusieurs composé(s) diélectriquement neutres de la formule V 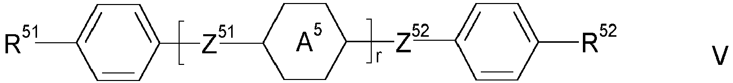 dans laquelle
R⁵¹ et R⁵² présentent, de manière indépendante l'un de l'autre, la signification qui a été indiquée pour R² au-dessous de la formule II selon la revendication 2, 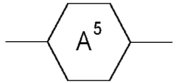 représente pour chaque occurrence, de manière indépendante les unes des autres, 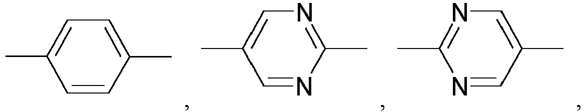 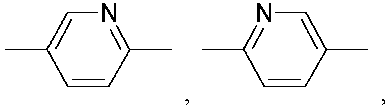 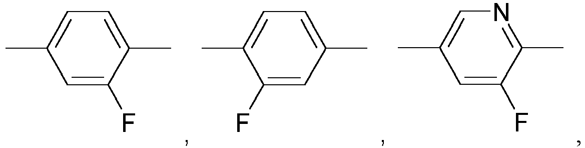 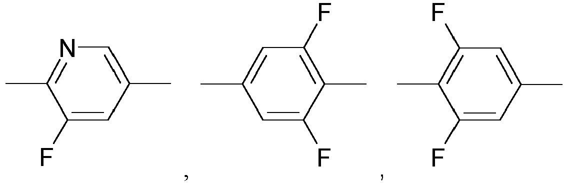 ou 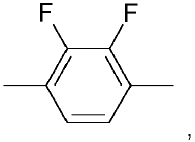
Z⁵¹ et Z⁵² représentent, de manière indépendante l'un de l'autre, et, si Z⁵¹ est présent deux fois, ces occurrences représentent, également de manière indépendante l'une de l'autre, -CH₂CH₂-, -COO-, *trans* -CH=CH-, *trans* -CF=CF-, -CH₂O-, -CF₂O- ou une liaison simple, et
r représente 0, 1 ou 2.

9. Affichage à cristaux liquides, **caractérisé en ce qu'**il contient un milieu selon une ou plusieurs des revendications 1 à 8.

10. Affichage selon la revendication 9, **caractérisé en ce qu'**il est adressé au moyen d'une matrice active.

11. Utilisation d'un milieu selon une ou plusieurs des revendications 1 à 8 dans un affichage à cristaux liquides.

12. Procédé pour la préparation d'un milieu selon une ou plusieurs des revendications 1 à 8, **caractérisé en ce qu'**un ou plusieurs composé(s) de la formule I, un ou plusieurs composé(s) qui est/sont sélectionné(s) parmi le groupe des composés de la formule II-2h-1 et un ou plusieurs composé(s) de la formule IV-3, comme il a été présenté selon la revendication 1, sont mélangés avec un ou plusieurs des composés comme il a été présenté selon une ou plusieurs des revendications 2 et 3 et/ou un ou plusieurs autre(s) composé(s) mésogène(s) et/ou un ou plusieurs additif(s).
